# EUROPEAN PATENT APPLICATION

(11) **EP 4 472 261 A1**
(43) Date of publication of application: **04.12.2024**
(21) Application number: 23758964.3
(22) Date of filing: 31.01.2023
(51) Int. Cl.: H04W 12/12

(54) **COMMUNICATION METHOD AND APPARATUS**

(30) Priority: 22.02.2022 CN 202210164985
(71) Applicant: Huawei Technologies Co., Ltd., Shenzhen, Guangdong 518129 (CN)
(72) Inventor: SUN, Taoran, Shenzhen, Guangdong 518129 (CN); WU, Yizhuang, Shenzhen, Guangdong 518129 (CN); XIANG, Hongyu, Shenzhen, Guangdong 518129 (CN); CUI, Yang, Shenzhen, Guangdong 518129 (CN)
(74) Representative: Thun, Clemens
(86) International application number: PCT/CN2023/074041
(87) International publication number: WO 2023/160339

(57) **Abstract**

This application pertains to the field of communication technologies, and provides a communication method and apparatus, to implement false base station detection. A false base station may attack a terminal in a denial of service manner, and consequently, the terminal cannot access the false base station after selecting the false base station, in other words, the terminal fails to set up a connection to a cell. In this case, if a first message indicates that a first terminal fails to set up a connection to a cell, it may be determined, based on the first message, that a false base station attack exists in the cell, to implement false base station detection.

## Description

This application claims priority to Chinese Patent Application No. 202210164985.6, filed with the China National Intellectual Property Administration on February 22, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a wireless communication system, a normal base station may broadcast system information to the outside, so that a terminal can obtain the system information through listening, access the base station based on the system information, and set up a radio resource control (radio resource control, RRC) connection.

However, if a false base station exists, the false base station may attack the terminal, to prevent the terminal from accessing the normal base station. For example, the false base station may replay the system information of the normal base station, and force, through power suppression, the terminal to select the false base station for attachment after receiving the system information. This causes service interruption of the terminal, and further causes security risks such as user information leakage. However, there is no particularly effective detection means for false base station attacks.

### SUMMARY

Embodiments of this application provide a communication method and apparatus, to implement false base station detection.

To achieve the foregoing objective, this application uses the following technical solutions.

According to a first aspect, a communication method is provided. The method includes: A first device receives a first message from a first terminal, to determine, based on the first message, that a false base station attack exists in a cell, where the first message indicates that the first terminal fails to set up a connection to the cell.

It can be learned from the method according to the first aspect that a false base station may attack a terminal in a denial of service manner. As a result, the terminal cannot access the false base station after selecting the false base station, in other words, the terminal fails to set up the connection to the cell. In this case, if the first message indicates that the first terminal fails to set up the connection to the cell, it may be determined, based on the first message, that the false base station attack exists in the cell, to implement false base station detection.

In a possible design solution, that a first device determines, based on the first message, that a false base station attack exists in a cell includes: The first device determines, based on the first message, a number of terminals that fail to set up a connection to the cell, to determine, when the number of terminals is greater than a first threshold, that the false base station attack exists in the cell. In other words, the first device determines that the false base station attack exists in the cell only when a large number of terminals report that the terminals fail to set up connections to the cell. This prevents false base station detection from being affected due to false reporting of some terminals, and further improves accuracy of false base station detection.

Optionally, the method according to the first aspect may further include: The first device has the pre-configured first threshold; or the first device receives the first threshold from a network data analytics network element or a mobility management network element. In this way, the first device may select an appropriate threshold configuration manner based on a requirement of an actual application scenario, to ensure that false base station detection is applicable to various scenarios. For example, if a network side has not performed false base station detection, the first device may use the first threshold pre-configured for the first device, to ensure that false base station detection can be normally performed. If the network side has performed false base station detection, the first device may use the first threshold used by the network side for previous detection, to ensure accuracy of false base station detection.

Further, when the first device receives the first threshold from the network data analytics network element, the method according to the first aspect may further include: The first device sends, to the network data analytics network element, a request message for subscribing to false base station detection threshold analytics, so that the network data analytics network element configures, for the first device in a targeted manner, the first threshold used for false base station detection, to ensure accuracy of false base station detection.

Optionally, the method according to the first aspect may further include: The first device updates the first threshold based on the number of terminals, to improve accuracy of false base station detection.

Further, that the first device updates the first threshold based on the number of terminals may include: The first device updates the pre-configured first threshold based on the number of terminals, in other words, the first device updates the first threshold, to improve threshold updating efficiency. Alternatively, the first device sends the number of terminals to the network data analytics network element, to receive an updated first threshold from the network data analytics network element, so as to reduce overheads of the first device and improve running efficiency.

Optionally, that the first device determines, when the number of terminals is greater than a first threshold, that the false base station attack exists in the cell includes: The first device sends a second message to an access network device when the number of terminals is greater than the first threshold, and receives a third message from the access network device, where the second message is used to request a cell access related parameter of the cell; and the third message includes the cell access related parameter, where the cell access related parameter includes at least one of the following: a number of failures of handover to the cell, a number of terminals that have accessed the cell, or a number of terminals that newly access the cell. In this way, the first device determines, based on the cell access related parameter and a second threshold, that the false base station attack exists in the cell. It can be learned that when a large number of terminals report that the terminals fail to set up connections to the cell, the first device may further obtain the cell access related parameter of the cell from the access network device, and determine, based on the cell access related parameter, whether the false base station attack exists in the cell, to further improve accuracy of false base station detection.

Further, that the first device determines, based on the cell access related parameter and a second threshold, that the false base station attack exists in the cell includes: when a relationship between the cell access related parameter and the second threshold is any one of the following at least one relationship, determining that the false base station attack exists in the cell, where the at least one relationship includes: the number of failures of handover to the cell is greater than the second threshold, the number of terminals that have accessed the cell is less than the second threshold, or the number of terminals that newly access the cell is less than the second threshold.

It can be learned that, in the foregoing determining logic, provided that a relationship between any parameter in the cell access related parameter and a corresponding second threshold is the same as a preset relationship, it is considered that the parameter is abnormal, and the false base station attack exists. However, it is determined that no false base station attack exists only when a relationship between each parameter in the cell access related parameter and a corresponding second threshold is different from the preset relationship, to ensure that the false base station attack can be accurately detected, and avoid missing detection. For example, when a number of failures of handover from a terminal to the cell is greater than the second threshold, even if the number of terminals that newly access the cell is greater than or equal to the second threshold, the first device still determines that the false base station attack exists in the cell.

Further, the method according to the first aspect may further include: The first device has the pre-configured second threshold; or the first device receives the second threshold from a network data analytics network element or a mobility management network element. In this way, the first device may select an appropriate threshold configuration manner based on a requirement of an actual application scenario, to ensure that false base station detection is applicable to various scenarios. For example, if a network side has not performed false base station detection, the first device may use the second threshold pre-configured for the first device, to ensure that false base station detection can be normally performed. If the network side has performed false base station detection, the first device may use the second threshold used by the network side for previous detection, to ensure accuracy of false base station detection.

Further, when the first device receives the second threshold from the network analytics network element, the method according to the first aspect may further include: The first device sends, to the network data analytics network element, a request message for subscribing to false base station detection threshold analytics, so that the network data analytics network element configures, for the first device in a targeted manner, the second threshold used for false base station detection, to ensure accuracy of false base station detection.

Further, the method according to the first aspect may further include: The first device updates the second threshold based on the cell access related parameter, to further improve accuracy of false base station detection.

Further, that the first device updates the second threshold based on the cell access related parameter may include: The first device updates the pre-configured second threshold based on the cell access related parameter, in other words, the first device updates the second threshold, to improve threshold updating efficiency. Alternatively, the first device sends the cell access related parameter to the network data analytics network element, to receive an updated second threshold from the network data analytics network element, so as to reduce overheads of the first device and improve running efficiency.

Further, the cell access related parameter may further include a source cell in which a terminal is located when handover to the cell fails. The method according to the first aspect further includes: When the false base station attack exists in the cell, the first device determines an orientation of a false base station based on a location of the source cell, to conveniently find a location of an attack source of the false base station attack.

Further, the method according to the first aspect may further include: The first device indicates the access network device to enable false base station attack detection. For example, when the access network device does not enable false base station attack detection by default, the access network device needs to be indicated to enable false base station attack detection, to ensure that the access network device can record and report the cell access related parameter, so as to implement false base station attack detection. Certainly, when the access network device enables false base station attack detection by default, the first device may alternatively not indicate the access network device to enable false base station attack detection, to reduce communication overheads.

In a possible design solution, the method according to the first aspect may further include: The first device indicates the first terminal to enable false base station attack detection. For example, when the first device does not enable false base station attack detection by default, the access network device needs to be indicated to enable false base station attack detection, to ensure that when failing to set up a connection to the cell, the first terminal can report this event, to implement false base station attack detection. Certainly, when the first terminal enables false base station attack detection by default, the first device may alternatively not indicate the first terminal to enable false base station attack detection, to reduce communication overheads.

Optionally, the method according to the first aspect may further include: The first device determines, based on a security level of an area in which the cell is located, that false base station attack detection needs to be performed on the cell. For example, the first device may determine whether the security grade of the area is high, for example, whether the security grade is greater than a security grade threshold. If the security grade is high, false base station detection is performed on the cell in the area. Otherwise, if the security grade is low, no false base station detection is performed on the cell in the area. In other words, the first device may perform false base station detection only on a cell with a high security grade, to improve device running efficiency and reduce overheads.

According to a second aspect, a communication method is provided. The method includes: A first terminal determines that the first terminal fails to set up a connection to a cell, and sends a first message to a first device, where the first message indicates that the first terminal fails to set up the connection to the cell.

In a possible design solution, that a first terminal sends a first message to a first device includes: When a number of times that the first terminal fails to set up the connection to the cell is greater than a third threshold, the first terminal sends the first message to the first device. In other words, if the first terminal fails to set up a connection to a same cell for a plurality of times, it indicates that the first terminal may suffer a denial of service attack from a false base station. In this case, the first terminal reports the event to the first device, to trigger the first device to perform false base station detection. This can improve accuracy of false base station detection, and can further ensure that a resource used by the first device for false base station detection can be effectively used, to avoid a waste of resources caused because the first device still performs false base station detection when no false base station attack occurs.

Optionally, the method according to the second aspect may further include: The first terminal has the pre-configured third threshold; or the first terminal receives the third threshold from the first device. In this way, the first terminal may select an appropriate threshold configuration manner based on a requirement of an actual application scenario, to ensure that false base station detection is applicable to various scenarios. For example, if a network side has not performed false base station detection, the first terminal may use the third threshold pre-configured for the first terminal, to ensure that false base station detection can be normally performed. If the network side has performed false base station detection, the first terminal may use the third threshold used by the network side for previous detection, to ensure accuracy of false base station detection.

Optionally, the method according to the second aspect may further include: The first terminal updates the third threshold based on the number of times that the first terminal fails to set up the connection to the cell, to improve accuracy of false base station detection.

Further, that the first terminal updates the third threshold based on the number of times that the first terminal fails to set up the connection to the cell includes: The first terminal updates the pre-configured third threshold based on the number of times that the first terminal fails to set up the connection to the cell. In other words, the first terminal updates the third threshold, to improve threshold updating efficiency. Alternatively, the first terminal sends, to the first device, the number of times that the first terminal fails to set up the connection to the cell, to receive an updated third threshold from the first device, so as to reduce overheads of the third device and improve running efficiency.

In a possible design solution, the method according to the first aspect may further include: The first terminal receives, from the first device, information indicating to enable false base station attack detection.

Optionally, the first message is further used to determine whether a false base station attack exists in the cell. In other words, the first message may implicitly indicate, by indicating that the first terminal fails to set up the connection to the cell, that the false base station attack may exist in the cell, to trigger the first device to perform false base station detection. In this way, the first terminal does not need to additionally send a message indication, to improve communication efficiency and reduce communication overheads.

In addition, for other technical effects of the communication method according to the second aspect, refer to the technical effects of the communication method according to the first aspect. Details are not described herein again.

According to a third aspect, a communication method is provided. The method includes: A first device receives a first message from a first access network device, and determines, based on the first message, that a false base station attack exists in a cell, where the first message indicates an access status of the cell.

It can be learned from the method according to the third aspect that, a false base station initiates an attack through power suppression. As a result, a terminal cannot access a cell served by a normal base station. In this case, it may be determined, by analyzing the access status of the cell, that the false base station attack exists in the cell, to implement false base station detection.

In a possible design solution, the access status of the cell includes at least one of the following: a number of failures of handover to the cell is greater than a first threshold, a number of terminals that have accessed the cell is less than the first threshold, or a number of terminals that newly access the cell is less than the first threshold, indicating that the false base station attack event exists in the cell. In this solution, it may be understood that the first message indicates the access status of the cell, or the first message includes information indicating the access status of the cell, to be specific, the information may indicate that the number of failures of handover to the cell is greater than the first threshold, the number of terminals that have accessed the cell is less than the first threshold, or the number of terminals that newly access the cell is less than the first threshold, indicating that the false base station attack event exists in the cell. In other words, when the first access network device may determine that the false base station attack event exists in the cell, the first device may determine, only by determining whether the first message is received or whether the first message carries the information, whether the false base station attack exists in the cell, to reduce device overheads and improve device running efficiency.

In another possible design solution, the first message includes a cell access related parameter (it may be understood as that the cell access related parameter may indicate the access status of the cell). For example, the cell access related parameter is at least one of the following information: a number of failures of handover to the cell, a number of terminals that have accessed the cell, or a number of terminals that newly access the cell. In other words, the first access network device may collect and report only these parameters. For example, when the cell access related parameter is updated, the first access network device sends an updated cell access related parameter to the first device, to reduce device overheads and improve device running efficiency. In this way, that a first device determines, based on the first message, that a false base station attack exists in a cell includes: when a relationship between the cell access related parameter and the first threshold is any one of the following at least one relationship, determining that the false base station attack exists in the cell. The at least one relationship includes: the number of failures of handover to the cell is greater than the first threshold, the number of terminals that have accessed the cell is less than the first threshold, or the number of terminals that newly access the cell is less than the first threshold.

Optionally, the method according to the third aspect may further include: The first device has the pre-configured first threshold; or the first device receives the first threshold from a network data analytics network element or a mobility management network element.

Further, when the first device receives the first threshold from the network analytics network element, the method according to the third aspect may further include: The first device sends, to the network data analytics network element, a request message for subscribing to false base station detection threshold analytics.

Optionally, the method according to the third aspect may further include: The first device updates the first threshold based on the access status of the cell.

Further, that the first device updates the first threshold based on the access status of the cell includes: The first device updates the pre-configured first threshold based on the access status of the cell; or when the access status of the cell is indicated by the cell access related parameter, the first device sends the cell access related parameter to the network data analytics network element, to receive an updated first threshold from the network data analytics network element.

In still another possible design solution, that a first device determines, based on the first message, that a false base station attack exists in a cell includes: The first device sends a second message to the first terminal based on the first message, to receive a third message from the first terminal, where the second message is used to request the first terminal to set up a connection to the cell, and the third message indicates that the first terminal fails to set up the connection to the cell. In this way, the first device determines, based on the third message, that the false base station attack exists in the cell. It can be learned that when the access status of the cell is abnormal, the first device may further obtain, from the first terminal, a status of connection setup between the first terminal and the cell, and determine, based on the status, whether the false base station attack exists in the cell, to further improve accuracy of false base station detection.

Optionally, the method according to the third aspect may further include: The first device determines a second access network device serving a neighboring cell of the cell based on the first message. Correspondingly, that the first device sends a second message to the first terminal based on the first message includes: The first device sends the second message to the first terminal through the second access network device. It can be learned that, when the access status of the cell is abnormal, to be specific, the cell may suffer a false base station attack, the first device may request a status of connection setup between the first terminal and the cell from a neighboring cell of the cell, namely, a normal cell, to obtain valid and reliable information, so as to ensure accuracy of false base station detection.

Optionally, the third message further indicates that a number of times that the first terminal fails to set up a connection to the cell is greater than a second threshold. In other words, if the first terminal fails to set up a connection to a same cell for a plurality of times, it indicates that the first terminal may suffer a denial of service attack from a false base station. In this case, the first terminal reports the event to the first device, to trigger the first device to determine whether the false base station attack exists in the cell. This can improve accuracy of false base station detection, and can further ensure that a resource used by the first device for false base station detection can be effectively used, to avoid a waste of resources caused because the first device still performs false base station detection when no false base station attack occurs.

Optionally, that the first device determines, based on the third message, that the false base station attack exists in the cell includes: The first device determines, based on the third message, a number of terminals that fail to set up a connection to the cell, and determines, when the number of terminals that fail to set up the connection to the cell is greater than a third threshold, that the false base station attack exists in the cell.

Further, the method according to the third aspect may further include: The first device has the pre-configured third threshold; or the first device receives the third threshold from a network data analytics network element or a mobility management network element.

Further, when the first device receives the third threshold from the network data analytics network element, the method according to the third aspect may further include: The first device sends, to the network data analytics network element, a request message for subscribing to false base station detection threshold analytics.

Further, the method according to the third aspect may further include: The first device updates the third threshold based on the number of terminals that fail to set up the connection to the cell.

Further, that the first device updates the third threshold based on the number of terminals that fail to set up the connection to the cell includes: The first device updates the pre-configured third threshold based on the number of terminals that fail to set up the connection to the cell. Alternatively, the first device sends, to the network data analytics network element, the number of terminals that fail to set up the connection to the cell, to receive an updated third threshold from the network data analytics network element.

Optionally, the method according to the third aspect may further include: The first device indicates the first terminal to enable false base station attack detection.

In a possible design solution, the first message further includes a source cell in which a terminal is located when handover to the cell fails. The method according to the third aspect may further include: When the false base station attack exists in the cell, the first device determines an orientation of a false base station based on a location of the source cell.

In a possible design solution, the method according to the third aspect may further include: The first device indicates the first access network device to enable false base station attack detection.

In a possible design solution, the method according to the third aspect may further include: The first device determines, based on a security level of an area in which the cell is located, that false base station attack detection needs to be performed on the cell.

In addition, for other technical effects of the communication method according to the third aspect, refer to the technical effects of the communication method according to the first aspect. Details are not described herein again.

According to a fourth aspect, a communication method is provided. The method includes: A first access network device determines an access status of a cell, and sends a first message to a first device, where the first message indicates the access status of the cell.

In a possible design solution, the first message includes an access-related parameter (it may be understood as that the cell access related parameter may indicate the access status of the cell). For example, the cell access related parameter is at least one of the following information: a number of failures of handover to the cell, a number of terminals that have accessed the cell, or a number of terminals that newly access the cell.

In another possible design solution, the access status of the cell includes at least one of the following: a number of failures of handover to the cell is greater than a first threshold, a number of terminals that have accessed the cell is less than the first threshold, or a number of terminals that newly access the cell is less than the first threshold.

Optionally, the method according to the fourth aspect may further include: The first access network device has the pre-configured first threshold; or the first access network device receives the first threshold from the first device.

Optionally, the method according to the fourth aspect may further include: The first access network device updates the first threshold based on the access status of the cell.

Further, that the first access network device updates the first threshold based on the access status of the cell includes: The first access network device updates the pre-configured first threshold based on the access status of the cell; or when the access status of the cell is indicated by the cell access related parameter, the first access network device sends the cell access related parameter to a network data analytics network element, to receive an updated first threshold from the network data analytics network element.

In a possible design solution, the method according to the fourth aspect may further include: The first access network device receives, from the first device, information indicating to enable false base station attack detection.

Optionally, the access status of the cell is further used to determine whether a false base station attack exists in the cell.

In addition, for other technical effects of the communication method according to the fourth aspect, refer to the technical effects of the communication method according to the second aspect or the third aspect. Details are not described herein again.

According to a fifth aspect, a communication method is provided. The method includes: A first device obtains a parameter used for false base station detection on a cell, and sends a first message to a network data analytics network element based on the parameter, where the first message is used to request the network data analytics network element to perform false base station detection on the cell. In this way, the first device receives an analytics result for false base station detection from the network data analytics network element, to determine, based on the analytics result, that a false base station attack exists in the cell.

It can be learned from the method according to the fifth aspect that, the first device requests the network data analytics network element to perform false base station detection on the cell, so that the first device can determine, based on the analytics result of the network data analytics network element, whether the false base station attack exists in the cell, to implement false base station detection.

In a possible design solution, the first message includes the parameter used for false base station detection on the cell, in other words, the first device reuses the parameter, and sends the parameter to the network data analytics network element by using the first message, to improve communication efficiency.

In a possible design solution, the parameter used for false base station detection on the cell includes at least one of the following: a number of times that a first terminal fails to set up a connection to the cell, a number of terminals that fail to set up a connection to the cell, a number of failures of handover to the cell, a number of terminals that have accessed the cell, or a number of terminals that newly access the cell, that is, including parameters on a terminal side and a network side, to improve accuracy of false base station detection.

Optionally, if the parameter used for false base station detection on the cell includes the number of times that the first terminal fails to set up the connection to the cell, that a first device obtains a parameter used for false base station detection on a cell includes: The first device receives a second message from the first terminal, where the second message indicates that the first terminal fails to set up the connection to the cell, so that the first device can determine, based on the second message, the number of times that the first terminal fails to set up the connection to the cell.

Optionally, if the parameter used for false base station detection on the cell includes the number of terminals that fail to set up the connection to the cell, that a first device obtains a parameter used for false base station detection on a cell alternatively includes: The first device determines, based on the second message, the number of terminals that fail to set up the connection to the cell.

Further, the method according to the fifth aspect may further include: The first device indicates the first terminal to enable false base station attack detection.

In a possible design solution, if the parameter used for false base station detection on the cell includes the number of terminals that fail to set up the connection to the cell, that a first device sends a first message to a network data analytics network element based on the parameter includes: The first device sends the first message to the network data analytics network element when the number of terminals that fail to set up the connection to the cell is greater than a first threshold. In other words, only when a large number of terminals report that the terminals fail to set up connections to the cell, in other words, the false base station attack may exist, the first device requests the network data analytics network element to perform false base station detection. This can improve accuracy of false base station detection, and can further ensure that a resource used by the network data analytics network element for false base station detection can be effectively used, to avoid a waste of resources caused because the network data analytics network element still performs false base station detection when no false base station attack occurs.

In a possible design solution, if the parameter used for false base station detection on the cell includes at least one of the following: the number of failures of handover to the cell, the number of terminals that have accessed the cell, or the number of terminals that newly access the cell, that a first device obtains a parameter used for false base station detection on a cell includes: The first device receives at least one of the following from an access network device: the number of failures of handover to the cell, the number of terminals that have accessed the cell, or the number of terminals that newly access the cell.

Optionally, the method according to the fifth aspect may further include: The first device indicates the access network device to enable false base station attack detection. In other words, the access network device may collect and report only the foregoing parameters, to reduce overheads of the access network device and improve device running efficiency.

In a possible design solution, the method according to the fifth aspect may further include: The first device determines, based on a security level of an area in which the cell is located, that false base station attack detection needs to be performed on the cell.

In a possible design solution, if the parameter used for false base station detection on the cell further includes a source cell in which a terminal is located when handover to the cell fails, the method according to the fifth aspect may further include: When the false base station attack exists in the cell, the first device determines an orientation of a false base station based on a location of the source cell.

In a possible design solution, the parameter used for false base station detection on the cell further includes at least one of the following: the source cell in which the terminal is located when the handover to the cell fails, an access time interval of the terminal in the cell, a measurement report of the terminal in the cell, a radio link failure RLF report of the terminal in the cell, a number of false base station attack events in the cell, or an identifier of a neighboring cell of the cell, to further improve accuracy of false base station detection.

In addition, for other technical effects of the communication method according to the fifth aspect, refer to the technical effects of the communication method according to the first aspect or the third aspect. Details are not described herein again.

According to a sixth aspect, a communication method is provided. The method includes: A network data analytics network element receives a first message from a first device, where the first message is used to request the network data analytics network element to perform false base station detection on a cell. In this way, the network data analytics network element sends an analytics result for false base station detection to the first device.

In a possible design solution, the first message includes a parameter used for false base station detection on the cell.

In a possible design solution, the parameter used for false base station detection on the cell includes at least one of the following: a number of times that a first terminal fails to set up a connection to the cell, a number of terminals that fail to set up a connection to the cell, a number of failures of handover to the cell, a number of terminals that have accessed the cell, or a number of terminals that newly access the cell.

In a possible design solution, the parameter used for false base station detection on the cell further includes at least one of the following: a source cell in which a terminal is located when handover to the cell fails, an access time interval of the terminal in the cell, a measurement report of the terminal in the cell, an RLF report of the terminal in the cell, a number of false base station attack events in the cell, or an identifier of a neighboring cell of the cell.

In a possible design solution, the method according to the sixth aspect may further include: The network data analytics network element performs false base station detection on the cell based on the first message.

In addition, for other technical effects of the communication method according to the sixth aspect, refer to the technical effects of the communication method according to the fifth aspect. Details are not described herein again.

According to a seventh aspect, a communication apparatus is provided. The communication apparatus includes modules configured to perform the communication method according to the first aspect, for example, a transceiver module and a processing module.

Optionally, the transceiver module may include a sending module and a receiving module, where the sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module, and the storage module stores a program or instructions. When the processing module executes the program or the instructions, the communication apparatus is enabled to perform the communication method according to the first aspect.

It should be noted that the communication apparatus according to the seventh aspect may be a network device, for example, a first device such as an operations and maintenance management system or a mobility management network element, may be a chip (system) or another part or component that may be disposed in the network device, or may be an apparatus including the network device. This is not limited in this application.

In addition, for a technical effect of the communication apparatus according to the seventh aspect, refer to the technical effect of the communication method according to the first aspect. Details are not described herein again.

According to an eighth aspect, a communication apparatus is provided. The communication apparatus includes modules configured to perform the communication method according to the second aspect, for example, a transceiver module and a processing module.

Optionally, the transceiver module may include a sending module and a receiving module, where the sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or the instructions, the communication apparatus is enabled to perform the communication method according to the second aspect.

It should be noted that the communication apparatus according to the eighth aspect may be a terminal, for example, a first terminal, may be a chip (system) or another part or component that may be disposed in the terminal, or an apparatus including the terminal. This is not limited in this application.

In addition, for a technical effect of the communication apparatus according to the eighth aspect, refer to the technical effect of the communication method according to the second aspect. Details are not described herein again.

According to a ninth aspect, a communication apparatus is provided. The communication apparatus includes modules configured to perform the communication method according to the third aspect, for example, a transceiver module and a processing module.

Optionally, the transceiver module may include a sending module and a receiving module, where the sending module is configured to implement a sending function of the communication apparatus according to the ninth aspect, and the receiving module is configured to implement a receiving function of the communication apparatus according to the ninth aspect.

Optionally, the communication apparatus in the ninth aspect may further include a storage module, and the storage module stores a program or instructions. When the processing module executes the program or the instructions, the communication apparatus is enabled to perform the communication method according to the third aspect.

It should be noted that the communication apparatus according to the ninth aspect may be a network device, for example, a first device such as an operations and maintenance management system or a mobility management network element, may be a chip (system) or another part or component that may be disposed in the network device, or may be an apparatus including the network device. This is not limited in this application.

In addition, for a technical effect of the communication apparatus according to the ninth aspect, refer to the technical effect of the communication method according to the third aspect. Details are not described herein again.

According to a tenth aspect, a communication apparatus is provided. The communication apparatus includes modules configured to perform the communication method according to the fourth aspect, for example, a transceiver module and a processing module.

Optionally, the transceiver module may include a sending module and a receiving module, where the sending module is configured to implement a sending function of the communication apparatus according to the tenth aspect, and the receiving module is configured to implement a receiving function of the communication apparatus according to the tenth aspect.

Optionally, the communication apparatus according to the tenth aspect may further include a storage module, and the storage module stores a program or instructions. When the processing module executes the program or the instructions, the communication apparatus is enabled to perform the communication method according to the fourth aspect.

It should be noted that the communication apparatus according to the tenth aspect may be a network device, for example, a first access network device, may be a chip (system) or another part or component that may be disposed in the network device, or may be an apparatus including the network device. This is not limited in this application.

In addition, for a technical effect of the communication apparatus according to the tenth aspect, refer to the technical effect of the communication method according to the fourth aspect. Details are not described herein again.

According to an eleventh aspect, a communication apparatus is provided. The communication apparatus includes modules configured to perform the communication method according to the fifth aspect, for example, a transceiver module and a processing module.

Optionally, the transceiver module may include a sending module and a receiving module, where the sending module is configured to implement a sending function of the communication apparatus according to the eleventh aspect, and the receiving module is configured to implement a receiving function of the communication apparatus according to the eleventh aspect.

Optionally, the communication apparatus according to the eleventh aspect may further include a storage module, and the storage module stores a program or instructions. When the processing module executes the program or the instructions, the communication apparatus is enabled to perform the communication method according to the fifth aspect.

It should be noted that the communication apparatus according to the eleventh aspect may be a network device, for example, a first device such as an operations and maintenance management system or a mobility management network element, may be a chip (system) or another part or component that may be disposed in the network device, or may be an apparatus including the network device. This is not limited in this application.

In addition, for a technical effect of the communication apparatus according to the eleventh aspect, refer to the technical effect of the communication method according to the fifth aspect. Details are not described herein again.

According to a twelfth aspect, a communication apparatus is provided. The communication apparatus includes modules configured to perform the communication method according to the sixth aspect, for example, a transceiver module and a processing module.

Optionally, the transceiver module may include a sending module and a receiving module, where the sending module is configured to implement a sending function of the communication apparatus according to the twelfth aspect, and the receiving module is configured to implement a receiving function of the communication apparatus according to the twelfth aspect.

Optionally, the communication apparatus according to the twelfth aspect may further include a storage module, and the storage module stores a program or instructions. When the processing module executes the program or the instructions, the communication apparatus is enabled to perform the communication method according to the sixth aspect.

It should be noted that the communication apparatus according to the twelfth aspect may be a network device, for example, a network data analytics network element, may be a chip (system) or another part or component that may be disposed in the network device, or may be an apparatus including the network device. This is not limited in this application.

In addition, for a technical effect of the communication apparatus according to the twelfth aspect, refer to the technical effect of the communication method according to the sixth aspect. Details are not described herein again.

According to a thirteenth aspect, a communication apparatus is provided. The communication apparatus includes a processor, and the processor is configured to perform the communication method according to any one of the possible implementations of the first aspect to the sixth aspect.

In a possible design solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In a possible design solution, the communication apparatus according to the thirteenth aspect may further include a memory. The memory and the processor may be integrated together, or may be disposed separately. The memory may be configured to store a computer program and/or data related to the communication method according to any one of the first aspect to the sixth aspect.

In this application, the communication apparatus according to the thirteenth aspect may be the network device according to the first aspect or the third aspect to the sixth aspect, the terminal according to the second aspect, a chip (system) or another part or component that may be disposed in the terminal or the network device, or an apparatus including the terminal or the network device.

In addition, for a technical effect of the communication apparatus according to the thirteenth aspect, refer to the technical effect of the communication method according to any possible implementation of the first aspect to the sixth aspect. Details are not described herein again.

According to a fourteenth aspect, a communication apparatus is provided. The communication apparatus includes a processor. The processor is coupled to a memory, and the processor is configured to execute a computer program stored in the memory, to enable the communication apparatus to perform the communication method according to any one of the possible implementations of the first aspect to the sixth aspect.

In a possible design solution, the communication apparatus according to the fourteenth aspect may further include a transceiver. The transceiver may be a transceiver circuit or an interface circuit. The transceiver may be used by the communication apparatus according to the fourteenth aspect to communicate with another communication apparatus.

In this application, the communication apparatus according to the fourteenth aspect may be the network device according to the first aspect or the third aspect to the sixth aspect, the terminal according to the second aspect, a chip (system) or another part or component that may be disposed in the terminal or the network device, or an apparatus including the terminal or the network device.

In addition, for a technical effect of the communication apparatus according to the fourteenth aspect, refer to the technical effect of the communication method according to any one of the implementations of the first aspect to the sixth aspect. Details are not described herein again.

According to a fifteenth aspect, a communication apparatus is provided. The communication apparatus includes a processor and a memory. The memory is configured to store a computer program. When the processor executes the computer program, the communication apparatus is enabled to perform the communication method according to any one of the implementations of the first aspect to the sixth aspect.

In a possible design solution, the communication apparatus according to the fifteenth aspect may further include a transceiver. The transceiver may be a transceiver circuit or an interface circuit. The transceiver may be used by the communication apparatus according to the fifteenth aspect to communicate with another communication apparatus.

In this application, the communication apparatus according to the fifteenth aspect may be the network device according to the first aspect or the third aspect to the sixth aspect, the terminal according to the second aspect, a chip (system) or another part or component that may be disposed in the terminal or the network device, or an apparatus including the terminal or the network device.

In addition, for a technical effect of the communication apparatus according to the fifteenth aspect, refer to the technical effect of the communication method according to any one of the implementations of the first aspect to the sixth aspect. Details are not described herein again.

According to a sixteenth aspect, a communication apparatus is provided. The communication apparatus includes a processor. The processor is configured to: be coupled to a memory; and after reading a computer program in the memory, perform, based on the computer program, the communication method according to any one of the implementations of the first aspect to the sixth aspect.

In a possible design solution, the communication apparatus according to the sixteenth aspect may further include a transceiver. The transceiver may be a transceiver circuit or an interface circuit. The transceiver may be used by the communication apparatus according to the sixteenth aspect to communicate with another communication apparatus.

In this application, the communication apparatus according to the fourteenth aspect may be the network device according to the first aspect or the third aspect to the sixth aspect, the terminal according to the second aspect, a chip (system) or another part or component that may be disposed in the terminal or the network device, or an apparatus including the terminal or the network device.

In addition, for a technical effect of the communication apparatus according to the sixteenth aspect, refer to the technical effect of the communication method according to any one of the implementations of the first aspect to the sixth aspect. Details are not described herein again.

According to a seventeenth aspect, a communication system is provided. The communication system includes the one or more network devices according to the first aspect, for example, the first device such as an operations and maintenance management system or a mobility management network element, and the one or more terminals according to the second aspect, for example, the first terminal. Alternatively, the communication system includes the one or more network devices according to the third aspect, for example, the first device, and the one or more network devices according to the fourth aspect, for example, the first access network device. Alternatively, the communication system includes the one or more network devices according to the fifth aspect, for example, the first device, and the one or more network devices according to the sixth aspect, for example, the network data analytics network element.

According to an eighteenth aspect, a computer-readable storage medium is provided. The computer-readable storage medium includes a computer program or instructions. When the computer program runs or the instructions are run on a computer, the computer is enabled to perform the communication method according to any one of the possible implementations of the first aspect to the sixth aspect.

According to a nineteenth aspect, a computer program product is provided. The computer program product includes a computer program or instructions. When the computer program runs or the instructions are run on a computer, the computer is enabled to perform the communication method according to any one of the possible implementations of the first aspect to the sixth aspect.

### BRIEF DESCRIPTION OF DRAWINGS

FIG. 1 is a diagram of an architecture of a 5G mobile communication system;
FIG. 2 is a schematic flowchart of a requesting procedure;
FIG. 3 is a schematic flowchart of a subscription procedure;
FIG. 4 is a first schematic flowchart of data subscription;
FIG. 5 is a second schematic flowchart of data subscription;
FIG. 6 is a schematic flowchart of RRC connection setup;
FIG. 7 is a schematic flowchart of a false base station attack;
FIG. 8 is a diagram of an architecture of a communication system according to an embodiment of this application;
FIG. 9A and FIG. 9B are a first schematic flowchart of a communication method according to an embodiment of this application;
FIG. 10 is a second schematic flowchart of a communication method according to an embodiment of this application;
FIG. 11A and FIG. 11B are a third schematic flowchart of a communication method according to an embodiment of this application;
FIG. 12 is a fourth schematic flowchart of a communication method according to an embodiment of this application;
FIG. 13A and FIG. 13B are a fifth schematic flowchart of a communication method according to an embodiment of this application;
FIG. 14A and FIG. 14B are a sixth schematic flowchart of a communication method according to an embodiment of this application;
FIG. 15 is a seventh schematic flowchart of a communication method according to an embodiment of this application;
FIG. 16 is a first diagram of a structure of a communication apparatus according to an embodiment of this application; and
FIG. 17 is a second diagram of a structure of a communication apparatus according to an embodiment of this application.

### DESCRIPTION OF EMBODIMENTS

For ease of understanding, technical terms in embodiments of this application are first described.

### 1. 5th generation (5th generation, 5G) mobile communication system:

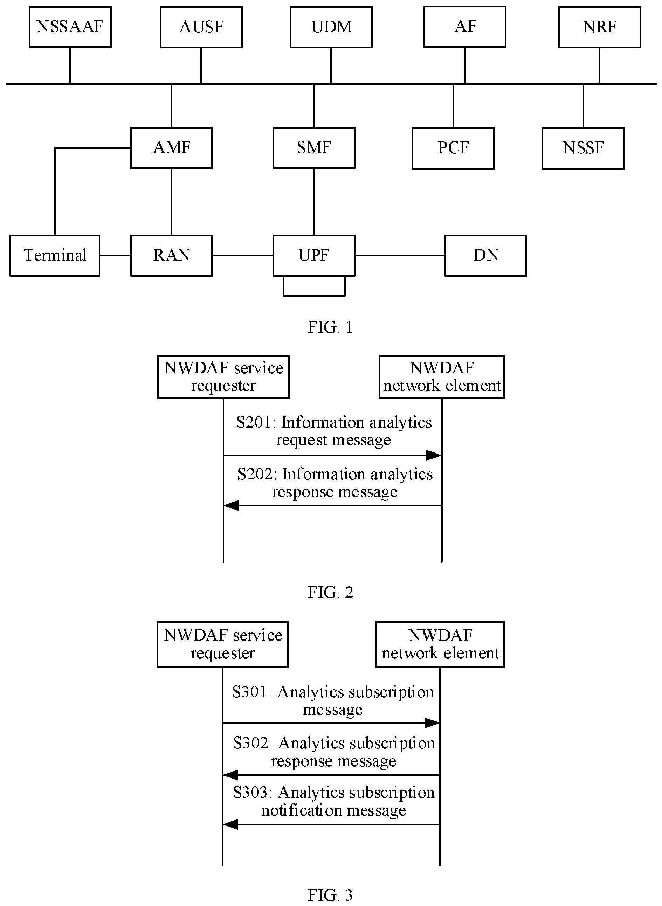

FIG. 1 is a diagram of an architecture of a 5G system. As shown in FIG. 1, the 5G system includes an access network (access network, AN) and a core network (core network, CN), and may further include a terminal.

The terminal may be a terminal having receiving and sending functions, or may be a chip or a chip system that may be disposed in the terminal. The terminal may also be referred to as a user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having wireless receiving and sending functions, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) that has a terminal function, or the like. Alternatively, the terminal in this application may be an in-vehicle module, an in-vehicle subassembly, an in-vehicle component, an in-vehicle chip, or an in-vehicle unit that is built in a vehicle as one or more components or units.

The AN is configured to implement an access-related function, may provide a network access function for an authorized user in a specific area, and can determine transmission links with different quality based on a user level, a service requirement, and the like, to transmit user data. The AN forwards a control signal and user data between the terminal and the CN. The AN may include an access network device, which may also be referred to as a radio access network (radio access network, RAN) device.

The RAN device may be a device that provides access for the terminal. For example, the RAN device may include: a gNB in 5G, for example, a new radio (new radio, NR) system, one antenna panel or a group of antenna panels (including a plurality of antenna panels) of a base station in 5G; a network node that forms a gNB, a transmission point (transmission and reception point, TRP, or transmission point, TP), or a transmission measurement function (transmission measurement function, TMF), for example, a baseband unit (building baseband unit, BBU), or a central unit (central unit, CU) or a distributed unit (distributed unit, DU); an RSU having a base station function; a wired access gateway; or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include an access network device in a next-generation mobile communication system such as 6G, for example, a 6G base station. Alternatively, in a next-generation mobile communication system, the network device may be named in another manner, and the name falls within the protection scope of embodiments of this application. This is not limited in this application.

The CN is mainly responsible for maintaining subscription data of a mobile network, and providing functions such as session management, mobility management, policy management, and security authentication for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, an application function (application function, AF) network element, and a network slice-specific and standalone non-public network (standalone non-public network, SNPN) authentication and authorization function (network slice-specific and SNPN authentication and authorization function, NSSAAF) network element.

The UPF network element is mainly responsible for user data processing (forwarding, receiving, charging, and the like). For example, the UPF network element may receive user data from a data network (data network, DN), and forward the user data to the terminal through the access network device. The UPF network element may further receive user data from the terminal through the access network device, and forward the user data to the DN. A DN network element refers to an operator network that provides a data transmission service for a user, for example, an internet protocol (internet protocol, IP) multi-media service (IP multi-media service, IMS) or an internet (internet).

The AUSF network element may be configured to perform security authentication on the terminal.

The AMF network element is mainly responsible for mobility management in the mobile network, for example, user location updating, user network registration, and user handover.

The SMF network element is mainly responsible for session management in the mobile network, for example, session setup, modification, and release. A specific function is, for example, allocating an internet protocol (internet protocol, IP) address to a user, or selecting a UPF that provides a packet forwarding function.

The PCF network element mainly supports providing a unified policy framework to control network behavior, and providing a policy rule for a control layer network function, and is responsible for obtaining policy decision related user subscription information. The PCF network element may provide a policy, such as a quality of service (quality of service, QoS) policy or a slice selection policy, for the AMF network element and the SMF network element.

The NSSF network element may be configured to select a network slice for the terminal.

The NEF network element may be configured to support capability and event exposure.

The UDM network element may be configured to store user data, for example, subscription data and authentication/authorization data.

The AF network element mainly supports interacting with the CN to provide a service, for example, affect a data routing decision, provide a policy control function, or provide some third-party services for a network side.

The NSSAAF network element may be configured to: support slice authentication and authorization, and support access to an independent non-public network by using a credential of a credential holder. The NSSAAF network element can interact with an authentication, authorization, and accounting server (authentication, authorization, and accounting server, AAA-S) through an authentication, authorization, and accounting proxy (authentication, authorization, and accounting proxy, AAA-P).

### 2. Network data analytics function (network data analytics function, NWDAF) network element:

Under support of service level agreements (service level agreements, SLAs), service requirements of many new communication service scenarios are differentiated, and service experience of the scenarios is diversified and personalized. This increases network operation complexity. A current 5G system still lacks sufficient intelligence to provide on-demand services, and cannot further improve network resource utilization. Therefore, the 3rd generation partnership project (3rd generation partnership project, 3GPP) plans to introduce artificial intelligence (artificial intelligent, AI) into the 5G system and add a network function (network function, NF), for example, an NWDAF network element, to resolve this problem.

The NWDAF network element is mainly configured to analyze various types of network data. The network data may include network running data obtained from the NF (for example, the AMF network element, the SMF network element, or the RAN device), statistical data that is related to the terminal and a network and that is obtained from an operation, administration, and maintenance (operation, administration, and maintenance, OAM) system, application data obtained from a third-party AF (an AF entity/network element that does not belong to the CN), and the like. The NWDAF network element may determine an analytics result based on the network data, and feed back the analytics result to the NF, the CAM system, the AF, or the like, so that the NF, the OAM system, the third-party AF, or the like can perform a corresponding optimization operation by using the analytics result.

For example, a 5G mobility management related function (for example, the AMF network element) may request the NWDAF network element to predict a movement track of the terminal. The NWDAF network element may obtain historical location information of the terminal from the CAM system, and obtain a mobility prediction model of the terminal by analyzing the historical location information of the terminal. The NWDAF network element may analyze a current location of the terminal by using the mobility prediction model of the terminal, to obtain mobility prediction information of the terminal, and provide the information for the AMF network element. In this way, the AMF network element may formulate a more accurate network policy, for example, registration area allocation, auxiliary handover decision making, and mobility anchor pre-selection, based on the mobility prediction information of the terminal, to implement more accurate and reliable mobility management.

For another example, the OAM system may request the NWDAF network element to provide an analytics result for service running data in a network slice. The analytics result may include information about whether each slice satisfies an SLA, and user experience distribution in the slice. The OAM system may determine, based on the analytics result, whether to adjust resource allocation of each network slice, to optimize network slice resource management.

For another example, the third-party AF may subscribe to network performance prediction information from the NWDAF network element. The network performance prediction information may be QoS prediction of service data transmission or load prediction of a network that serves the terminal. The NWDAF network element may provide the network performance prediction information for the third-party AF periodically or as needed based on the subscription of the third-party AF, so that the third-party AF can adjust a running parameter of an application. For example, based on QoS prediction, an internet of vehicles application may select different driving levels or determine whether to download a map or navigation data in advance; or may select a transmission occasion of background traffic based on network load prediction.

### 3. Requesting or subscription:

An NWDAF service requester (NWDAF service consumer), for example, the NF, the OAM system, or the third-party AF, may initiate an analytics request to the NWDAF network element through requesting or subscription. The NWDAF network element may collect data from the corresponding NF, CAM system, third-party AF, or the like based on a type and a periodicity of the analytics request. The NWDAF network element may obtain an analytics result by analyzing the data, to feed back an analytics report (including the analytics result) to the NWDAF service requester.

### Requesting procedure:

FIG. 2 is a schematic flowchart of a requesting procedure. As shown in FIG. 2, the requesting procedure includes the following steps.

S201: The NWDAF service requester sends an information analytics request (Nnwdaf_AnalyticsInfo_Request) message to the NWDAF network element. Correspondingly, the NWDAF network element receives the information analytics request message from the NWDAF service requester.

The information analytics request message is used to request the NWDAF network element to analyze data of a specified-type event/object. The information analytics request message may include an analytics type (analytics ID(s)), an analytics target (target of analytics reporting), analytics filter information (analytics filter information), and analytics reporting information (analytics reporting information).

The analytics type indicates a requested analytics type, for example, network slice analytics or NF load analytics.

The analytics target indicates an analytics range, for example, one UE, a plurality of UEs, or any UE.

The analytics filter information indicates needed analytics information, to further determine an analytics range. For example, the analytics filter information indicates information about a slice, for example, single network slice selection assistance information (single network slice selection assistance information, S-NSSAI), an identifier of the network slice, or an NF identifier. The identifier of the network slice is used as an example, based on a case in which the analytics target indicates one or more UEs, if the analytics filter information indicates an identifier of a network slice, it indicates that data of the one or more UEs is requested to be analyzed on the network slice.

The analytics reporting information indicates a type of an analytics report. The analytics reporting information may include an analytics target period (analytics target period), expected analytics accuracy (preferred level of accuracy of the analytics), and analytics report time (time when analytics information is needed). Optionally, the analytics reporting information may further include a maximum number of requested objects and a maximum number of requested subscription permanent identifiers (subscription permanent identifiers, SUPIs). The analytics target period indicates to analyze an object in a specific time period. If the time period is a historical time period, the NWDAF network element may collect and analyze data of an event in the time period, to obtain an analytics result for the event. If the time period is a future time period, the NWDAF network element may predict a direction of an event in the time period. The expected analytics accuracy indicates accuracy to be achieved when analytics is successful. Prediction of an event is used as an example. If accuracy of prediction performed by the NWDAF network element on the event reaches a threshold, it indicates that the prediction succeeds. The analytics report time indicates maximum analytics duration. If the NWDAF network element still does not feed back an analytics report within the duration, error information is fed back, to indicate that this analytics fails. The maximum number of requested objects indicates a maximum number of analytics objects whose analytics results can be included in the analytics report. For example, if analytics objects are 100 UEs, the maximum number of requested objects indicates that the analytics report can include analytics results of a maximum of 10 UEs. The maximum number of requested SUPIs indicates a maximum number of objects, in the analytics report, whose analytics results can be indicated by SUPIs. The analytics report includes 10 analytics objects, and analytics results of a maximum of five analytics objects can be indicated by SUPIs corresponding to the five analytics objects.

S202: The NWDAF network element sends an information analytics request response (Nnwdaf_AnalyticsInfo_Request response) message to the NWDAF service requester.

Correspondingly, the NWDAF service requester receives the information analytics request response message from the NWDAF network element.

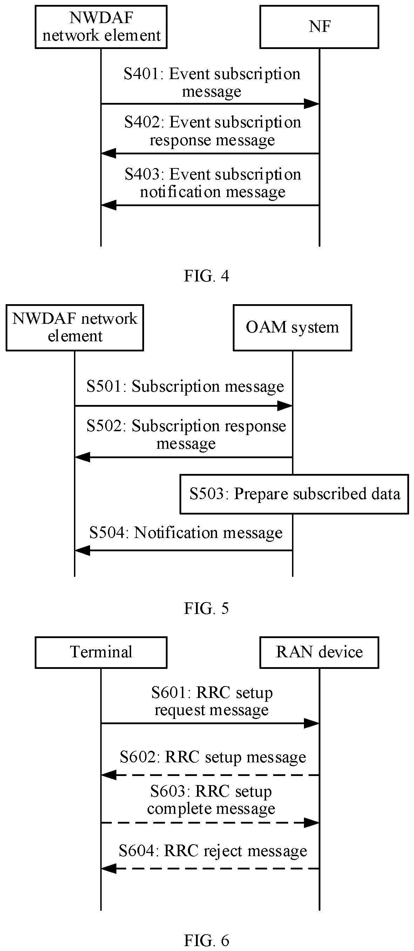

The information analytics request response message includes an analytics report of the NWDAF network element. The NWDAF network element may collect data from a corresponding NF, OAM system, third-party AF, or the like based on the foregoing information analytics request message. For a specific implementation principle of data collection, refer to the following related descriptions in FIG. 4 and FIG. 5. Details are not described. The NWDAF network element may analyze the data in a specified manner based on the information analytics request message to obtain an analytics result and generate the analytics report, to feed back the analytics request response message carrying the analytics report to the NWDAF service requester.

### Subscription procedure:

FIG. 3 is a schematic flowchart of a subscription procedure. As shown in FIG. 3, the subscription procedure includes the following steps.

S301: The NWDAF service requester sends an analytics subscription (Nnwdaf_AnalyticsSubscription_Subscribe) message to the NWDAF network element. Correspondingly, the NWDAF network element receives the analytics subscription message from the NWDAF service requester.

The analytics subscription message is used to subscribe to an analytics result for data of a specified type from the NWDAF network element. The analytics subscription message may include an analytics type, an analytics target, analytics filter information, a target notification address (notification target address), and analytics reporting information.

Similar to the foregoing information analytics request message, for specific implementation principles of the analytics type, the analytics target, and the analytics filter information, refer to the related descriptions of the foregoing information analytics request message. Details are not described again.

The target notification address indicates that the NWDAF network element needs to send an analytics report to the address. For example, the address may be an address of the NWDAF service requester or an address of another network element. This is not specifically limited.

The analytics reporting information indicates a type of the analytics report. The analytics reporting information may include an analytics target period, expected analytics accuracy, a basic reporting parameter (analytics reporting parameters), and a reporting threshold (reporting thresholds). Optionally, the analytics reporting information may further include a maximum number of requested objects and a maximum number of requested SUPIs. Similar to the foregoing information analytics request message, for specific implementation principles of the analytics target period, the expected analytics accuracy, the maximum number of requested objects, and the maximum number of requested SUPIs, refer to the related descriptions of the foregoing information analytics request message. Details are not described again. Basic reporting parameters include an analytics reporting mode (reporting mode), a maximum number of reports (Maximum number of reports), duration of reporting (Maximum duration of reporting), an immediate reporting flag (Immediate reporting flag), and the like. The analytics reporting mode may include periodic reporting or immediate reporting. The periodic reporting indicates that the NWDAF network element periodically reports an analytics report within a time period indicated by the analytics target period, for example, report an analytics report at intervals of one day. The immediate reporting indicates that the NWDAF network element feeds back an analytics report when an analytics result for a specified event/object satisfies a reporting trigger condition (immediate reporting flag). The maximum number of reports indicates a maximum number of analytics reports that can be reported. When the maximum number of analytics reports is reached, the NWDAF network element stops reporting. The duration of reporting indicates maximum duration allowed for the analytics report. If the NWDAF network element does not feed back the analytics report within the duration, the analytics report needs to be subscribed to again. The reporting threshold indicates a threshold of the basic reporting parameter, for example, a specific value of the maximum number of reports.

S302: The NWDAF network element sends an analytics subscription response (Nnwdaf_AnalyticsSubscription_Subscribe response) message to the NWDAF service requester. Correspondingly, the NWDAF service requester receives the analytics subscription response message from the NWDAF network element.

The analytics subscription response message indicates a subscription success/subscription failure.

S303: The NWDAF network element sends an analytics subscription notification (Nnwdaf_AnalyticsSubscription_Notify) message to the NWDAF service requester. Correspondingly, the NWDAF service requester receives the analytics subscription notification message from the NWDAF network element.

The analytics subscription notification message includes the analytics report. The NWDAF network element may collect data from a corresponding NF, CAM system, third-party AF, or the like based on the foregoing analytics subscription message. For a specific implementation principle of data collection, refer to the following related descriptions in FIG. 4 and FIG. 5. Details are not described. The NWDAF network element may analyze the data in a specified manner based on the analytics subscription message to obtain the analytics result and generate the analytics report, to feed back the analytics subscription notification message carrying the analytics report to the NWDAF service requester.

It may be understood that, after performing subscription, the NWDAF service requester may further send an analytics unsubscription (Nnwdaf_AnalyticsSubscription_Unsubscribe) message to the NWDAF network element. The analytics unsubscription message is used to unsubscribe from the analytics result for the specified type of data/specified time from the NWDAF network element. Correspondingly, the NWDAF network element may return an analytics unsubscription response (Nnwdaf_AnalyticsSubscription_Unsubscribe response) message to the NWDAF service requester. The analytics unsubscription response message indicates whether the analytics result unsubscription succeeds or fails.

The overall requesting or subscription procedure is described above. In the overall procedure, after receiving the information analytics request message or the analytics subscription message, the NWDAF network element may collect the data from the corresponding NF, OAM system, or third-party AF through subscription.

The NF is used as an example. FIG. 4 is a schematic flowchart of subscribing to data from the NF by the NWDAF network element. As shown in FIG. 4, the procedure includes the following steps.

S401: The NWDAF network element sends an event subscription (Nnf_EventExposure_Subscribe) message to the NF. Correspondingly, the NF receives the event subscription message from the NWDAF network element.

The event subscription message is used to subscribe to a corresponding event from the NF. The event subscription message may include an event type (event ID), a subscription target (target of event reporting), event filter information (event filter information), event reporting information (event reporting information), a subscription notification address (a notification target address), and subscription expiry time (an expiry time).

The event type indicates a type of the subscribed event, for example, UE reachability (reachability) and UE access and mobility (access and mobility).

The subscription target indicates a target whose data is subscribed to, so as to determine a subscription range, for example, UE related data or related data of a protocol data unit (protocol data unit, PDU) session.

The event filter information further indicates the subscribed event, to further determine the subscription range. For example, the event filter information indicates information about a slice, for example, single network slice selection assistance information (single network slice selection assistance information, S-NSSAI), an identifier of the network slice, or an NF identifier. The identifier of the network slice is used as an example. Based on a case in which the subscription target indicates the UE related data, if the event filter information indicates an identifier of a network slice, it indicates that the UE related data on the network slice is subscribed to.

The event reporting information indicates a type of an event report. The event reporting information may include an event reporting mode (event reporting mode), a maximum number of reports (maximum number of reports), maximum duration of reporting (maximum duration of reporting), a reporting periodicity and periodic reporting, an immediate reporting flag (immediate reporting flag), a sampling ratio (sampling ratio), and group reporting guard time (group reporting guard time). The event reporting mode may include periodic event reporting or immediate event reporting. The periodic event reporting means that the NF periodically reports an event report within a time period indicated by the reporting periodicity and periodic reporting (the time period may be a historical time period or a future time period, which is similar to the foregoing analytics target period, and details are not described again). For example, an event report is reported at an interval of one day. The immediate event reporting indicates that the NF feeds back an event report when an event analytics result satisfies a reporting trigger condition (immediate event reporting). The maximum number of reports indicates a maximum number of event reports that can be reported by the NF. When the maximum number of reports is reached, the NF stops reporting. The maximum duration of reporting indicates maximum duration allowed for the event report. If the NF does not feed back the event report within the duration, the event report needs to be subscribed to again. The sampling ratio indicates a specific ratio of objects from which the NF collects data. For example, the UE related data is collected from 1% of UEs, to be specific, related data of one UE is collected from every 100 UEs. The group reporting guard time indicates the NF to aggregate and report events within the guard time. For example, if 100 events are collected within one week, the 100 events are aggregated and reported together.

The subscription notification address indicates that the NF needs to send the event report to the address. For example, the address may be an address of the NWDAF network element or an address of another network element. This is not specifically limited.

The subscription expiry time indicates total subscription time. For example, if the reporting periodicity and periodic reporting is one month, and the subscription expiry time is one year, it indicates that the NF reports an event report every month within one year. If the subscription time is longer than one year, subscription ends and needs to be performed again.

S402: The NF sends an event subscription response (Nnf_ EventExposure_Subscribe response) message to the NWDAF network element. Correspondingly, the NWDAF network element receives the event subscription response message from the NF.

The event subscription response message indicates a subscription success/subscription failure.

S403: The NF sends an event subscription notification (Nnf_EventExposure_Notify) message to the NWDAF network element. Correspondingly, the NWDAF network element receives the event subscription notification message from the NF.

The event subscription notification message includes the event report. The NF may collect the corresponding event from the corresponding object, for example, a UE or another network element, based on the event subscription message, and generate the event report, to feed back, to the NWDAF network element, the event subscription notification message carrying the event report.

The NWDAF network element may further send an event unsubscription (Nnf_EventExposure_Unsubscribe) message to the NF. The event unsubscription message is used to unsubscribe from the corresponding event from the NF. Correspondingly, the NF may return an event unsubscription response (Nnf_EventExposure_Unsubscribe response) message to the NWDAF network element. The event unsubscription response message indicates whether the event unsubscription succeeds or fails.

The OAM system is used as an example. FIG. 5 is a schematic flowchart of subscribing to data from the OAM system by the NWDAF network element. As shown in FIG. 5, the procedure includes the following steps.

S501: The NWDAF network element sends a subscription (subscribe) message to the CAM system. Correspondingly, the OAM system receives the subscription message from the NWDAF network element.

S502: The CAM system sends a subscription response (subscribe response) message to the NWDAF network element. Correspondingly, the NWDAF network element receives the subscription response message from the OAM system.

For specific implementation principles of S501 and S502, refer to the related descriptions of S401 and S402. Details are not described again.

S503: The CAM system prepares subscribed data.

The CAM system may collect corresponding data from a corresponding object, for example, a UE or another network element, based on the subscription message, in other words, prepare the subscribed data.

S504: The CAM system sends a notification (notification) message to the NWDAF network element. Correspondingly, the NWDAF network element receives the notification message from the OAM system.

The notification message notifies that the subscribed data is ready, so that the NWDAF network element obtains the subscribed data from the CAM system. For example, the NWDAF network element obtains the subscribed data by using a file transfer protocol (file transfer protocol, FTP).

### 4. Radio resource control (radio resource control, RRC) connection:

In a 5G system, a terminal may set up an RRC connection to a RAN device, to access a CN through the RAN device. Alternatively, the RAN device may reject the setup of the RRC connection to the terminal. As a result, the terminal cannot access the CN through the RAN device.

FIG. 6 is a schematic flowchart of RRC connection setup. As shown in FIG. 6, a procedure of the RRC connection setup includes the following steps.

S601: A terminal sends an RRC setup request (RRC setup request) message to a RAN device. Correspondingly, the RAN device receives the RRC setup request message from the terminal.

The RRC setup request message is used by the terminal to request to set up an RRC connection to the RAN device.

S602: The RAN device sends an RRC setup (RRC setup) message to the terminal. Correspondingly, the terminal receives the RRC setup message from the RAN device.

The RRC setup message notifies the terminal that the RRC connection to the RAN device may be set up. The RRC setup message includes configuration information needed for the RRC connection setup. For example, after receiving the RRC setup request message, if the RAN device determines that access of the terminal can be supported, for example, a corresponding resource is further reserved, the RAN device may allocate the corresponding resource to the terminal, and send the RRC setup message.

S603: The terminal sends an RRC setup complete (RRC setup complete) message to the RAN device. Correspondingly, the RAN device receives the RRC setup complete message from the terminal.

After receiving the RRC setup message, the terminal may change a corresponding configuration based on the configuration information, to implement synchronization with the RAN device. Then, the terminal may send the RRC setup complete message to the RAN device, to indicate that the RRC connection is successfully set up.

S604: The RAN device sends an RRC reject (RRC reject) message to the terminal. Correspondingly, the terminal receives the RRC reject message from the RAN device.

The RRC reject message indicates that the RAN device rejects the RRC connection setup to the terminal. For example, after receiving the RRC setup request message, if the RAN device determines that access of the terminal cannot be supported due to excessively high load, insufficient reserved resources, and the like, the RAN device sends the RRC reject message.

It may be understood that S602 and S603, and S604 are optional steps. If the RRC connection can be set up, S602 and S603 are performed; otherwise, S604 is performed.

### 5. False base station attack

A false base station is a fake base station, and is an independent device. A false base station may be deployed within a coverage area of a normal base station (for example, a normal RAN device) to initiate a false base station attack. For example, a false base station may simulate the normal base station, send signaling to a terminal in the coverage area, to obtain terminal-related information, and force the terminal to perform operations such as cell reselection, location updating, and handover, so as to achieve online fraud, privacy information obtaining, and the like.

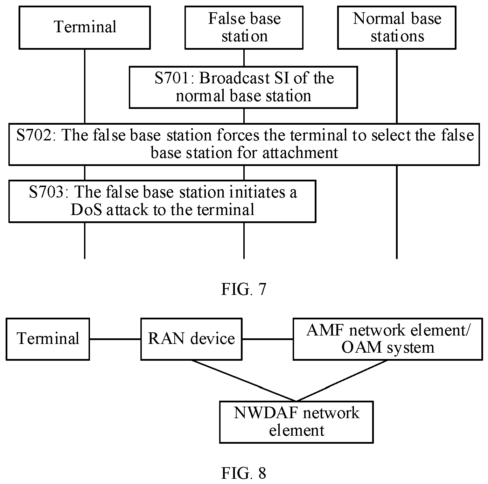

FIG. 7 is a schematic flowchart of a false base station attack. As shown in FIG. 7, a procedure of the false base station attack includes the following steps.

S701: A false base station broadcasts system information (system information, SI) of a normal base station.

The SI of the normal base station may include a master information block (master information block, MIB) and a plurality of system information blocks (system information blocks, SIBs), and specifically include a cell selection parameter, neighboring cell information, channel configuration information, public safety information, and the like. The normal base station may periodically broadcast the SI, so that a terminal (for example, a terminal in an idle state or an inactive state) performs listening, and accesses and attaches to a cell served by the normal base station. However, this unencrypted broadcast form is easily used by the false base station. For example, after obtaining, through listening, the SI broadcast by the normal base station, the false base station may forge or replay the SI of the normal base station.

S702: The false base station forces the terminal to select the false base station for attachment.

In a network selection phase, after receiving the SI (the SI of the normal base station or the SI forged or replayed by the false base station), the terminal selects a preamble (preamble) from the SI, and sends a random access preamble (random access preamble) message carrying the preamble to a device (the normal base station or the false base station) that broadcasts the SI, to indicate the terminal to request to set up a connection to the device. In this case, the false base station may send a random access response (random access response) message to the terminal by using a method such as power suppression, to force the terminal to preferentially receive the random access response message sent by the false base station and ignore a random access response message sent by the normal base station. In this way, the terminal preferentially selects the false base station for attachment, and sends an RRC setup request message to the false base station.

S703: The false base station initiates a denial of service (denial of service, DoS) attack to the terminal.

The false base station may not respond to the RRC setup request message of the terminal, or send an RRC reject message to the terminal, to prevent the UE from setting up an RRC connection, so as to prevent the terminal from accessing a network. This causes service interruption of the terminal, and further causes security risks such as user information leakage. However, there is no particularly effective detection means for false base station attacks.

In conclusion, to resolve the foregoing technical problem, embodiments of this application provide the following technical solutions, to implement false base station attack detection. The following describes the technical solutions in this application with reference to the accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, expressions such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, the terms "information (information)", "signal (signal)", "message (message)", "channel (channel)", and "signaling (signaling)" may be interchangeably used sometimes. It should be noted that meanings expressed by the terms are matched when differences between the terms are not emphasized. In addition, the terms "of (of)", "corresponding (corresponding or relevant)", and "corresponding (corresponding)" may be interchangeably used sometimes. It should be noted that meanings expressed by the terms are matched when differences between the terms are not emphasized. In addition, "/" mentioned in this application may indicate an "or" relationship.

A network architecture and a service scenario that are described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

For ease of understanding of embodiments of this application, first, a communication system applicable to embodiments of this application is described in detail by using a communication system shown in FIG. 8 as an example. For example, FIG. 8 is a diagram of an architecture of a communication system to which a communication method according to embodiments of this application is applicable.

As shown in FIG. 8, the communication system is applicable to the foregoing 5G architecture, and mainly includes a terminal, a RAN device, an AMF network element/OAM system, and an NWDAF network element. For related functions of the terminal, the RAN device, the AMF network element/OAM system, and the NWDAF network element, refer to the foregoing related descriptions in: 1. 5G mobile communication system and 2. NWDAF network element. Details are not described again. The NWDAF network element may alternatively be replaced with another network element or entity, for example, a security analytics network element. In the communication system in this embodiment of this application, the terminal and/or the RAN device may collect related data, and report the data to the AMF network element/OAM system. The AMF network element/OAM system may analyze the data by using a threshold configured by the NWDAF network element, or request the NWDAF network element to analyze the data, to determine whether a false base station attack exists, so as to implement false base station detection.

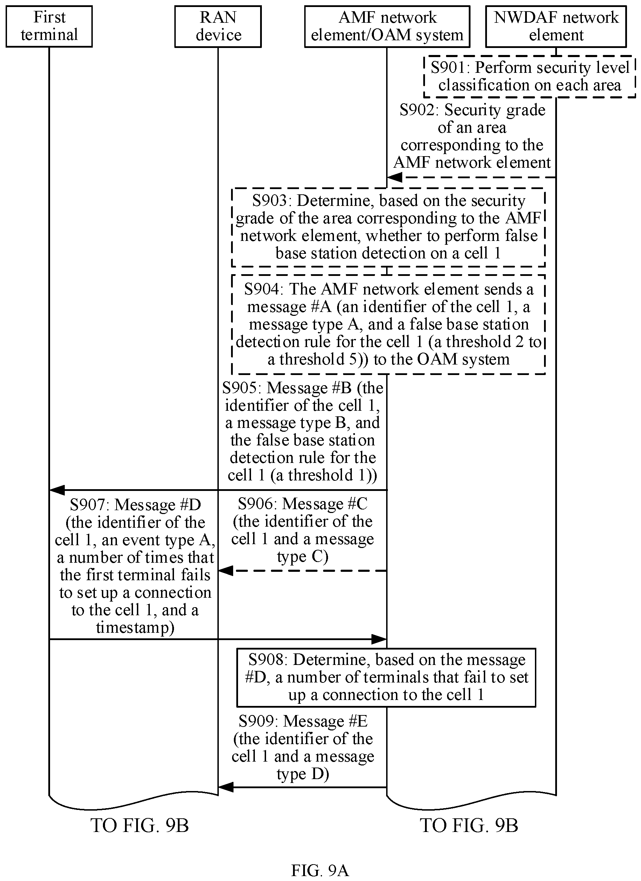

For ease of understanding, with reference to FIG. 9A to FIG. 16, the following specifically describes interaction procedures between the terminal, the RAN device, the AMF network element/OAM system, and the NWDAF network element by using method embodiments.

The communication method provided in embodiments of this application may be applied to the foregoing communication system, and is applied to various scenarios. In different scenarios, different devices/network elements may perform different procedures of the communication method, to implement false base station detection.

### Scenario 1:

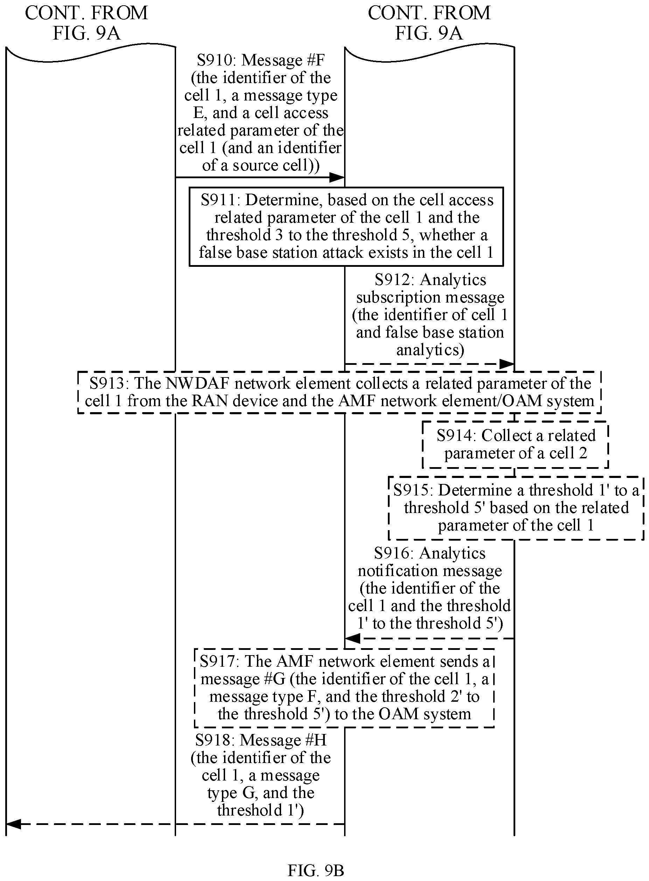

For example, FIG. 9A and FIG. 9B are a first schematic flowchart of a communication method according to an embodiment of this application. The communication method is mainly applicable to communication between a first terminal, a RAN device, an AMF network element/OAM system, and an NWDAF network element. In the scenario 1, the AMF network element/OAM system may trigger the first terminal to perform false base station detection, so that the AMF network element/OAM system determines, based on data of the first terminal and a threshold, whether a false base station attack exists.

Specifically, as shown in FIG. 9A and FIG. 9B, a procedure of the communication method is as follows:

S901: The NWDAF network element performs security level classification on each area.

The AMF network element, an AF network element (not shown in FIG. 9A and FIG. 9B), a PCF network element (not shown in FIG. 9A and FIG. 9B), a UDM network element (not shown in FIG. 9A and FIG. 9B), or the like may request analytics from the NWDAF network element, to perform security level classification on different areas. Correspondingly, the NWDAF network element may collect, through subscription or requesting, area information of each area from the AMF network element, the AF network element (not shown in FIG. 9A and FIG. 9B), the PCF network element (not shown in FIG. 9A and FIG. 9B), the UDM network element (not shown in FIG. 9A and FIG. 9B), or the like. For a specific procedure of the subscription or requesting, refer to the foregoing related descriptions in: 3. Requesting or subscription. Details are not described again. One area may include one or more cells. Sizes of different areas may be the same or different, in other words, quantities of cells included in different areas may be the same or different. Area information of one area may include service information of the area, location information of the area, or the like; or may include any other possible information. The NWDAF network element may evaluate a security grade, in other words, a security level, of each area based on area information of the area. For example, if service information of one area indicates that a service deployed in the area is a service having a high security requirement, a security grade of the area is also high. On the contrary, if service information of one area indicates that a service deployed in the area is a service having a low security requirement, a security grade of the area is also low. For another example, if location information of one area indicates that there is an important institution in the area, for example, a government, a scientific research unit, or a national defense unit, a security grade of the area is also high. On the contrary, if location information of one area indicates that there is no particularly important institution in the area, a security grade of the area is also low.

It may be understood that, if one area includes one cell, security level classification is performed by using a single cell as a granularity. If one area includes a plurality of cells, security level classification is performed by using a plurality of cells as a granularity. A specific granularity used for performing security level classification may be selected based on an actual requirement. This is not limited in this application.

S902: The NWDAF network element sends, to the AMF network element, a security grade of an area corresponding to the AMF network element. Correspondingly, the AMF network element receives, from the NWDAF network element, the security grade of the area corresponding to the AMF network element.

The area corresponding to the AMF network element may be an area in which the AMF network element is responsible for access and mobility management, or may be an area in which another AMF network element is responsible for access and mobility management. This is not specifically limited. The area corresponding to the AMF network element may be one or more areas.

The NWDAF may send a security grade of a corresponding area to a requester requesting security analytics, for example, the AMF network element, the AF network element (not shown in FIG. 9A and FIG. 9B), the PCF network element (not shown in FIG. 9A and FIG. 9B), or the UDM network element (not shown in FIG. 9A and FIG. 9B). If the security grade of the corresponding area is sent to the AF network element (not shown in FIG. 9A and FIG. 9B), the PCF network element (not shown in FIG. 9A and FIG. 9B), or the UDM network element (not shown in FIG. 9A and FIG. 9B), these network elements or entities may send security grades of corresponding areas to the AMF network element, so that the AMF network element finally obtains the security grade of the area corresponding to the AMF network element.

S903: The AMF network element determines, based on the security grade of the area corresponding to the AMF network element, whether to perform false base station detection on a cell 1.

The AMF network element may determine whether the security grade of the area corresponding to the AMF network element is high, for example, whether the security grade is greater than a security grade threshold. If the security grade is high, for example, greater than the security grade threshold, false base station detection is performed on a cell (denoted as the cell 1) in the area. Otherwise, if the security grade is low, for example, is less than or equal to the security grade threshold, false base station detection is not performed on the cell 1. In other words, the AMF network element may perform false base station detection only on a cell with a high security grade, to improve device running efficiency and reduce overheads.

The AMF network element has a false base station detection rule for the cell 1. For example, the false base station detection rule for the cell 1 is pre-configured for the AMF network element. Alternatively, the AMF network element may send, in advance to the NWDAF network element, a request message for subscribing to false base station detection threshold analytics, so that the AMF network element can receive the false base station detection rule that is for the cell 1 and that is sent by the NWDAF network element. The false base station detection rule may include at least one of the following: a threshold (denoted as a threshold 1) of a number of times that the terminal fails to set up a connection to the cell 1, a threshold (denoted as a threshold 2) of a number of terminals that fail to set up a connection to the cell 1, a threshold (denoted as a threshold 3) of a number of failures of handover to the cell 1, a threshold (denoted as a threshold 4) of a number of terminals that have accessed the cell 1, or a threshold (denoted as a threshold 5) of a number of terminals that newly access the cell 1. The threshold 1 may be a terminal granularity threshold. For example, the threshold 1 may be configured locally on the first terminal, so that the first terminal determines whether a number of times that the first terminal fails to set up a connection to the cell 1 reaches the threshold 1. The threshold 1 may be a threshold (denoted as a threshold 11) of a number of times that the terminal fails to set up an RRC connection to the cell 1 due to timeout, and/or a threshold (denoted as a threshold 12) of a number of times that the terminal fails to set up an RRC connection to the cell 1 due to RRC rejection of the cell 1. It can be learned that the threshold 1 (the threshold 11 and/or the threshold 12) is a threshold related to the cell 1, to ensure accuracy of false base station detection on the cell 1. The threshold 2 may be a cell granularity threshold, and the threshold 2 may be a threshold of a number of terminals that fail to set up an RRC connection to the cell 1 in a unit time, in a time period, or in each unit time of a time period. The threshold 3 may be a cell granularity threshold, and the threshold 3 may be a threshold of a number of handover failures caused because the cell 1 receives no random access request message from a terminal in a unit time, in a time period, or in each unit time of a time period. The threshold 4 may be a cell granularity threshold, and the threshold 4 may be a threshold of a number of terminals that have accessed the cell 1 in a unit time, in a time period, or in each unit time of a time period. The threshold 5 may be a cell granularity threshold, and the threshold 5 may be a threshold of a number of terminals that newly access the cell 1 in a unit time, in a time period, or in each unit time of a time period. Unit times and time periods corresponding to the foregoing thresholds may be the same or different. The unit times and duration of the time periods corresponding to the foregoing thresholds may be flexibly set based on an actual scenario. This is not specifically limited in embodiments of this application. The false base station detection rule for the cell 1 may be a rule pre-configured by a system on the AMF network element locally, or may be a rule obtained by the AMF network element from another network element. For example, the rule is obtained from the PCF network element (not shown in FIG. 9A and FIG. 9B) or the UDM network element (not shown in FIG. 9A and FIG. 9B). The false base station detection rule for the cell 1 may be determined by a system or another network element with reference to a false base station detection rule for another cell (denoted as a cell 2), or may be the false base station detection rule for the cell 2. The cell 2 may be a cell located near the cell 1, for example, a neighboring cell of the cell 1. The false base station detection rule for the cell 1 may be obtained based on historical data of the cell 1, for example, a historically configured threshold of the cell 1.

It may be understood that S901 to S903 are optional steps. For example, the NWDAF network element may not perform security level classification on the area, so that the AMF network element performs false base station detection on each corresponding cell, to ensure detection completeness and avoid missing detection.

S904: The AMF network element sends a message #A to the CAM system. Correspondingly, the CAM system receives the message #A from the AMF network element.

S904 is an optional step. When the CAM system performs false base station detection on the cell 1, the AMF network element performs S904. In this case, the message #A indicates that the OAM system needs to enable false base station detection on the cell 1. The message #A may be a service-based interface message or any other possible message. This is not specifically limited. The message #A may include an identifier (identifier, ID) of the cell 1, a message type A, and the false base station detection rule for the cell 1. The identifier of the cell 1 indicates that the OAM system needs to enable false base station detection on the cell 1. The message type A indicates that the message #A is a message indicating to enable false base station detection. The false base station detection rule in the message #A may be some base station detection rules for the cell 1, for example, the threshold 2 to the threshold 5. The threshold 1 may be configured by the AMF network element for a corresponding terminal, to improve running efficiency of the CAM system and reduce overheads. Alternatively, the message #A may include more false base station detection rules for the cell 1, for example, the threshold 1 to the threshold 5. This is not specifically limited.

S905: The AMF network element sends a message #B to the first terminal. Correspondingly, the first terminal receives the message #B from the AMF network element.

The AMF network element may send the message #B to a terminal in the area corresponding to the AMF network element. In other words, the first terminal is located in the area corresponding to the AMF network element. For example, the first terminal may be located in the cell 1 or the cell 2. This is not specifically limited.

The message #B may indicate that the first terminal needs to enable false base station detection on the cell 1. The message #B may be a non-access stratum (non-access stratum, NAS) message, for example, a registration accept (registration accept) message, a paging (paging) message, a UE configuration update command (UE configuration update complete) message, or any other possible message. This is not specifically limited. The message #B may include the identifier of the cell 1, a message type B, a reporting rule, and the false base station detection rule for the cell 1. The identifier of the cell 1 indicates that the first terminal needs to enable false base station detection on the cell 1. The message type B indicates that the message #B is a message indicating to enable false base station detection. The reporting rule may indicate the first terminal to report a false base station attack event to the AMF network element or the CAM system. Because the first terminal mainly detects whether the first terminal can set up an RRC connection to the cell 1, the false base station detection rule, for the cell 1, in the message #B may be a rule related to setup of an RRC connection to the cell 1, for example, the threshold 1, to reduce overheads. Certainly, that the message #B includes the threshold 1 is merely an example, and is not limited. The message #B may alternatively include more thresholds corresponding to the cell 1, for example, the threshold 2 to the threshold 5; or even all thresholds corresponding to the cell 1, namely, the threshold 1 to the threshold 5.

The first terminal may perform false base station detection on the cell 1 based on the message #B. For example, the first terminal may record the number of times that the first terminal fails to set up the connection to the cell 1, including a number of times that the first terminal fails to set up the RRC connection due to timeout, and/or a number of times that the first terminal fails to set up the RRC connection due to RRC rejection. Normally, when attempting to access the cell 1, the first terminal may receive an RRC setup message from the cell 1, to normally set up an RRC connection to the cell 1. However, due to a false base station attack or the like, the first terminal cannot receive the RRC setup message. As a result, the first terminal fails to set up the RRC connection due to timeout. Alternatively, the terminal receives an RRC reject message from a false base station. As a result, the terminal fails to set up an RRC connection due to RRC rejection. In this way, the first terminal may record the failure, increase the number of times that the first terminal fails to set up the RRC connection due to timeout by 1, or increase the number of times that the first terminal fails to set up the RRC connection due to RRC rejection by 1, and record a cell identifier corresponding to the failure, namely, the identifier of the cell 1 (obtained from SI that is of the cell 1 and that is replayed by the false base station), and a timestamp of the failure. As the number of times that the first terminal fails to set up the connection to the cell 1 continuously increases, when the number is greater than the threshold 1, for example, the number of times that the first terminal fails to set up the RRC connection due to timeout is greater than the threshold 11, and/or the number of times that the first terminal fails to set up the RRC connection due to RRC rejection is greater than the threshold 12, the first terminal may report this exception to the AMF network element/OAM system. For a specific implementation, refer to related descriptions in S907. Details are not described.

It should be noted that, after the AMF network element sends the message #B, if a new UE is handed over, accesses, or reselects to the cell 1 subsequently, the AMF network element may indicate, through a UE configuration update (UE configuration update, UCU), mobility registration, RRC resume, or the like, the new UE to enable false base station detection.

S906: The AMF network element sends a message #C to the RAN device. Correspondingly, the RAN device receives the message #C from the AMF network element.

The RAN device may be a RAN device in the cell 1 . The message #C may indicate that the RAN device needs to enable false base station detection on the cell 1. The message #C may be a service-based interface message, a universal interface message, or any other possible message. This is not specifically limited. The message #C may include the identifier of the cell 1 and a message type C. The identifier of the cell 1 indicates that the RAN device needs to enable false base station detection on the cell 1. The message type C indicates that the message #C is a message indicating to enable false base station detection.

The RAN device may collect a cell access related parameter of the cell 1 based on the message #C. The cell access related parameter may include at least one of the following: a number of failures of handover to the cell 1, a number of terminals that have accessed the cell 1, or a number of terminals that newly access the cell 1.

The number of failures of handover to the cell 1 is a number of handover failures caused because the cell 1 receives no random access request message from a terminal in the unit time. The terminal may be a terminal located in another cell, for example, the cell 2. If the cell 2 determines to hand over the terminal to the cell 1, the cell 2 may send a handover request message to the cell 1. The handover request message may carry an identifier of the terminal, so that the cell 1 learns that the terminal is to be handed over to the cell 1. In this case, normally, the terminal needs to send a random access request message to the cell 1, to request to be handed over to the cell 1. However, due to a false base station attack or the like, the terminal may not send a random access request message to the cell 1. As a result, the cell 1 cannot receive the random access request message from the terminal, and the terminal fails to be handed over to the cell 1. In this way, an access network device 1 may increase, by 1, the number of handover failures caused because the cell 1 receives no random access request message from the terminal. In this manner, the access network device 1 may determine the number of handover failures caused because the cell 1 receives no random access request message from the terminal in the unit time.

The number of terminals that have accessed the cell 1 may be specifically a number of terminals that have accessed the cell 1 at a time point (or a timestamp). For example, at the time point, the access network device 1 may count the number of terminals that have currently accessed the cell 1.

The number of terminals that newly access the cell 1 may be specifically a number of terminals that newly access the cell 1 in the unit time. For example, after a terminal accesses the cell 1, the access network device 1 may increase the number of terminals that newly access the cell 1 by 1. In this manner, the access network device 1 may determine the number of terminals that newly access the cell 1 in the unit time.

It may be understood that S906 is an optional step. For example, the RAN device enables false base station detection on the cell 1 by default. Alternatively, the RAN device does not enable false base station detection on the cell 1 by default, and the AMF network element/OAM system can determine, based on data collected by the first terminal, whether a false base station attack exists in the cell 1. In addition, an execution sequence of S906 and S905 is not limited.

S907: The first terminal sends a message #D to the AMF network element/OAM system. Correspondingly, the AMF network element/OAM system receives the message #D from the first terminal.

When the number of times that the first terminal fails to set up the connection to the cell 1 is increased to be greater than the threshold 1, it indicates that the false base station attack event exists in the cell 1, or it indicates that the false base station attack may exist in the cell 1. On this basis, the message #D may indicate that the first terminal fails to set up the connection to the cell 1, or may indicate that the false base station attack event exists in the cell 1. The message #D may be a NAS message, for example, a registration complete (registration complete) message, a service request (service request) message, or any other possible message. This is not specifically limited. The message #D may include the identifier of the cell 1, an event type A (event type A), the number of times that the first terminal fails to set up the connection to the cell 1 (a number of times that the first terminal fails to set up the RRC connection to the cell 1 due to timeout, and/or a number of times that the first terminal fails to set up the RRC connection to the cell 1 due to RRC rejection of the cell 1), and a timestamp. The identifier of the cell 1 indicates that the false base station attack event exists in the cell 1, in other words, the cell 1 is a cell in which the false base station attack may exist. The event type A indicates that an event type is the false base station attack event. There may be one or more timestamps. Each timestamp may indicate a time point at which the first terminal fails to set up the connection to the cell 1, for example, a time point at which the first terminal fails to set up the connection to the cell 1 for the first time, or a time point at which the first terminal fails to set up the connection to the cell 1 for the last time.

It may be understood that if the AMF network element performs false base station detection, the first terminal may send the message #D to the AMF network element through the RAN. If the OAM system performs false base station detection, the first terminal may send the message #D to the OAM system through the RAN.

S908: The AMF network element/OAM system determines, based on the message #D, a number of terminals that fail to set up the connection to the cell 1.

It can be learned from the foregoing descriptions that the message #D may indicate that the first terminal fails to set up the connection to the cell 1. The AMF network element/OAM system may increase, based on the message #D, the number of terminals that fail to set up the connection to the cell 1 by 1, to be specific, count a number of terminals that currently fail to set up a connection to the cell 1 (or count a number of false base station attack events for the cell 1). As the number of terminals that fail to set up the connection to the cell 1 continuously increases, when the number is increased to be greater than the threshold 2, the AMF network element/OAM system may request data of the cell 1 from the RAN device, to further determine whether the false base station attack exists in the cell 1. For a specific implementation, refer to related descriptions in the following S909 and S910. Details are not described again.

S909: The AMF network element/OAM system sends a message #E to the RAN device. Correspondingly, the RAN device receives the message #E from the AMF network element/OAM system.

The message #E is used to request the RAN device to report the cell access related parameter of the cell 1. The message #E may be a service-based interface message, a universal interface message, or any other possible message. This is not specifically limited. The message #E may include the identifier of the cell 1 and a message type D. The identifier of the cell 1 indicates the RAN device to report the cell access related parameter of the cell 1. The message type D indicates that the message #E is a message used to request the cell access related parameter.

Optionally, the message #E may alternatively indicate a time period and/or a unit time, to request the RAN device to report the cell access related parameter that is of the cell 1 and that corresponds to the time period and/or the unit time. For example, the RAN device reports the cell access related parameter of the cell 1 in the time period, in the unit time, or in each unit time of the time period. It is assumed that the time period is the last week and the unit time is every day. The RAN device may report the cell access related parameter of the cell 1 in the last week, the RAN device may report the cell access related parameter of the cell 1 every day, or the RAN device may report the cell access related parameter of the cell 1 every day in the last week. The time period and/or the unit time may be related to the timestamp in the message #D, for example, determined by the AMF network element/OAM system based on the timestamp in the message #D, to match a time period and/or a unit time corresponding to the timestamp. Alternatively, the time period and/or the unit time may be irrelevant to the timestamp in the message #D, and is determined by the AMF network element/OAM system in another manner, for example, determined based on the time period and/or the unit time corresponding to the threshold or pre-configured. Alternatively, the time period and/or the unit time may be default parameters/a default parameter of the RAN device, in other words, the message #D may not indicate the time period and/or the unit time, and the RAN device reports, by default, a cell access related parameter that is of the cell 1 and that corresponds to the time period and/or the unit time.

It may be understood that if the AMF network element performs false base station detection, the AMF network element may send the message #E to the RAN device. If the OAM system performs false base station detection, the OAM system may send the message #E to the RAN device. In addition, S909 and S906 may be performed in one step. To be specific, when the AMF network element/OAM system indicates false base station detection to the RAN device, the AMF network element/OAM system also subscribes to the cell access related parameter of the cell 1.

S910: The RAN device sends a message #F to the AMF network element/OAM system. Correspondingly, the AMF network element/OAM system receives the message #F from the RAN device.

The message #F may be used to respond to the message #E. The message #F may be a service-based interface message, a universal interface message, or any other possible message. This is not specifically limited. The message #F may include the identifier of the cell 1, a message type E, and the cell access related parameter of the cell 1, for example, include at least one of the following: a number of failures of handover to the cell 1, a number of terminals that have accessed the cell 1, or a number of terminals that newly access the cell 1. The identifier of the cell 1 may indicate that the cell access related parameter is the cell access related parameter of the cell 1. The message type E may indicate that the message #F is a response message of the message #E. Optionally, the message #F may further include an identifier of a source cell (for example, the cell 2). The identifier of the source cell indicates the source cell in which a terminal is located when handover to the cell 1 fails, so that when it is subsequently determined that a false base station attack exists, an orientation of the false base station attack can be determined accordingly.

It may be understood that if the AMF network element performs false base station detection, the RAN device may send the message #F to the AMF network element. If the OAM system performs false base station detection, the RAN device may send the message #F to the OAM system.

It can be learned that, only when the cell 1 may be attacked by a false base station, the AMF network element/OAM system requests the cell access related parameter from the RAN device, to determine whether a false base station attack exists in the cell 1. Otherwise, the AMF network element/OAM system does not need to request the cell access related parameter from the RAN device, to effectively improve detection efficiency and device running efficiency, and reduce overheads.

S911: The AMF network element/OAM system determines, based on the cell access related parameter of the cell 1 and the threshold 3 to the threshold 5, whether the false base station attack exists in the cell 1.

The AMF network element/OAM system may correspondingly compare the cell access related parameter of the cell 1 with the threshold 3 to the threshold 5. If a relationship between the cell access related parameter and the threshold 3 to the threshold 5 is any one of the following at least one relationship (denoted as a preset relationship 1), it indicates that the false base station attack exists in the cell 1. The preset relationship 1 may include: the number of failures of handover to the cell 1 is greater than the threshold 3, the number of terminals that have accessed the cell 1 is less than the threshold 4, or the number of terminals that newly access the cell 1 is less than the threshold 5. In this way, whether the false base station attack exists can be quickly detected through comparison, to improve detection efficiency and device running efficiency.

It can be learned that, in the foregoing determining logic, provided that a relationship between any parameter in the cell access related parameter and a corresponding threshold is the same as the preset relationship 1, it is considered that the parameter is abnormal, and the false base station attack exists. However, it is determined that no false base station attack exists only when a relationship between each parameter in the cell access related parameter and a corresponding threshold is different from the preset relationship 1, to ensure that, if a false base station attack exists, the false base station attack can be accurately detected, and avoid missing detection. For example, when a number of failures of handover from a terminal to the cell 1 is greater than the threshold 3, even if the number of terminals that newly access the cell 1 is greater than or equal to the threshold 4, the AMF network element/OAM system still determines that the false base station attack exists in the cell 1. Certainly, this determining logic is merely an example. For example, it may alternatively be determined that the false base station attack exists in the cell 1 only when a relationship between each parameter in the cell access related parameter and a corresponding threshold is the same as the preset relationship 1.

It should be noted that, that false base station detection is performed through comparison is merely an example and is not limited. False base station detection may alternatively be implemented in another possible manner. For example, the AMF network element/OAM system may process the cell access related parameter of the cell 1 and the threshold 3 to the threshold 5 by using a machine learning model, to determine, based on a processing result output by the machine learning model, whether the false base station attack exists in the cell 1. For example, if the processing result is that a value is 1, it indicates that the false base station attack exists. Otherwise, if the processing result is that a value is 0, it indicates that no false base station attack exists.

Optionally, when the false base station attack exists in the cell 1, the AMF network element/OAM system may further determine an orientation of a false base station based on the identifier of the source cell. For example, the AMF network element/OAM system may determine, based on the identifier of the source cell, the source cell (denoted as a source cell 1) from which most handover failures are caused, and determine the orientation of the false base station based on a location of the source cell 1, for example, determine that the false base station is located in a direction from the cell 1 to the source cell 1. On this basis, if the AMF network element performs false base station detection, the AMF network element may send, to the OAM system, a false base station detection result, for example, indicating that the false base station attack exists in the cell 1, and the orientation of the false base station. If the OAM system performs false base station detection, the OAM system does not need to send a false base station detection result and the orientation of the false base station. In this way, the OAM system may determine, based on an attacked cell, for example, the cell 1, and the orientation of the false base station, a specific location of the false base station attack, to further process the false base station attack. For example, in practice, the OAM system contacts operations and maintenance personnel or police to go to the location for troubleshooting.

Optionally, when the false base station attack exists in the cell 1, the AMF network element/OAM system may further enhance a security mechanism in an area (including the cell 1) in which the false base station attack occurs, for example, protect or verify broadcast and unicast messages over an air interface, to avoid the false base station attack.

S912: The AMF network element sends an analytics subscription message to the NWDAF network element. Correspondingly, the NWDAF network element receives the analytics subscription message from the AMF network element.

The analytics subscription message is used to request the NWDAF network element to update a false base station analytics threshold, to update the threshold corresponding to the cell 1, for example, the threshold 1 to the threshold 5. An analytics type in the analytics subscription message may be false base station analytics (fake BS baseline analytics). An analytics target in the analytics subscription message may be the identifier of the cell 1, indicating that the NWDAF network element needs to collect related data of the cell 1 to perform false base station analytics. Optionally, the analytics subscription message may further carry one or more of the threshold 1 to the threshold 5, to provide a reference for the NWDAF network element to update the threshold. In addition, for a specific implementation principle of the analytics subscription message, refer to the foregoing related descriptions in: 3. Requesting or subscription. Details are not described again.

It should be noted that S912 may be performed when it is determined to perform false base station detection on the cell 1 (S903), to ensure that the threshold can be updated synchronously with detection, so as to improve accuracy of false base station detection. Certainly, S912 may alternatively be performed at another time point hereafter (after S903). This is not specifically limited.

S913: The NWDAF network element collects a related parameter of the cell 1 from the RAN device and the AMF network element/OAM system.

The NWDAF network element may collect, based on the identifier that is of the cell 1 and that is in the analytics subscription message, a related parameter of the cell 1 from the RAN device and the AMF network element/OAM system through data requesting or data subscription. In this way, the RAN device and the AMF network element/OAM system may report the related parameter of the cell 1 to the NWDAF network element based on a request, or periodically report the related parameter of the cell 1 to the NWDAF network element based on subscription. In addition, for a specific procedure of the data requesting or the data subscription, refer to the foregoing related descriptions in: 3. Requesting or subscription. Details are not described again.

The related parameter of the cell 1 may include at least one of the following: the identifier of the cell 1, the number of times that the first terminal fails to set up the connection to the cell 1, the number of terminals that fail to set up the connection to the cell 1, or the cell access related parameter of the cell 1, for example, include at least one of the following: the number of failures of handover to the cell 1, the number of terminals that have accessed the cell 1, or the number of terminals that newly access the cell 1.

The identifier of the cell 1 indicates that the parameters are related parameters of the cell 1.

The number of times that the first terminal fails to set up the connection to the cell 1 may be a parameter obtained by the NWDAF network element from the AMF network element/OAM system. In other words, in S907, after obtaining, from the message #D, the number of times that the first terminal fails to set up the connection to the cell 1, the AMF network element/OAM system may send, to the NWDAF network element, the number of times that the first terminal fails to set up the connection to the cell 1.

The number of terminals that fail to set up the connection to the cell 1 may be a parameter obtained by the NWDAF network element from the AMF network element/OAM system. In other words, in S908, after determining, based on the message #D, the number of terminals that fail to set up the connection to the cell 1, the AMF network element/OAM system may send the number of terminals to the NWDAF network element. For example, the AMF network element/OAM system may send the number of terminals to the NWDAF network element when the number of terminals that fail to set up the connection to the cell 1 is less than or equal to the threshold 2. Alternatively, the AMF network element/OAM system may send the number of terminals to the NWDAF network element when the number of terminals that fail to set up the connection to the cell 1 is greater than the threshold 2. This is not specifically limited.

The cell access related parameter of the cell 1 may be a parameter obtained by the NWDAF network element from the RAN device. In other words, in S906, after collecting the cell access related parameter of the cell 1 based on the message #C, the RAN device may send the cell access related parameter of the cell 1 to the NWDAF network element.

Optionally, the related parameter of the cell 1 may further include at least one of the following: the unit time in S909, an access time interval of a terminal in the cell 1, a measurement report (measurement report) of the terminal in the cell 1, a radio link failure (radio link failure, RLF) report of the terminal in the cell 1, or an identifier of the cell 2 (obtained from the AMF network element or the OAM system). The unit time and these parameters may indicate that these parameters are parameters collected in the unit time. The access time interval of the terminal in the cell 1 may be an average access time interval, a minimum access time interval, a maximum access time interval, or the like. This is not specifically limited. The identifier of the cell 2 may be a parameter obtained by the NWDAF network element from the AMF network element, and is used by the NWDAF network element to obtain a related parameter of the cell 2, so that the NWDAF network element can update, with reference to the related parameter of the cell 2, the threshold corresponding to the cell 1.

It should be noted that whether the NWDAF network element requests the related data of the cell 1 from the AMF network element or the OAM system depends on whether the AMF network element or the OAM system performs false base station detection. If the AMF network element performs false base station detection, the NWDAF network element collects the related data of the cell 1 from the AMF network element. In this case, because different cells may be served by different AMF network elements, the NWDAF network element needs to collect the related data of the cell 1 from the AMF network element that serves the cell 1. For example, the AMF network element that serves the cell 1 registers the identifier of the cell 1, for example, a cell ID, with an NRF network element. The NWDAF network element may request, from the NRF network element by using the identifier of the cell 1, the AMF network element that serves the cell 1. The NRF network element may find the AMF network element based on the identifier of the cell 1, and send information about the AMF network element to the NWDAF network element, so that the NWDAF network element collects the related data of the cell 1 from the AMF network element. Similar to finding the AMF network element, the NWDAF network element may further find, based on the identifier of the cell 1, the RAN device in the cell 1, to collect the related data of the cell 1 from the RAN device. If the OAM system performs false base station detection, the NWDAF network element collects the related data of the cell 1 from the OAM system. In this case, because there is no case in which the OAM system serve different cells, to be specific, all cells may be served by the same OAM system, the NWDAF network element may directly collect the related data of the cell 1 from the OAM system.

S914: The NWDAF network element collects the related parameter of the cell 2.

The related parameter of the cell 2 is similar to the related parameter of the cell 1. For example, the related parameter of the cell 2 may include at least one of the following: the identifier of the cell 2, a number of times that the terminal fails to set up a connection to the cell 2, a number of terminals that fail to set up the connection to the cell 2, or a cell access related parameter of the cell 2, for example, include at least one of the following: a number of failures of handover to the cell 2, a number of terminals that have accessed the cell 2, or a number of terminals that newly access the cell 2. Optionally, the related parameter of the cell 2 may include at least one of the following: a unit time, an access time interval of a terminal in the cell 2, a measurement report of the terminal in the cell 2, or a radio link failure (radio link failure, RLF) report of the terminal in the cell 2. In addition, an implementation principle of collecting, by the NWDAF network element, the related parameter of the cell 2 is similar to that of collecting the related parameter of the cell 1. For details, refer to S913 and the related descriptions in 3. Requesting or subscription. Details are not described again.

In addition, S914 is an optional step. If the related parameter of the cell 1 includes the identifier of the cell 2, the NWDAF network element may perform S914. Otherwise, if the related parameter of the cell 1 does not include the identifier of the cell 2, the NWDAF network element may not perform S914.

S915: The NWDAF network element determines a threshold 1' to a threshold 5' based on the related parameter of the cell 1.

The NWDAF network element may process the related parameter of the cell 1 by using a machine learning model. Optionally, the NWDAF network element may further process the related parameter of the cell 2 or the threshold carried in the analytics subscription message in S912, to obtain at least one of the following: an updated threshold value (denoted as the threshold 1') of the number of times that the first terminal fails to set up the connection to the cell 1, an updated threshold value (denoted as the threshold 2') of the number of terminals that fail to set up the connection to the cell 1, or an updated cell access related parameter of the cell 1. The threshold 1' may include an updated threshold value (denoted as a threshold 11') of the number of times that the terminal fails to set up the RRC connection to the cell 1 due to timeout, and/or an updated threshold value (denoted as a threshold 12') of the number of times that the terminal fails to set up the RRC connection to the cell 1 due to RRC rejection of the cell 1. The updated cell access related parameter of the cell 1 may include at least one of the following: an updated threshold value (denoted as the threshold 3') of the number of failures of handover to the cell 1, an updated threshold value (denoted as the threshold 4') of the number of terminals that have accessed the cell 1, or an updated threshold value (denoted as the threshold 5') of the number of terminals that newly access the cell 1. For example, in some cells or areas, there are a large number of users, and there are a large number of events in which access of UEs is rejected. The NWDAF network element analyzes a related parameter of the cell or area, and may increase a threshold used for false base station detection on the cell or area. For example, in some cells or areas, there are a small number of users, and there are a small number of events in which access of UEs is rejected. The NWDAF network element analyzes a related parameter of the cell or area, and may decrease a threshold used for false base station detection on the cell or area.

It may be understood that, that the NWDAF network element may determine the threshold by using the machine learning model is merely an example, and a specific implementation in which the NWDAF network element determines the threshold is not limited. For example, the NWDAF network element may alternatively determine the threshold by comparing the related parameter of the cell 1 with the related parameter of the cell 2.

S916: The NWDAF network element sends an analytics notification message to the AMF network element. Correspondingly, the AMF network element receives the analytics notification message from the NWDAF network element.

The analytics notification message indicates the AMF network element to update the threshold. The analytics notification message may include the identifier of the cell 1 and the threshold 1' to the threshold 5', so that the AMF network element updates the threshold 1 to the threshold 5 to the threshold 1' to the threshold 5'. In addition, for a specific implementation principle of the analytics notification message, refer to the foregoing related descriptions in: 3. Requesting or subscription. Details are not described again.

S917: The AMF network element sends a message #G to the OAM system. Correspondingly, the OAM system receives the message #G from the AMF network element.

S917 is an optional step. If the CAM system performs false base station detection, the AMF network element may perform S917, so that the OAM system correspondingly updates the threshold. On this basis, the message #G may indicate the OAM system to update the threshold. The message #G may be a service-based interface message, a universal interface message, or any other possible message. This is not specifically limited. The message #G may include the threshold 1' to the threshold 5' or the threshold 2' to the threshold 5', the identifier of the cell 1, and a message type F. The identifier of the cell 1 indicates that the threshold updating is used for false base station detection on the cell 1. The message type F indicates that the message #G is a message used for the threshold updating. In this way, the CAM system may update, based on the message #G, the threshold 1 to the threshold 5 to the threshold 1' to the threshold 5', or update the threshold 2 to the threshold 5 to the threshold 2' to the threshold 5'.

S918: The AMF network element sends a message #H to the first terminal. Correspondingly, the first terminal receives the message #H from the AMF network element.

The message #H may indicate the first terminal to update the threshold. The message #H may be a NAS message such as a registration accept message, a paging message, a UE configuration update command, or any other possible message. This is not specifically limited. The message #H may include the threshold 1', the identifier of the cell 1, and a message type G. The identifier of the cell 1 indicates that the threshold updating is used for false base station detection on the cell 1. The message type G indicates that the message #H is a message used for the threshold updating. In this way, the first terminal may update the threshold 1 to the threshold 1' based on the message #H. In addition, an execution sequence of S918 and S917 is not limited.

It can be learned that the NWDAF network element updates, by analyzing the data, the threshold used for false base station detection, so that a threshold subsequently used for false base station detection can be closer to an optimal value of the threshold, and false base station detection can be more accurate. In addition, that the NWDAF network element updates the threshold is merely an example, and is not limited. For example, the AMF network element/OAM system may update the pre-configured threshold based on at least one of the following: the number of times that the terminal fails to set up the connection to the cell 1, the number of terminals that fail to set up the connection to the cell 1, or the cell access related parameter of the cell 1.

It should be noted that S912 to S918 may alternatively be optional steps. To be specific, the NWDAF network element may update the threshold, or may update the threshold.

In addition, the procedure shown in S901 to S918 is merely an example of the scenario 1, and is not limited. For example, the first terminal may directly indicate, to the AMF network element/OAM system, that the number of times that the first terminal fails to set up the connection to the cell 1 is greater than the threshold 1. Alternatively, the first terminal sends, to the AMF network element/OAM system, the number of times that the first terminal fails to set up the connection to the cell 1, and the AMF network element/OAM system determines whether the number of times is greater than the threshold 1. For another example, when the number of times that the first terminal fails to set up the connection to the cell 1 is greater than the threshold 1, the AMF network element/OAM system may directly determine that the false base station attack exists in the cell 1. For still another example, when the number of terminals that fail to set up the connection to the cell 1 is greater than the threshold 2, the AMF network element/OAM system may directly determine that the false base station attack exists in the cell 1.

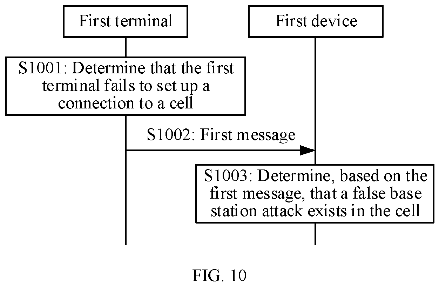

With reference to the scenario 1, the foregoing describes specific procedures of the communication method provided in embodiments of this application in various scenarios. With reference to FIG. 10, the following describes an overall procedure of the communication method according to embodiments of this application in the scenario 1.

For example, FIG. 10 is a second schematic flowchart of a communication method according to an embodiment of this application. The communication method may be applied to communication between a first device and a first terminal. The first device may be the AMF network element/OAM system in the foregoing scenario 1. The first terminal may still be the first terminal in the foregoing scenario 1.

As shown in FIG. 10, a procedure of the communication method is as follows:

S1001: The first terminal determines that the first terminal fails to set up a connection to a cell.

In a possible implementation, when the first terminal fails to set up an RRC connection, the first terminal records a number of failures and an identifier of a corresponding cell. For a specific implementation principle of S1001, refer to the related descriptions in S905. Details are not described again.

S1002: The first terminal sends a first message to the first device. Correspondingly, the first device receives the first message from the first terminal.

The first message (for example, the message #D in the scenario 1) may indicate that the first terminal fails to set up the connection to the cell. Optionally, the first message may be further used to determine whether a false base station attack exists in the cell (for example, the cell 1 in the foregoing scenario 1). In other words, the first message may implicitly indicate, by indicating that the first terminal fails to set up the connection to the cell, that the false base station attack may exist in the cell, to trigger the first device to perform false base station detection. In this way, the first terminal does not need to additionally send a message indication, to improve communication efficiency and reduce communication overheads.

The first message may be a NAS message such as a registration complete message or a service request message, or any other possible message. This is not specifically limited. The first message may include a number of RRC connection setup failures, for example, a number of times that the first terminal fails to set up a connection to the cell 1.

In a possible implementation, when detecting that the first terminal fails to set up the connection to the cell, the first terminal may send the first message to the first device, to ensure real-time false base station detection.

In another possible implementation, when the number of times that the first terminal fails to set up the connection to the cell is greater than a third threshold (for example, the threshold 1 in the scenario 1), the first terminal sends the first message to the first device. For a specific implementation principle, refer to the related descriptions in S907. Details are not described again. In other words, if the first terminal fails to set up a connection to a same cell for a plurality of times, it indicates that the first terminal may suffer a denial of service attack from a false base station. In this case, the first terminal reports the event to the first device, to trigger the first device to perform false base station detection. This can improve accuracy of false base station detection, and further ensure that a resource used by the first device for false base station detection can be effectively used, to avoid a waste of resources caused because the first device still performs false base station detection when no false base station attack occurs.

The first terminal may have the pre-configured third threshold. For example, the third threshold predefined in a protocol is pre-configured for the first terminal. Alternatively, the first terminal may receive the third threshold from the first device. In this way, the first terminal may select an appropriate threshold configuration manner based on a requirement of an actual application scenario, to ensure that false base station detection is applicable to various scenarios. For example, if a network side has not performed false base station detection, the first terminal may use the third threshold pre-configured for the first terminal, to ensure that false base station detection can be normally performed. If the network side has performed false base station detection, the first terminal may use the third threshold used by the network side for previous detection, to ensure accuracy of false base station detection. In addition, for a specific implementation principle in which the third threshold is configured for the first terminal, refer to the related descriptions in S905. Details are not described again.

S 1003: The first device determines, based on the first message, that the false base station attack exists in the cell.

In a possible implementation, the first device may directly determine, based on the first message, that the false base station attack exists in the cell. To be specific, if the first device determines that the first terminal fails to set up the connection to the cell, or determines that there is an event in which the first terminal fails to set up the connection to the cell, the first device determines that the false base station attack exists in the cell.

In another possible implementation, the first device may alternatively determine, based on the first message, a number of terminals that fail to set up a connection to the cell, to determine, when the number of terminals that fail to set up the connection to the cell is greater than a first threshold (for example, the threshold 2 in the scenario 1), that the false base station attack exists in the cell. In other words, the first device determines that the false base station attack exists in the cell only when a large number of terminals report that the terminals fail to set up connections to the cell. This prevents false base station detection from being affected due to false reporting of some terminals, and further improves accuracy of false base station detection.

The first device may have the pre-configured first threshold. In addition, the first threshold may be obtained by analyzing historical data of the cell. First thresholds configured for different cells may be different. For example, the first threshold predefined in a protocol is pre-configured for the first device, or the first device may receive the first threshold from a network data analytics network element (or may be replaced with a network security network element, for example, the NWDAF network element in the scenario 1) or a mobility management network element (for example, the AMF network element in the scenario 1). For example, when the first device is a mobility management network element, the first device may receive the first threshold from the network data analytics network element. Optionally, the first device may send, to the network data analytics network element, a request message for subscribing to false base station detection threshold analytics, so that the network data analytics network element configures, for the first device in a targeted manner, the first threshold used for false base station detection, to ensure accuracy of false base station detection. Alternatively, when the first device is an operations and maintenance management system (for example, the OAM system in the scenario 1), the first device may receive the first threshold from the mobility management network element. In this way, the first device may select an appropriate threshold configuration manner based on a requirement of an actual application scenario, to ensure that false base station detection is applicable to various scenarios. For example, if a network side has not performed false base station detection, the first device may use the first threshold pre-configured for the first device, to ensure that false base station detection can be normally performed. If the network side has performed false base station detection, the first device may use the first threshold used by the network side for previous detection, to ensure accuracy of false base station detection. In addition, for a specific implementation principle in which the first device has the configured first threshold, also refer to the related descriptions in S903 and S904. Details are not described again.

On this basis, the first device may directly determine, when the number of terminals that fail to set up the connection to the cell is greater than the first threshold, that the false base station attack exists in the cell. In other words, if the first device determines that a large number of terminals fail to set up connections to a same cell, the first device determines that a false base station attack exists in the cell. In addition, for a specific implementation principle of determining, by the first device, that the number of terminals that fail to set up the connection to the cell is greater than the first threshold, also refer to the related descriptions in S908. Details are not described again.

Alternatively, the first device may send a second message (for example, the message #E in the scenario 1) to an access network device when the number of terminals that fail to set up the connection to the cell is greater than the first threshold, and receive a third message (for example, the message #F in the scenario 1) from the access network device. The second message may be used to request a cell access related parameter (or a cell access status parameter) of the cell. The third message includes the cell access related parameter. The cell access related parameter may include at least one of the following: a number of failures of handover to the cell, a number of terminals that have accessed the cell, or a number of terminals that newly access the cell. Further, the access network device may report a cell access related parameter that is of the cell 1 and that corresponds to a time period and/or a unit time.

In this way, the first device may determine, based on the cell access related parameter and a second threshold (for example, the threshold 3 to the threshold 5 in the scenario 1), that the false base station attack exists in the cell. For a specific implementation principle, also refer to the foregoing descriptions. For example, when a relationship between the cell access related parameter and the second threshold is any one of the following at least one relationship, it is determined that the false base station attack exists in the cell, where the at least one relationship includes: the number of failures of handover to the cell is greater than the second threshold (for example, the threshold 3 in the scenario 1), the number of terminals that have accessed the cell is less than the second threshold (for example, the threshold 4 in the scenario 1), or the number of terminals that newly access the cell is less than the second threshold (for example, the threshold 5 in the scenario 1). In other words, provided that a relationship between any parameter in the cell access related parameter and a corresponding second threshold is the same as a preset relationship, it is considered that the parameter is abnormal, and the false base station attack exists. However, it is determined that no false base station attack exists only when a relationship between each parameter in the cell access related parameter and a corresponding second threshold is different from the preset relationship, to ensure that the false base station attack can be accurately detected, and avoid missing detection. For example, when the number of failures of handover from the terminal to the cell is greater than the second threshold, even if the number of terminals that newly access the cell is greater than or equal to the second threshold, the first device still determines that the false base station attack exists in the cell. In addition, it should be noted that the second threshold is a general reference of the plurality of thresholds in the scenario 1, and specific threshold types are different in different cases.

The second threshold predefined in a protocol is pre-configured for the first device. In addition, the second threshold may be obtained based on historical data analytics of the cell. Therefore, the second threshold may also be referred to as a historical cell access status parameter. Alternatively, the first device may receive the second threshold from the network data analytics network element or the mobility management network element. For example, when the first device is a mobility management network element, the first device may receive the second threshold from the network data analytics network element. Optionally, the second device may send, to the network data analytics network element, a request message for subscribing to false base station detection threshold analytics, so that the network data analytics network element configures, for the first device in a targeted manner, the second threshold used for false base station detection, to ensure accuracy of false base station detection. Alternatively, when the first device is an operations and maintenance management system, the first device may receive the second threshold from the mobility management network element. In this way, the first device may select an appropriate threshold configuration manner based on a requirement of an actual application scenario, to ensure that false base station detection is applicable to various scenarios. For example, if a network side has not performed false base station detection, the first device may use the second threshold pre-configured for the first device, to ensure that false base station detection can be normally performed. If the network side has performed false base station detection, the first device may use the second threshold used by the network side for previous detection, to ensure accuracy of false base station detection. In addition, for a specific implementation principle in which the first device has the configured second threshold, also refer to the related descriptions in S903 and S904. Details are not described again.

It can be learned that when a large number of terminals report that the terminals fail to set up connections to the cell, the first device may further obtain the cell access related parameter of the cell from the access network device, and determine, based on the cell access related parameter, whether the false base station attack exists in the cell, to further improve accuracy of false base station detection. In addition, for a specific implementation principle of determining, by the first device based on the cell access related parameter, that the false base station attack exists in the cell, also refer to the related descriptions in S909 to S911. Details are not described again.

It should be noted that, the access network device may alternatively determine whether the relationship between the cell access related parameter and the second threshold is any one of the at least one relationship, so that when determining that the relationship is any one of the at least one relationship, the access network device sends, to the first device, information indicating the false base station attack. In this way, the first device may directly determine, based on the information, that the false base station attack exists in the cell.

Further, after identifying the false base station attack, the first device may activate a security mechanism of the cell to protect unicast and broadcast messages.

Optionally, with reference to the method shown in FIG. 10, in a first possible design solution, the first device may further update the first threshold based on the number of terminals, to improve accuracy of false base station detection. For example, the first device may update the pre-configured first threshold based on the number of terminals. In other words, the first device updates the first threshold, to improve threshold updating efficiency. Alternatively, the first device may send the number of terminals to the network data analytics network element, to receive an updated first threshold from the network data analytics network element, so as to reduce overheads of the first device and improve running efficiency. In addition, for a specific implementation principle of updating the first threshold by the first device, also refer to the related descriptions in S912 to S918. Details are not described again.

Optionally, with reference to the method shown in FIG. 10, in a second possible design solution, the first device may further update the second threshold based on the cell access related parameter, to further improve accuracy of false base station detection. For example, the first device may update the pre-configured second threshold based on the cell access related parameter, in other words, the first device updates the second threshold, to improve threshold updating efficiency. Alternatively, the first device may send the cell access related parameter to the network data analytics network element, to receive an updated second threshold from the network data analytics network element, so as to reduce overheads of the first device and improve running efficiency. In addition, for a specific implementation principle of updating the second threshold by the first device, also refer to the related descriptions in S912 to S918. Details are not described again.

Optionally, with reference to the method shown in FIG. 10, in a third possible design solution, the first terminal may update the third threshold based on the number of times that the first terminal fails to set up the connection to the cell, to improve accuracy of false base station detection. For example, the first terminal may update the pre-configured third threshold based on the number of times that the first terminal fails to set up the connection to the cell, in other words, the first terminal updates the third threshold, to improve threshold updating efficiency. Alternatively, the first terminal sends, to the first device, the number of times that the first terminal fails to set up the connection to the cell, to receive an updated third threshold from the first device, so as to reduce overheads of the third device and improve running efficiency. In addition, for a specific implementation principle of updating the third threshold by the first terminal, also refer to the related descriptions in S912 to S918. Details are not described again.

Optionally, with reference to the method shown in FIG. 10, in a fourth possible design solution, the cell access related parameter may further include a source cell in which a terminal is located when handover to the cell fails. In this way, when the false base station attack exists in the cell, the first device may further determine an orientation of a false base station based on a location of the source cell, to conveniently find a location of an attack source of the false base station attack. For a specific implementation principle, also refer to the related descriptions in S911. Details are not described again.

Optionally, with reference to the method shown in FIG. 10, in a fifth possible design solution, the first device indicates the access network device to enable false base station attack detection. Correspondingly, the access network device receives, from the first device, information indicating to enable false base station attack detection.

When the access network device does not enable false base station attack detection by default, the access network device needs to be indicated to enable false base station attack detection, to ensure that the access network device can record and report the cell access related parameter, so as to implement false base station attack detection. Certainly, when the access network device enables false base station attack detection by default, the first device may alternatively not indicate the access network device to enable false base station attack detection, to reduce communication overheads.

In addition, for a specific implementation principle of the fifth possible design solution in the scenario 1, also refer to the related descriptions in S905. Details are not described again.

Optionally, with reference to the method shown in FIG. 10, in a sixth possible design solution, the first device indicates the first terminal to enable false base station attack detection. Correspondingly, the first terminal receives, from the first device, information indicating to enable false base station attack detection.

When the first terminal does not enable false base station attack detection by default, the first terminal needs to be indicated to enable false base station attack detection, to ensure that when failing to set up a connection to the cell, the first terminal can report this event, to implement false base station attack detection. Certainly, when the first terminal enables false base station attack detection by default, the first device may alternatively not indicate the first terminal to enable false base station attack detection, to reduce communication overheads.

In addition, for a specific implementation principle of the sixth possible design solution in the scenario 2, also refer to the related descriptions in S906. Details are not described again.

Optionally, with reference to the method shown in FIG. 10, in a seventh possible design solution, the first device may determine, based on a security level of an area in which the cell is located, that false base station attack detection needs to be performed on the cell.

The first device may determine whether the security grade of the area is high, for example, whether the security grade is greater than a security grade threshold. If the security grade is high, false base station detection is performed on the cell in the area. Otherwise, if the security grade is low, no false base station detection is performed on the cell in the area. In other words, the first device may perform false base station detection only on a cell with a high security grade, to improve device running efficiency and reduce overheads. In addition, the security level of the area may be replaced with a security level of the cell, and the first device may alternatively determine, based on the security level of the cell, that false base station attack detection needs to be performed on the cell.

In addition, for a specific implementation principle of the seventh possible design solution in the scenario 1, also refer to the related descriptions in S901 to S903. Details are not described again.

In conclusion, it can be learned from the related descriptions in the scenario 1 that a false base station may attack a terminal in a denial of service manner. As a result, the terminal cannot access the false base station after selecting the false base station, in other words, the terminal fails to set up the connection to the cell. In this case, if the first message indicates that the first terminal fails to set up the connection to the cell, it may be determined, based on the first message, that the false base station attack exists in the cell, to implement false base station detection.

### Scenario 2:

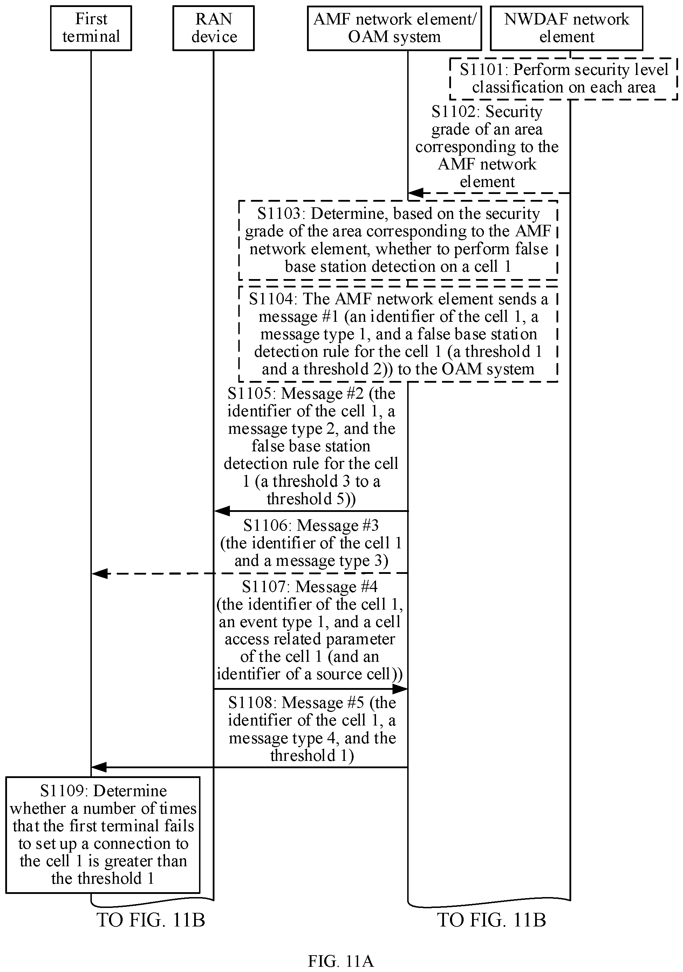

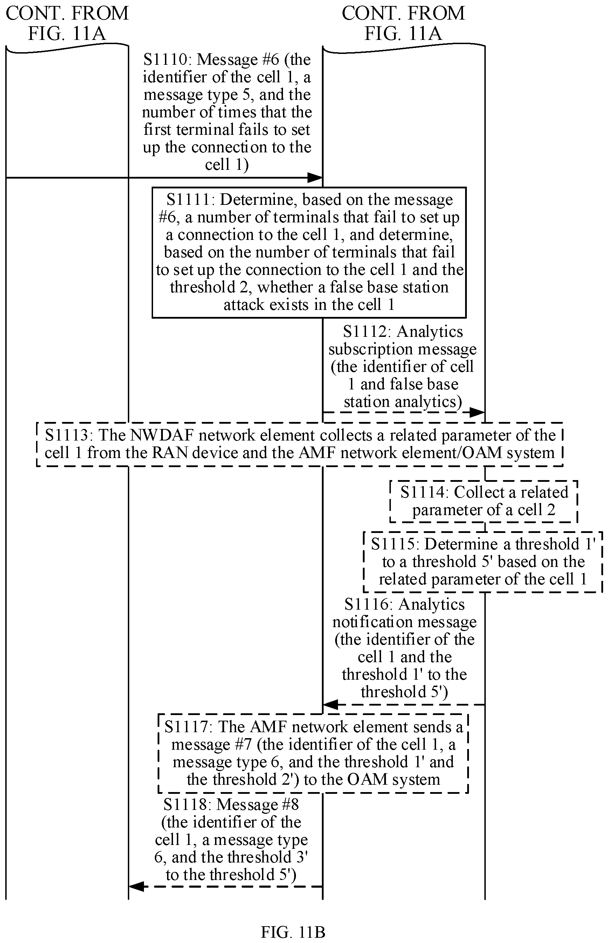

For example, FIG. 11A and FIG. 11B are a third schematic flowchart of a communication method according to an embodiment of this application. The communication method is mainly applicable to communication between a first terminal, a RAN device, an AMF network element/OAM system, and an NWDAF network element. In the scenario 2, the AMF network element/OAM system may trigger the RAN device to perform false base station detection, so that the AMF network element/OAM system determines, based on data of the RAN device and a threshold, whether a false base station attack exists.

Specifically, as shown in FIG. 11A and FIG. 11B, a procedure of the communication method is as follows:
S1101: The NWDAF network element performs security level classification on each area.
S1102: The NWDAF network element sends, to the AMF network element, a security grade of an area corresponding to the AMF network element. Correspondingly, the AMF network element receives, from the NWDAF network element, the security grade of the area corresponding to the AMF network element.
S1103: The AMF network element determines, based on the security grade of the area corresponding to the AMF network element, whether to perform false base station detection on a cell 1.

A specific implementation principle of S1101 to S1103 is similar to that of S901 to S903. For understanding, refer to the descriptions in S901 to S903. Details are not described again.

S1104: The AMF network element sends a message #1 to the OAM system. Correspondingly, the OAM system receives the message #1 from the AMF network element.

S1104 is an optional step. When the OAM system performs false base station detection on the cell 1, the AMF network element performs S1104. In this case, the message #1 indicates that the OAM system needs to enable false base station detection on the cell 1. The message #1 may be a service-based interface message, a universal interface message, or any other possible message. This is not specifically limited. The message #1 may include an identifier (identifier, ID) of the cell 1, a message type 1, and a false base station detection rule for the cell 1. The identifier of the cell 1 indicates that the OAM system needs to enable false base station detection on the cell 1. The message type 1 indicates that the message #1 is a message indicating to enable false base station detection. The false base station detection rule in the message #1 may be some base station detection rules for the cell 1, for example, a threshold 2. A threshold 3 to a threshold 5 may be configured by the AMF network element for the corresponding RAN device, to improve running efficiency of the CAM system and reduce overheads. Alternatively, the false base station detection rule in the message #1 may be more false base station detection rules for the cell 1, for example, a threshold 1 to the threshold 5. This is not specifically limited.

S1105: The AMF network element sends a message #2 to the RAN device. Correspondingly, the RAN device receives the message #2 from the AMF network element.

The RAN device may be a RAN device in the cell 1. The message #2 may indicate that the RAN device needs to enable false base station detection on the cell 1. The message #2 may be a service-based interface message, a universal interface message, or any other possible message. This is not specifically limited. The message #2 may include the identifier of the cell 1, a message type 2, a reporting rule, and the false base station detection rule for the cell 1. The identifier of the cell 1 indicates that the RAN device needs to enable false base station detection on the cell 1. The message type 2 indicates that the message #2 is a message indicating to enable false base station detection. The reporting rule may indicate the RAN device to report a false base station attack event to the AMF network element or the OAM system, and may further indicate a trigger condition (namely, a reporting identifier) for reporting the false base station attack event, for example, a number reaches a threshold. Because the RAN device mainly detects an access status of the cell 1, the false base station detection rule, for the cell 1, in the message #2 may be a rule related to the access status of the cell 1, for example, the threshold 3 to the threshold 5, to reduce overheads. Certainly, the threshold 3 to the threshold 5 included in the message #2 are merely an example, and are not limited. The message #2 may alternatively include more thresholds corresponding to the cell 1, for example, the threshold 2 to the threshold 5; or even thresholds corresponding to the cell 1, for example, the threshold 1 to the threshold 5.

The RAN device may collect a cell access related parameter of the cell 1 based on the message #2. The cell access related parameter may include at least one of the following: a number of failures of handover to the cell 1, a number of terminals that have accessed the cell 1, or a number of terminals that newly access the cell 1 . For a specific implementation principle of the cell access related parameter, refer to the related descriptions in S906. Details are not described again. Then, the RAN device may correspondingly compare the cell access related parameter of the cell 1 with the threshold 3 to the threshold 5. If a relationship between the cell access related parameter and the threshold 3 to the threshold 5 is any relationship in the preset relationship 1, it indicates that a false base station attack may exist in the cell 1, or a false base station attack event exists in the cell 1 . Therefore, the RAN device may report this exception to the AMF network element/OAM system. For a specific implementation, refer to the related descriptions in S1107. Details are not described again.

It can be learned that, whether the false base station attack event exists can be quickly detected through comparison, to improve detection efficiency and device running efficiency. In addition, in the foregoing determining logic, provided that a relationship between any parameter in the cell access related parameter and a corresponding threshold is the same as the preset relationship 1, it is considered that the parameter is abnormal, and the false base station attack event exists. However, it is determined that no false base station attack event exists only when a relationship between each parameter in the cell access related parameter and a corresponding threshold is different from the preset relationship 1, to ensure that, when the false base station attack event exists, this exception case can be reported in a timely manner, and avoid missing detection. For example, when a number of failures of handover from a terminal to the cell 1 is greater than the threshold 3, even if the number of terminals that newly access the cell 1 is greater than or equal to the threshold 4, the AMF network element/OAM system still determines that the false base station attack event exists in the cell 1. Certainly, this determining logic is merely an example. For example, it may alternatively be determined that the false base station attack event exists in the cell 1 only when a relationship between each parameter in the cell access related parameter and a corresponding threshold is the same as the preset relationship 1.

Optionally, the message #2 may further indicate a time period and/or a unit time, to request the RAN device to report the cell access related parameter that is of the cell 1 and that corresponds to the time period and/or the unit time. For example, the RAN device reports the cell access related parameter of the cell 1 in the time period, in the unit time, or in each unit time of the time period. It is assumed that the time period is the last week and the unit time is every day. The RAN device may report the cell access related parameter of the cell 1 in the last week, the RAN device may report the cell access related parameter of the cell 1 every day, or the RAN device may report the cell access related parameter of the cell 1 every day in the last week. The time period and/or the unit time may be determined by the AMF network element/OAM system, for example, determined based on the time period and/or the unit time corresponding to the threshold or pre-configured. Alternatively, the time period and/or the unit time may be default parameters/a default parameter of the RAN device, in other words, the message #2 may not indicate the time period and/or the unit time, and the RAN device reports, by default, a cell access related parameter that is of the cell 1 and that corresponds to the time period and/or the unit time.

S1106: The AMF network element sends a message #3 to the first terminal. Correspondingly, the first terminal receives the message #3 from the AMF network element.

The AMF network element may send the message #3 to a terminal in the area corresponding to the AMF network element. In other words, the first terminal is located in the area corresponding to the AMF network element. For example, the first terminal may be located in the cell 1 or a cell 2. This is not specifically limited. For ease of understanding, the scenario 2 is described by using an example in which the first terminal is located in the cell 2. In this case, the AMF network element needs to send the message #3 to the first terminal through a RAN device in the cell 2.

The message #3 may indicate that the first terminal needs to enable false base station detection on the cell 1. The message #3 may be a NAS message, such as a registration accept message, a paging message, a UE configuration update command, or any other possible message. This is not specifically limited. The message #3 may include the identifier of the cell 1 and a message type 3. The identifier of the cell 1 indicates that the first terminal needs to enable false base station detection on the cell 1. The message type 3 indicates that the message #3 is a message indicating to enable false base station detection. On this basis, the first terminal may perform false base station detection on the cell 1 based on the message #3. For example, the first terminal may record a number of times that the first terminal fails to set up a connection to the cell 1, including a number of times that the first terminal fails to set up the RRC connection due to timeout, and/or a number of times that the first terminal fails to set up the RRC connection due to RRC rejection. Normally, when attempting to access the cell 1, the first terminal may receive an RRC setup message from the cell 1, to normally set up an RRC connection to the cell 1. However, due to a false base station attack or the like, the first terminal cannot receive the RRC setup message. As a result, the first terminal fails to set up the RRC connection due to timeout. Alternatively, the terminal receives an RRC reject message from a false base station. As a result, the terminal fails to set up the RRC connection due to RRC rejection. In this way, the first terminal may record the failure, increase the number of times that the first terminal fails to set up the RRC connection due to timeout by 1, or increase the number of times that the first terminal fails to set up the RRC connection due to RRC rejection by 1, and record a cell identifier corresponding to the failure, namely, the identifier of the cell 1 (obtained from SI that is of the cell 1 and that is replayed by the false base station).

It should be noted that, after the AMF network element sends the message #3, if a new UE is handed over, accesses, or reselects to the cell 2 subsequently, the AMF network element may indicate, through a UCU, mobility registration, RRC resume, or the like, the new UE to enable false base station detection.

It may be understood that S1106 is an optional step. For example, the first terminal enables false base station detection on the cell 1 by default. Alternatively, the first terminal does not enable false base station detection on the cell 1 by default, and the AMF network element/OAM system can determine, based on data collected by the RAN device, whether a false base station attack exists in the cell 1. In addition, an execution sequence of 51106 and S1105 is not limited.

S1107: The RAN device sends a message #4 to the AMF network element/OAM system. Correspondingly, the AMF network element/OAM system receives the message #4 from the RAN device.

Based on a case in which the RAN device determines that the false base station attack event exists in the cell 1, the RAN device sends the message #4 to the AMF network element/OAM system, to indicate that the false base station attack event exists in the cell 1. The message #4 may be a service-based interface message, a universal interface message, or any other possible message. This is not specifically limited. The message #4 may include the identifier of the cell 1, a message type 1 (event type 1) and the cell access related parameter of the cell 1, for example, include at least one of the following: the number of failures of handover to the cell 1, the number of terminals that have accessed the cell 1, or the number of terminals that newly access the cell 1. The identifier of the cell 1 indicates that the false base station attack event exists in the cell 1, in other words, the cell 1 is a cell in which the false base station attack may exist. The event type 1 indicates that an event type is the false base station attack event. Optionally, the message #4 may further include an identifier of a source cell (for example, the cell 2). The identifier of the source cell indicates the source cell in which a terminal is located when handover to the cell 1 fails, so that when it is subsequently determined that a false base station attack exists, an orientation of the false base station attack can be determined accordingly.

It may be understood that if the AMF network element performs false base station detection, the RAN device may send the message #4 to the AMF network element. If the OAM system performs false base station detection, the RAN device may send the message #4 to the OAM system.

S1108: The AMF network element/OAM system sends a message #5 to the first terminal. Correspondingly, the first terminal receives the message #5 from the AMF network element/OAM system.

The message #5 is used to request the first terminal to report the number of times that the first terminal fails to set up the connection to the cell 1 (or report an RRC failure event). The message #5 may be a NAS message, such as a registration accept message, a paging message, a UE configuration update command, or any other possible message. This is not specifically limited. The message #5 may include the identifier of the cell 1, a message type 4, and the threshold 1. The identifier of the cell 1 indicates the first terminal to report the number of times that the first terminal fails to set up the connection to the cell 1. The message type 4 indicates that the message #5 is a message used to request the number of times that the first terminal fails to set up the connection to the cell 1. The threshold 1 may include the threshold 11 and/or the threshold 12.

It may be understood that because the first terminal is located in the cell 2, if the AMF network element performs false base station detection, the AMF network element may send the message #5 to the first terminal through the RAN device in the cell 2. If the CAM system performs false base station detection, the OAM system may send the message #5 to the first terminal through the RAN device in the cell 2. In addition, S1108 and S1106 may be performed in one step. To be specific, when the AMF network element/OAM system indicates false base station detection to the first terminal, the AMF network element/OAM system further subscribes to the number of times that the first terminal fails to set up the connection to the cell 1.

S1109: The first terminal determines whether the number of times that the first terminal fails to set up the connection to the cell 1 is greater than the threshold 1.

The first terminal may compare the threshold 1 in the message #5 with a number of times that the first terminal fails to set up the connection to the cell 1 and that is newly recorded by the first terminal, to determine whether the number of times that the first terminal fails to set up the connection to the cell 1 is greater than the threshold 1. If the number of times that the first terminal fails to set up the connection to the cell 1 is less than or equal to the threshold 1, for example, the number of times that the first terminal fails to set up the RRC connection to the cell 1 due to timeout and the number of times that the first terminal fails to set up the RRC connection to the cell 1 due to RRC rejection of the cell 1 are both less than or equal to respective thresholds, the first terminal may not respond to the message #5, and release data of the cell 1, for example, the number of times that the first terminal fails to set up the connection to the cell 1. If the number of times that the first terminal fails to set up the connection to the cell 1 is greater than the threshold 1, for example, either one of the number of times that the first terminal fails to set up the RRC connection to the cell 1 due to timeout and the number of times that the first terminal fails to set up the RRC connection to the cell 1 due to RRC rejection of the cell 1 is greater than a corresponding threshold, the first terminal may respond to the message #5 to report, to the AMF network element/OAM system, the number of times that the first terminal fails to set up the connection to the cell 1. For a specific implementation principle, refer to the following related descriptions in S1110.

S1110: The first terminal sends a message #6 to the AMF network element/OAM system. Correspondingly, the AMF network element/OAM system receives the message #6 from the first terminal.

The message #6 may be used to respond to the message #5. The message #6 may be a NAS message, such as a registration accept message, a paging message, a UE configuration update command, or any other possible message. This is not specifically limited. The message #6 may include the identifier of the cell 1, a message type 5, and the number of times that the first terminal fails to set up the connection to the cell 1. The identifier of the cell 1 may indicate that a parameter in the message #6 is the number of times that the connection fails to be set up to the cell 1. The message type 5 may indicate that the message #6 is a response message of the message #5.

It may be understood that if the AMF network element performs false base station detection, the first terminal may send the message #6 to the AMF network element through the RAN device. If the OAM system performs false base station detection, the first terminal may send the message #6 to the OAM system through the RAN device.

It can be learned that, only when the cell 1 may be attacked by a false base station, the AMF network element/OAM system requests data from the first terminal, to determine whether a false base station attack exists in the cell 1. Otherwise, the AMF network element/OAM system does not need to request data from the first terminal, to effectively improve detection efficiency and device running efficiency, and reduce overheads.

S1111: The AMF network element/OAM system determines, based on the message #6, a number of terminals that fail to set up a connection to the cell 1, and determines, based on the number of terminals that fail to set up the connection to the cell 1 and the threshold 2, whether the false base station attack exists in the cell 1.

It can be learned from the foregoing descriptions that the message #6 may indicate that the first terminal fails to set up the connection to the cell 1. The AMF network element/OAM system may increase, based on the message #6, the number of terminals that fail to set up the connection to the cell 1 by 1, to be specific, count a number of terminals that currently fail to set up a connection to the cell 1 (or count a number of terminals suffering false base station attack events). As a number of terminals that fail to set up a connection to the cell 1 continuously increases, when the number increases to be greater than the threshold 2, the AMF network element/OAM system determines that the false base station attack exists in the cell 1.

Optionally, when the false base station attack exists in the cell 1, the AMF network element/OAM system may further determine an orientation of a false base station based on the identifier of the source cell. For example, the AMF network element/OAM system may determine, based on the identifier of the source cell, the source cell (denoted as a source cell 1) from which most handover failures are caused, and determine the orientation of the false base station based on a location of the source cell 1, for example, determine that the false base station is located in a direction from the cell 1 to the source cell 1. On this basis, if the AMF network element performs false base station detection, the AMF network element may send a false base station detection result to the OAM system, for example, that the false base station attack exists in the cell 1 and the orientation of the false base station. If the OAM system performs false base station detection, the OAM system does not need to send a false base station detection result and the orientation of the false base station. In this way, the OAM system may determine, based on an attacked cell, for example, the cell 1, and the orientation of the false base station, a specific location of the false base station attack, to further process the false base station attack. For example, in practice, the OAM system contacts operations and maintenance personnel or police to go to the location for troubleshooting.

Optionally, when the false base station attack exists in the cell 1, the AMF network element/OAM system may further enhance a security mechanism in an area (including the cell 1) in which the false base station attack occurs, for example, protect or verify broadcast and unicast messages over an air interface, to avoid the false base station attack.

S1112: The AMF network element sends an analytics subscription message to the NWDAF network element. Correspondingly, the NWDAF network element receives the analytics subscription message from the AMF network element.

S1113: The NWDAF network element collects a related parameter of the cell 1 from the RAN device and the AMF network element/OAM system.

S1114: The NWDAF network element collects a related parameter of the cell 2.

S1115: The NWDAF network element determines a threshold 1' to a threshold 5' based on the related parameter of the cell 1.

A specific implementation principle of S1112 to S1115 is similar to that of S912 to S915. For understanding, refer to the descriptions in S912 to S915. Details are not described again.

S1116: The NWDAF network element sends an analytics notification message to the AMF network element. Correspondingly, the AMF network element receives the analytics notification message from the NWDAF network element.

The analytics notification message indicates the AMF network element to update the threshold. The analytics notification message may include the identifier of the cell 1 and the threshold 1' to the threshold 5', so that the AMF network element updates the threshold 1 to the threshold 5 to the threshold 1' to the threshold 5'. In addition, for a specific implementation principle of the analytics notification message, refer to the foregoing related descriptions in: 3. Requesting or subscription. Details are not described again.

S1117: The AMF network element sends a message #7 to the CAM system. Correspondingly, the OAM system receives the message #7 from the AMF network element.

51117 is an optional step. If the OAM system performs false base station detection, the AMF network element may perform S1117, so that the OAM system correspondingly updates the threshold. On this basis, the message #7 may indicate the OAM system to update the threshold. The message #7 may be a service-based interface message, a universal interface message, or any other possible message. This is not specifically limited. The message #7 may include the threshold 1' and the threshold 2', the identifier of the cell 1, and a message type 6. The identifier of the cell 1 indicates that the threshold updating is used for false base station detection on the cell 1. The message type 6 indicates that the message #7 is a message used for the threshold updating. In this way, the OAM system may update the threshold 1 and the threshold 2 to the threshold 1' and the threshold 2' based on the message #7.

S1118: The AMF network element sends a message #8 to the RAN device. Correspondingly, the RAN device receives the message #8 from the AMF network element.

The RAN device is the RAN device in the cell 1. The message #8 may indicate the RAN device to update the threshold. The message #8 may be a service-based interface message, a universal interface message, or any other possible message. This is not specifically limited. The message #8 may include the threshold 3' to the threshold 5', the identifier of the cell 1, and a message type 7. The identifier of the cell 1 indicates that the threshold updating is used for false base station detection on the cell 1. The message type 7 indicates that the message #8 is a message used for the threshold updating. In this way, the RAN device may update the threshold 3 to the threshold 5 to the threshold 3' to the threshold 5' based on the message #8. Optionally, the AMF network element may further update the threshold 1 of the first terminal to the threshold 1'. In addition, an execution sequence of S1118 and S1117 is not limited.

It can be learned that the NWDAF network element updates, by analyzing the data, the threshold used for false base station detection, so that a threshold subsequently used for false base station detection can be closer to an optimal value of the threshold, and false base station detection can be more accurate. In addition, that the NWDAF network element updates the threshold is merely an example, and is not limited. For example, the AMF network element/OAM system may update the pre-configured threshold based on at least one of the following: the number of times that the terminal fails to set up the connection to the cell 1, the number of terminals that fail to set up the connection to the cell 1, or the cell access related parameter of the cell 1.

It should be noted that S1112 to S1118 may alternatively be optional steps. To be specific, the NWDAF network element may update the threshold, or may update the threshold.

In addition, the procedure shown in S1101 to S1118 is merely an example of the scenario 2, and is not limited. For example, the RAN device may directly indicate, to the AMF network element/OAM system, that a relationship between the cell access related parameter and the threshold 3 to the threshold 5 is any relationship in the foregoing preset relationship 1. Alternatively, the RAN device may send the cell access related parameter to the AMF network element/OAM system, and the AMF network element/OAM system determines that a relationship between the cell access related parameter and the threshold 3 to the threshold 5 is any relationship in the foregoing preset relationship 1. For another example, when the relationship between the cell access related parameter and the threshold 3 to the threshold 5 is any relationship in the preset relationship 1, the AMF network element/OAM system may directly determine that the false base station attack exists in the cell 1. For still another example, when the first terminal reports that the number of times that the first terminal fails to set up the connection to the cell 1 is greater than the threshold 1, the AMF network element/OAM system may alternatively directly determine that the false base station attack exists in the cell 1.

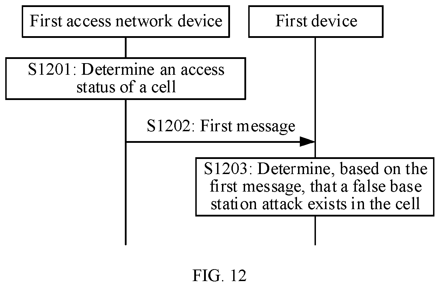

With reference to the scenario 2, the foregoing describes specific procedures of the communication method provided in embodiments of this application in various scenarios. With reference to FIG. 12, the following describes an overall procedure of the communication method according to embodiments of this application in the scenario 2.

For example, FIG. 12 is a fourth schematic flowchart of a communication method according to an embodiment of this application. The communication method may be applied to communication between a first device and a first access network device. The first device may be the AMF network element/OAM system in the foregoing scenario 2. The first access network device may still be the RAN device in the foregoing scenario 2.

As shown in FIG. 12, a procedure of the communication method is as follows:

S1201: The first access network device determines an access status of a cell.

Alternatively, the first access network device monitors a cell access status. The access status of the cell may be used to determine whether a false base station attack exists in the cell (for example, the cell 1 in the foregoing scenario 2).

The access status of the cell may be indicated by a cell access related parameter. For example, the cell access related parameter is at least one of the following information: a number of failures of handover to the cell, a number of terminals that have accessed the cell, or a number of terminals that newly access the cell.

Alternatively, the access status of the cell may include at least one of the following: the number of failures of handover to the cell is greater than a first threshold (for example, the threshold 3 in the scenario 2), the number of terminals that have accessed the cell is less than the first threshold (for example, the threshold 4 in the scenario 2), or the number of terminals that newly access the cell is less than the first threshold (for example, the threshold 5 in the scenario 2), indicating that the false base station attack event exists in the cell. It may be understood that the first threshold is a general reference of the plurality of thresholds in the scenario 2, and specific threshold types are different in different cases.

The first access network device may have the pre-configured first threshold. For example, the first threshold predefined in a protocol is pre-configured for the first access network device. Alternatively, the first access network device may receive the first threshold from the first device. This is not specifically limited.

In addition, for a specific implementation principle of S1201, also refer to the related descriptions in S1105. Details are not described again.

S1202: The first access network device sends a first message to the first device. Correspondingly, the first device receives the first message from the first access network device.

The first message (for example, the message #4 in the scenario 2) indicates the access status of the cell.

Specifically, if the access status of the cell is indicated by the cell access related parameter, the first message includes the cell access related parameter. In other words, the first access network device may collect and report only these parameters. For example, when the cell access related parameter is updated, the first access network device sends an updated cell access related parameter to the first device, to reduce device overheads and improve device running efficiency. Alternatively, if the access status of the cell indicates that a false base station attack event exists in the cell, the first message may indicate the access status of the cell, or the first message includes information indicating the access status of the cell, to be specific, the information may indicate that the number of failures of handover to the cell is greater than the first threshold, the number of terminals that have accessed the cell is less than the first threshold, or the number of terminals that newly access the cell is less than the first threshold, indicating that the false base station attack event exists in the cell. For a specific implementation principle, refer to the related descriptions in S1107. Details are not described again.

S1203: The first device determines, based on the first message, that the false base station attack exists in the cell.

In a possible implementation, if the first message includes the cell access related parameter, the first device may compare the cell access related parameter with the first threshold, to determine whether the cell access related parameter and the first threshold are in any one of the at least one relationship. The at least one relationship may include: the number of failures of handover to the cell is greater than the first threshold, the number of terminals that have accessed the cell is less than the first threshold, or the number of terminals that newly access the cell is less than the first threshold. In this case, if a relationship between the cell access related parameter and the first threshold is any one of the at least one relationship, the first device determines that the false base station attack exists in the cell.

In another possible implementation, if the first message may indicate the access status of the cell, or the first message includes the information indicating the access status of the cell, the first device may directly determine, based on the information, that the false base station attack exists in the cell. In other words, when the first access network device may determine that the false base station attack event exists in the cell, the first device may determine, only by determining whether the first message is received or whether the first message carries the information, whether the false base station attack exists in the cell, to reduce device overheads and improve device running efficiency.

Optionally, the first device may have the pre-configured first threshold. For example, the first threshold predefined in a protocol is pre-configured for the first device. Alternatively, the first device receives the first threshold from a network data analytics network element (for example, the NWDAF network element in the scenario 2) or a mobility management network element (for example, the AMF network element in the scenario 2). For example, when the first device is a mobility management network element, the first device may receive the first threshold from the network data analytics network element. Optionally, the first device may send, to the network data analytics network element, a request message for subscribing to false base station detection threshold analytics, so that the network data analytics network element configures, for the first device in a targeted manner, the first threshold used for false base station detection, to ensure accuracy of false base station detection. Alternatively, when the first device is an operations and maintenance management system (for example, the OAM system in the scenario 2), the first device may receive the first threshold from the mobility management network element. In addition, a specific implementation principle in which the first device has the configured first threshold is similar to that in S 1103 and S1104. For understanding, refer to S 1103 and S 1 104. Details are not described again.

In still another possible implementation, the first device may send a second message (for example, the message #5 in the scenario 2) to the first terminal based on the first message. For example, the first device may determine, based on the first message, a second access network device serving a neighboring cell of the cell (for example, the cell 1 in the scenario 2). In this way, the first device may send the second message to the first terminal through the second access network device. The second message may be used to request an RRC failure event. For a specific implementation, refer to the related descriptions in S1108. Details are not described again. Correspondingly, the first device may receive a third message (for example, the message #6 in the scenario 2) from the first terminal, and the third message may be used to respond to the RRC failure event. For example, the first device receives the third message from the first terminal through the second access network device. For a specific implementation, refer to the related descriptions in S1110. Details are not described again. It can be learned that, when the access status of the cell is abnormal, to be specific, the cell may suffer the false base station attack, the first device may request a status of connection setup between the first terminal and the cell from a neighboring cell of the cell, namely, a normal cell, to obtain valid and reliable information, so as to ensure accuracy of false base station detection.

The second message may be used to request the status of the connection setup between the first terminal and the cell. The third message may indicate that the first terminal fails to set up a connection to the cell. Optionally, the third message may further indicate that a number of times that the first terminal fails to set up the connection to the cell is greater than a second threshold (for example, the threshold 1 in the scenario 2). For a specific implementation, refer to the related descriptions in S1109. Details are not described again. In other words, when determining that the number of times that the first terminal fails to set up the connection to the cell is greater than the second threshold, the first terminal sends the third message to the first device. The first terminal may have the pre-configured second threshold. For example, the second threshold predefined in a protocol is pre-configured for the first terminal. Alternatively, the first terminal may receive the second threshold from the first device. It can be learned that if the first terminal fails to set up a connection to a same cell for a plurality of times, it indicates that the first terminal may suffer a denial of service attack from a false base station. In this case, the first terminal reports the event to the first device, to trigger the first device to determine whether the false base station attack exists in the cell. This can improve accuracy of false base station detection, and can further ensure that a resource used by the first device for false base station detection can be effectively used, to avoid a waste of resources caused because the first device still performs false base station detection when no false base station attack occurs.

In this way, the first device may determine, based on the third message, that the false base station attack exists in the cell. For example, the first device may directly determine, based on the third message, that the false base station attack exists in the cell. Alternatively, the first device determines, based on the third message, a number of terminals that fail to set up a connection to the cell, and determines, when the number of terminals that fail to set up the connection to the cell is greater than a third threshold (for example, the threshold 2 in the scenario 2), that the false base station attack exists in the cell. For a specific implementation principle, refer to the related descriptions in S 1111. Details are not described again. It can be learned that when the access status of the cell is abnormal, the first device may further obtain, from the first terminal, a status of connection setup between the first terminal and the cell, and determine, based on the status, whether the false base station attack exists in the cell, to further improve accuracy of false base station detection.

The first device may have the pre-configured third threshold. For example, the third threshold predefined in a protocol is pre-configured for the first device; or the first device receives the third threshold from the network data analytics network element or the mobility management network element. For example, when the first device is a mobility management network element, the first device may receive the third threshold from the network data analytics network element. Optionally, the first device may send, to the network data analytics network element, a request message for subscribing to false base station detection threshold analytics, so that the network data analytics network element configures, for the first device in a targeted manner, the third threshold used for false base station detection, to ensure accuracy of false base station detection. Alternatively, when the first device is an operations and maintenance management system, the first device may receive the third threshold from the mobility management network element. In addition, for a specific implementation principle in which the first device has the configured third threshold, also refer to the related descriptions in S 1103 and S1104. Details are not described again.

Further, after identifying the false base station attack, the first device may activate a security mechanism of the cell to protect unicast and broadcast messages.

Optionally, with reference to the method shown in FIG. 12, in a first possible design solution, if the first threshold is configured for the first device, the first device may update the first threshold based on the access status of the cell. For example, the first device may update the pre-configured first threshold based on the access status of the cell, in other words, the first device updates the first threshold. Alternatively, the first device may send the access status of the cell to the network data analytics network element, to receive an updated first threshold from the network data analytics network element. In addition, for a specific implementation principle of updating the first threshold by the first device, refer to the related descriptions in S1101 to S1118. Details are not described again.

If the first threshold is configured for the first access network device, the first access network device may update the first threshold based on the access status of the cell. For example, the first access network device may update the pre-configured first threshold based on the access status of the cell, in other words, the first access network device updates the first threshold. Alternatively, when the access status of the cell is indicated by the cell access related parameter, the first access network device sends the cell access related parameter to the network data analytics network element, to receive an updated first threshold from the network data analytics network element. In addition, for a specific implementation principle of updating the first threshold by the first access network device, refer to the related descriptions in S1101 to S1118. Details are not described again.

Optionally, with reference to the method shown in FIG. 12, in a second possible design solution, the first terminal may update the second threshold based on the number of times that the first terminal fails to set up the connection to the cell. For example, the first terminal may update the pre-configured second threshold based on the number of times that the first terminal fails to set up the connection to the cell, in other words, the first terminal updates the second threshold. Alternatively, the first terminal sends, to the first device, the number of times that the first terminal fails to set up the connection to the cell, to receive an updated second threshold from the first device. In addition, for a specific implementation principle of updating the second threshold by the first terminal, also refer to the related descriptions in S1101 to S1118. Details are not described again.

Optionally, with reference to the method shown in FIG. 12, in a third possible design solution, the first device may update the third threshold based on the number of terminals that fail to set up the connection to the cell, in other words, the first terminal updates the third threshold. For example, the first device may update the pre-configured third threshold based on the number of terminals that fail to set up the connection to the cell. Alternatively, the first device may send, to the network data analytics network element, the number of terminals that fail to set up the connection to the cell, to receive an updated third threshold from the network data analytics network element. In addition, for a specific implementation principle of updating the third threshold by the first device, refer to the related descriptions in S1101 to S1118. Details are not described again.

Optionally, with reference to the method shown in FIG. 12, in a fourth possible design solution, the first message may further include a source cell in which a terminal is located when handover to the cell fails. In this way, when the false base station attack exists in the cell, the first device may further determine an orientation of a false base station based on a location of the source cell, to conveniently find a location of an attack source of the false base station attack. For a specific implementation principle, also refer to the related descriptions in S1111. Details are not described again.

Optionally, with reference to the method shown in FIG. 12, in a fifth possible design solution, the first device indicates the first access network device to enable false base station attack detection. Correspondingly, the first access network device receives, from the first device, information indicating to enable false base station attack detection.

When the first access network device does not enable false base station attack detection by default, the first access network device needs to be indicated to enable false base station attack detection, to ensure that the first access network device can record and report the access status of the cell, so as to implement false base station attack detection. Certainly, when the first access network device enables false base station attack detection by default, the first device may alternatively not indicate the first access network device to enable false base station attack detection, to reduce communication overheads.

In addition, for a specific implementation principle of the fifth possible design solution in the scenario 2, also refer to the related descriptions in S1105. Details are not described again.

Optionally, with reference to the method shown in FIG. 12, in a sixth possible design solution, the first device indicates the first terminal to enable false base station attack detection. Correspondingly, the first terminal receives, from the first device, information indicating to enable false base station attack detection.

When the first terminal does not enable false base station attack detection by default, the first terminal needs to be indicated to enable false base station attack detection, to ensure that when failing to set up a connection to the cell, the first terminal can report this event, to implement false base station attack detection. Certainly, when the first terminal enables false base station attack detection by default, the first device may alternatively not indicate the first terminal to enable false base station attack detection, to reduce communication overheads.

In addition, for a specific implementation principle of the sixth possible design solution in the scenario 2, also refer to the related descriptions in S1106. Details are not described again.

Optionally, with reference to the method shown in FIG. 12, in a seventh possible design solution, the first device may determine, based on a security level of an area in which the cell is located, that false base station attack detection needs to be performed on the cell.

The first device may determine whether the security grade of the area is high, for example, whether the security grade is greater than a security grade threshold. If the security grade is high, false base station detection is performed on the cell in the area. Otherwise, if the security grade is low, no false base station detection is performed on the cell in the area. In other words, the first device may perform false base station detection only on a cell with a high security grade, to improve device running efficiency and reduce overheads. Certainly, performing false base station attack detection based on the security level of the area is merely an example, and is not limited. For example, the first device may alternatively determine, based on a security level of the cell, that false base station attack detection needs to be performed on the cell.

In addition, for a specific implementation principle of the seventh possible design solution in the scenario 2, also refer to the related descriptions in S1101 to S1103. Details are not described again.

In conclusion, it can be learned from the related descriptions in the scenario 2 that, the false base station initiates an attack through power suppression. As a result, the terminal cannot access a cell served by a normal base station. In this case, it may be determined, by analyzing the access status of the cell, that the false base station attack exists in the cell, to implement false base station detection.

In addition, for a technical effect in the scenario 2, also refer to the corresponding technical effect in the scenario 1. Details are not described again.

### Scenario 3:

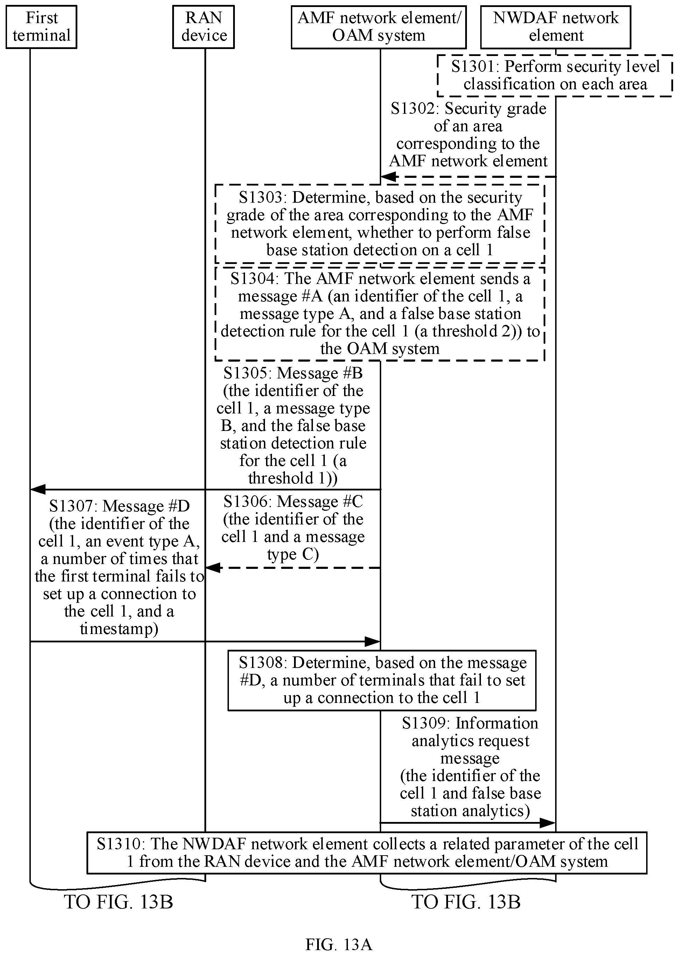

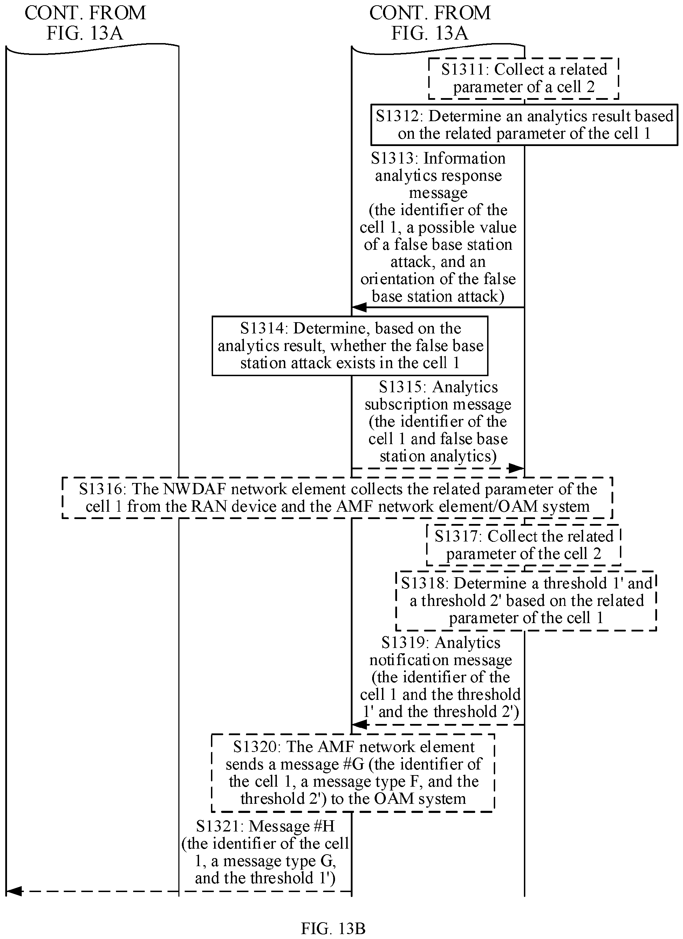

For example, FIG. 13A and FIG. 13B are a fifth schematic flowchart of a communication method according to an embodiment of this application. The communication method is mainly applicable to communication between a first terminal, a RAN device, an AMF network element/OAM system, and an NWDAF network element. In the scenario 3, the AMF network element/OAM system may trigger the first terminal to perform false base station detection, so that the NWDAF network element can determine, based on data of the first terminal, whether a false base station attack exists.

Specifically, as shown in FIG. 13A and FIG. 13B, a procedure of the communication method is as follows:
S1301: The NWDAF network element performs security level classification on each area.
S1302: The NWDAF network element sends, to the AMF network element, a security grade of an area corresponding to the AMF network element. Correspondingly, the AMF network element receives, from the NWDAF network element, the security grade of the area corresponding to the AMF network element.
S1303: The AMF network element determines, based on the security grade of the area corresponding to the AMF network element, whether to perform false base station detection on a cell 1.

A specific implementation principle of S1301 to S1303 is similar to that of S901 to S903. For understanding, refer to the descriptions in S901 to S903. Details are not described again.

S1304: The AMF network element sends a message #A to the OAM system. Correspondingly, the OAM system receives the message #A from the AMF network element.

S1304 is an optional step. When the OAM system performs false base station detection on the cell 1, the AMF network element performs S904. In this case, the message #A indicates that the OAM system needs to enable false base station detection on the cell 1. The message #A may be a service-based interface message, a universal interface message, or any other possible message. This is not specifically limited. The message #A may include an identifier of the cell 1, a message type A, and a false base station detection rule for the cell 1. The identifier of the cell 1 indicates that the OAM system needs to enable false base station detection on the cell 1. The message type A indicates that the message #A is a message indicating to enable false base station detection. The false base station detection rule in the message #A may be some base station detection rules for the cell 1, for example, a threshold 2. A threshold 1 may be configured by the AMF network element for a corresponding terminal, to improve running efficiency of the OAM system and reduce overheads. Alternatively, the message #A may include more false base station detection rules for the cell 1, for example, the threshold 1 and the threshold 2. This is not specifically limited.

It should be noted that the message #A in the scenario 3 and the message #A in the scenario 1 are merely named in a same manner for ease of description. In an actual application, the message #A in the scenario 3 and the message #A in the scenario 1 may be a same message or different messages. This is not specifically limited.

S1305: The AMF network element sends a message #B to the first terminal. Correspondingly, the first terminal receives the message #B from the AMF network element.

S1306: The AMF network element sends a message #C to the RAN device. Correspondingly, the RAN device receives the message #C from the AMF network element.

S1307: The first terminal sends a message #D to the AMF network element/OAM system. Correspondingly, the AMF network element/OAM system receives the message #D from the first terminal.

S1308: The AMF network element/OAM system determines, based on the message #D, a number of terminals that fail to set up a connection to the cell 1.

A specific implementation principle of S1305 to S1308 is similar to that of S905 to S908. For understanding, refer to the descriptions in S905 to S908. Details are not described again.

S1309: The AMF network element/OAM system sends an information analytics request message to the NWDAF network element. Correspondingly, the NWDAF network element receives the information analytics request message from the AMF network element/OAM system.

The information analytics request message is used to request the NWDAF network element to perform false base station analytics, to determine whether a false base station attack exists. An analytics type in the information analytics request message may be false base station analytics. An analytics target in the information analytics request message may be the identifier of the cell 1, indicating that the NWDAF network element needs to collect related data of the cell 1 to perform false base station analytics. If the AMF network element/OAM system determines that the number of terminals that fail to set up the connection to the cell 1 is greater than the threshold 2, the AMF network element/OAM system may send the information analytics request message to the NWDAF network element. In addition, for a specific implementation principle of the information analytics request message, refer to the foregoing related descriptions in: 3. Requesting or subscription. Details are not described again.

S1310: The NWDAF network element collects a related parameter of the cell 1 from the RAN device and the AMF network element/OAM system.

S1311: The NWDAF network element collects a related parameter of the cell 2.

A specific implementation principle of S1310 and S1311 is similar to that of S913 and S914. For understanding, refer to the descriptions in S913 and S914. Details are not described again.

S1312: The NWDAF network element determines an analytics result based on the related parameter of the cell 1.

The NWDAF network element may process the related parameter of the cell 1 or related parameters of the cell 1 and the cell 2 by using a machine learning model, to obtain the analytics result. The analytics result may indicate a possibility that a false base station attack exists in the cell 1. For example, the analytics result includes the identifier of the cell 1, a possible (rate) value of the false base station attack, and an orientation of the false base station attack.

It may be understood that, that the NWDAF network element may determine the threshold by using the machine learning model is merely an example, and a specific implementation in which the NWDAF network element determines the analytics result is not limited. For example, the NWDAF network element may alternatively determine the analytics result by comparing the related parameter of the cell 1 with the related parameter of the cell 2.

S1313: The NWDAF network element sends an information analytics request response message to the AMF network element/OAM system. Correspondingly, the AMF network element receives the information analytics request response message from the NWDAF network element.

The information analytics request response message carries the foregoing analytics result. For a specific implementation principle of the information analytics request response message, refer to the foregoing related descriptions in: 3. Requesting or subscription. Details are not described again.

S1314: The AMF network element/OAM system determines, based on the analytics result, whether the false base station attack exists in the cell 1.

The AMF network element/OAM system may determine, based on the analytics result, whether the probability of the false base station attack is greater than a threshold. For example, if the possible value of the false base station attack in the analytics result is greater than a threshold, the AMF network element/OAM system determines that the false base station attack exists in the cell 1 . Otherwise, if the possible value of the false base station attack is less than or equal to the threshold, the AMF network element/OAM system determines that no false base station attack exists in the cell 1. Certainly, the AMF network element/OAM system may directly determine, based on the possibility of the false base station attack, whether the false base station attack exists in the cell 1. For example, when the possible value of the false base station attack is 1 or 0, if the possible value of the false base station attack is 1, it is determined that the false base station attack exists in the cell 1. On the contrary, if the possible value of the false base station attack is 0, it is determined that no false base station attack exists in the cell 1.

Optionally, if the AMF network element performs false base station detection, the AMF network element may send a false base station detection result to the OAM system, for example, that the false base station attack exists in the cell 1 and an orientation of a false base station. If the OAM system performs false base station detection, the OAM system does not need to send a false base station detection result and an orientation of the false base station. In this way, the OAM system may determine, based on an attacked cell, for example, the cell 1, and the orientation of the false base station, a specific location of the false base station attack, to further process the false base station attack. For example, in practice, the OAM system contacts operations and maintenance personnel or police to go to the location for troubleshooting.

Optionally, when the false base station attack exists in the cell 1, the AMF network element/OAM system may further enhance a security mechanism in an area (including the cell 1) in which the false base station attack occurs, for example, protect or verify broadcast and unicast messages over an air interface, to avoid the false base station attack.

S1315: The AMF network element sends an analytics subscription message to the NWDAF network element. Correspondingly, the NWDAF network element receives the analytics subscription message from the AMF network element.

The analytics subscription message is used to request the NWDAF network element to update a false base station threshold, to update a threshold corresponding to the cell 1, for example, the threshold 1 and the threshold 2. An analytics type in the analytics subscription message may be false base station analytics. An analytics target in the analytics subscription message may be the identifier of the cell 1, indicating that the NWDAF network element needs to collect related data of the cell 1 to perform false base station analytics. Optionally, the analytics subscription message may further carry one or both of the threshold 1 and the threshold 2, to provide a reference for the NWDAF network element to update the threshold. In addition, for a specific implementation principle of the analytics subscription message, refer to the foregoing related descriptions in: 3. Requesting or subscription. Details are not described again.

It should be noted that S1315 may be performed when it is determined to perform false base station detection on the cell 1 (S1303), to ensure that the threshold can be updated synchronously with detection, so as to improve accuracy of false base station detection. Certainly, S1315 may alternatively be performed at another time point hereafter (after S1303). This is not specifically limited.

S1316: The NWDAF network element collects the related parameter of the cell 1 from the RAN device and the AMF network element/OAM system.

S1317: The NWDAF network element collects the related parameter of the cell 2.

A specific implementation principle of S1316 and S1317 is similar to that of S913 and S914. For understanding, refer to the descriptions in S913 and S914. Details are not described again.

S1318: The NWDAF network element determines a threshold 1' and a threshold 2' based on the related parameter of the cell 1.

The NWDAF network element may process the related parameter of the cell 1 or the related parameters of the cell 1 and the cell 2 by using the machine learning model, to obtain at least one of the following: an updated threshold value (denoted as the threshold 1') of the number of times that the first terminal fails to set up the connection to the cell 1 or an updated threshold value (denoted as the threshold 2') of the number of terminals that fail to set up the connection to the cell 1. The threshold 1' may include an updated threshold value (denoted as a threshold 11') of a number of times that the terminal fails to set up the RRC connection to the cell 1 due to timeout, and/or an updated threshold value (denoted as a threshold 12') of a number of times that the terminal fails to set up the RRC connection to the cell 1 due to RRC rejection of the cell 1.

It may be understood that, that the NWDAF network element may determine the threshold by using the machine learning model is merely an example, and a specific implementation in which the NWDAF network element determines the threshold is not limited. For example, the NWDAF network element may alternatively determine the threshold by comparing the related parameter of the cell 1 with the related parameter of the cell 2.

S1319: The NWDAF network element sends an analytics notification message to the AMF network element. Correspondingly, the AMF network element receives the analytics notification message from the NWDAF network element.

The analytics notification message indicates the AMF network element to update the threshold. The analytics notification message may include the identifier of the cell 1 and the threshold 1' and the threshold 2', so that the AMF network element updates the threshold 1 and the threshold 2 to the threshold 1' and the threshold 2'. In addition, for a specific implementation principle of the analytics notification message, refer to the foregoing related descriptions in: 3. Requesting or subscription. Details are not described again.

S1320: The AMF network element sends a message #G to the OAM system. Correspondingly, the OAM system receives the message #G from the AMF network element.

S1320 is an optional step. If the OAM system performs false base station detection, the AMF network element may perform S1320, so that the OAM system correspondingly updates the threshold. On this basis, the message #G may indicate the OAM system to update the threshold. The message #G may be a service-based interface message, a universal interface message, or any other possible message. This is not specifically limited. The message #G may include the threshold 2', the identifier of the cell 1, and a message type F. The identifier of the cell 1 indicates that the threshold updating is used for false base station detection on the cell 1. The message type F indicates that the message #G is a message used for the threshold updating. In this way, the OAM system may update the threshold 2 to the threshold 2' based on the message #G.

It should be noted that the message #G in the scenario 3 and the message #G in the scenario 1 are named in a same manner for ease of description. In an actual application, the message #G in the scenario 3 and the message #G in the scenario 1 may be a same message or different messages. This is not specifically limited.

S1321: The AMF network element sends a message #H to the first terminal. Correspondingly, the first terminal receives the message #H from the AMF network element.

A specific implementation principle of S1321 is similar to that of S918. For understanding, refer to the descriptions in S918. Details are not described again. In this way, the NWDAF network element updates, by analyzing the data, the threshold used for false base station detection, so that a threshold subsequently used for false base station detection can be closer to an optimal value of the threshold, and false base station detection can be more accurate. In addition, that the NWDAF network element updates the threshold is merely an example, and is not limited. For example, the AMF network element/OAM system may update the pre-configured threshold based on at least one of the following: the number of times that the terminal fails to set up the connection to the cell 1, the number of terminals that fail to set up the connection to the cell 1, or the cell access related parameter of the cell 1.

It should be noted that S1315 to S1321 may alternatively be optional steps. To be specific, the NWDAF network element may update the threshold, or may update the threshold.

In addition, the procedure shown in S1301 to S1321 is merely an example of the scenario 3, and is not limited. For example, the first terminal may directly indicate, to the AMF network element/OAM system, that the number of times that the first terminal fails to set up the connection to the cell 1 is greater than the threshold 1. Alternatively, the first terminal sends, to the AMF network element/OAM system, the number of times that the first terminal fails to set up the connection to the cell 1, and the AMF network element/OAM system determines whether the number of times is greater than the threshold 1. For another example, when the number of times that the first terminal fails to set up the connection to the cell 1 is greater than the threshold 1, the AMF network element/OAM system may directly request the NWDAF network element to perform false base station detection. For still another example, when the number of terminals that fail to set up the connection to the cell 1 is greater than the threshold 2, the AMF network element/OAM system may directly request the NWDAF network element to perform false base station detection.

### Scenario 4:

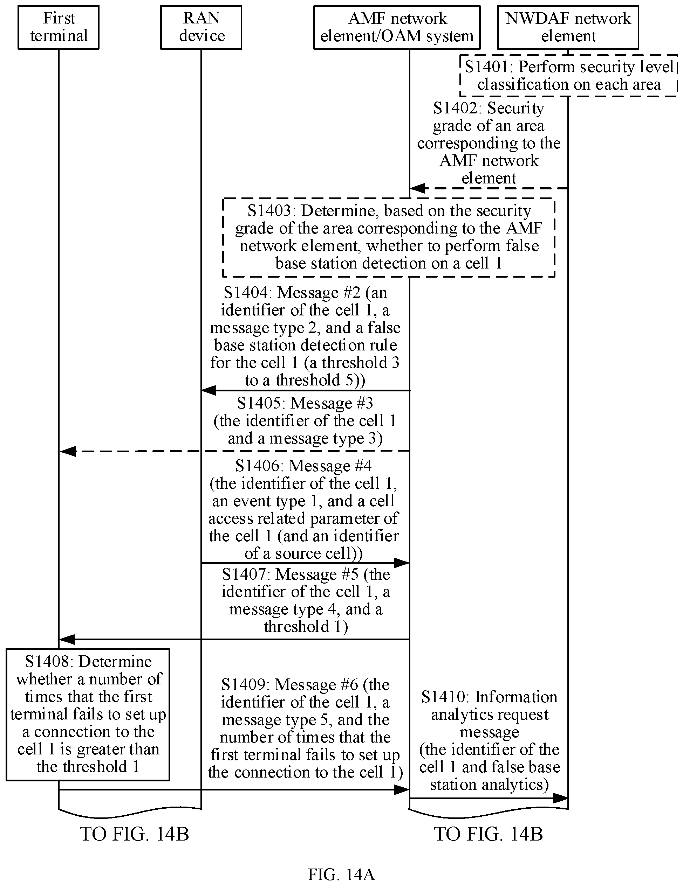

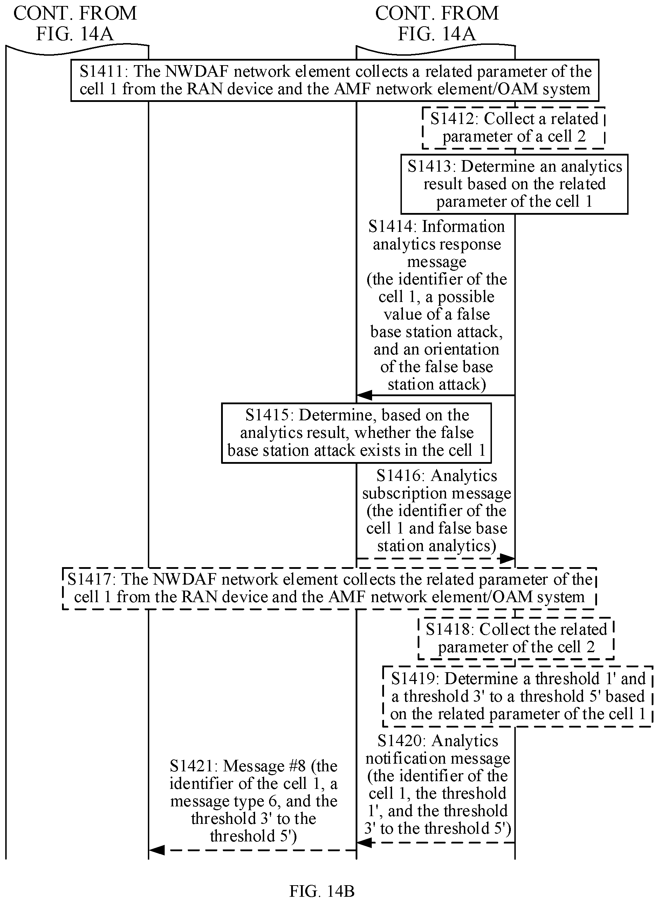

For example, FIG. 14A and FIG. 14B are a seventh schematic flowchart of a communication method according to an embodiment of this application. The communication method is mainly applicable to communication between a first terminal, a RAN device, an AMF network element/OAM system, and an NWDAF network element. In the scenario 4, the AMF network element/OAM system may trigger the RAN device to perform false base station detection, so that the NWDAF network element determines, based on data of the RAN device, whether a false base station attack exists.

Specifically, as shown in FIG. 14A and FIG. 14B, a procedure of the communication method is as follows:
S1401: The NWDAF network element performs security level classification on each area.
S1402: The NWDAF network element sends, to the AMF network element, a security grade of an area corresponding to the AMF network element. Correspondingly, the AMF network element receives, from the NWDAF network element, the security grade of the area corresponding to the AMF network element.
S1403: The AMF network element determines, based on the security grade of the area corresponding to the AMF network element, whether to perform false base station detection on a cell 1.

A specific implementation principle of S1401 to S1403 is similar to that of S901 to S903. For understanding, refer to the descriptions in S901 to S903. Details are not described again.

S1404: The AMF network element sends a message #2 to the RAN device. Correspondingly, the RAN device receives the message #2 from the AMF network element.

S1405: The AMF network element sends a message #3 to the first terminal. Correspondingly, the first terminal receives the message #3 from the AMF network element.

S1406: The RAN device sends a message #4 to the AMF network element/OAM system. Correspondingly, the AMF network element/OAM system receives the message #4 from the RAN device.

S1407: The AMF network element/OAM system sends a message #5 to the first terminal. Correspondingly, the first terminal receives the message #5 from the AMF network element/OAM system.

S1408: The first terminal determines whether a number of times that the first terminal fails to set up a connection to the cell 1 is greater than a threshold 1.

S1409: The first terminal sends a message #6 to the AMF network element/OAM system. Correspondingly, the AMF network element/OAM system receives the message #6 from the first terminal.

A specific implementation principle of S1404 to S1409 is similar to that of S1105 to S1110. For understanding, refer to the descriptions in S1105 to S 1 110. Details are not described again.

S1410: The AMF network element/OAM system sends an information analytics request message to the NWDAF network element. Correspondingly, the NWDAF network element receives the information analytics request message from the AMF network element/OAM system.

S1410 may be performed when the AMF network element/OAM system determines that a false base station attack event exists. For example, S1410 is performed after S1406.

S1411: The NWDAF network element collects a related parameter of the cell 1 from the RAN device and the AMF network element/OAM system.

S1412: The NWDAF network element collects a related parameter of the cell 2.

S1413: The NWDAF network element determines an analytics result based on the related parameter of the cell 1.

S1414: The NWDAF network element sends an information analytics request response message to the AMF network element/OAM system. Correspondingly, the AMF network element receives the information analytics request response message from the NWDAF network element.

The information analytics request response message carries the foregoing analytics result. For a specific implementation principle of the information analytics request response message, refer to the foregoing related descriptions in: 3. Requesting or subscription. Details are not described again.

S1415: The AMF network element/OAM system determines, based on the analytics result, whether a false base station attack exists in the cell 1.

A specific implementation principle of S1410 to S1415 is similar to that of S1309 to S1314. For understanding, refer to the descriptions in S1309 to S1314. Details are not described again.

S1416: The AMF network element sends an analytics subscription message to the NWDAF network element. Correspondingly, the NWDAF network element receives the analytics subscription message from the AMF network element.

The analytics subscription message is used to request the NWDAF network element to update a false base station threshold, to update a threshold corresponding to the cell 1, for example, the threshold 1 and a threshold 3 to a threshold 5. An analytics type in the analytics subscription message may be false base station analytics. An analytics target in the analytics subscription message may be an identifier of the cell 1, indicating that the NWDAF network element needs to collect related data of the cell 1 to perform false base station analytics. Optionally, the analytics subscription message may further carry one or more of the threshold 1 and the threshold 3 to the threshold 5, to provide a reference for the NWDAF network element to update the threshold. In addition, for a specific implementation principle of the analytics subscription message, refer to the foregoing related descriptions in: 3. Requesting or subscription. Details are not described again.

S1416 may be performed when it is determined to perform false base station detection on the cell 1 (S1403), to ensure that the threshold can be updated synchronously with detection, so as to improve accuracy of false base station detection. Certainly, S1416 may alternatively be performed at another time point hereafter (after S1403). This is not specifically limited.

S1417: The NWDAF network element collects the related parameter of the cell 1 from the RAN device and the AMF network element/OAM system.

S1418: The NWDAF network element collects the related parameter of the cell 2.

A specific implementation principle of S1417 and S1418 is similar to that of S913 and S914. For understanding, refer to the descriptions in S913 and S914. Details are not described again.

S1419: The NWDAF network element determines a threshold 1' and a threshold 3' to a threshold 5' based on the related parameter of the cell 1.

The NWDAF network element may process the related parameter of the cell 1 or related parameters of the cell 1 and the cell 2 by using the machine learning model, to obtain at least one of the following: an updated threshold value (denoted as the threshold 1') of the number of times that the first terminal fails to set up the connection to the cell 1 or an updated cell access related parameter of the cell 1. The updated cell access related parameter of the cell 1 may include at least one of the following: an updated threshold value (denoted as the threshold 3') of a number of failures of handover to the cell 1, an updated threshold value (denoted as the threshold 4') of a number of terminals that have accessed the cell 1, or an updated threshold value (denoted as the threshold 5') of a number of terminals that newly access the cell 1.

It may be understood that, that the NWDAF network element may determine the threshold by using the machine learning model is merely an example, and a specific implementation in which the NWDAF network element determines the threshold is not limited. For example, the NWDAF network element may alternatively determine the threshold by comparing the related parameter of the cell 1 with the related parameter of the cell 2.

S1420: The NWDAF network element sends an analytics notification message to the AMF network element. Correspondingly, the AMF network element receives the analytics notification message from the NWDAF network element.

The analytics notification message indicates the AMF network element to update the threshold. The analytics notification message may include the identifier of the cell 1, the threshold 1', and the threshold 3' to the threshold 5', so that the AMF network element updates the threshold 1 to the threshold 1', and updates the threshold 3 to the threshold 5 to the threshold 3' to the threshold 5'. In addition, for a specific implementation principle of the analytics notification message, refer to the foregoing related descriptions in: 3. Requesting or subscription. Details are not described again.

S1421: The AMF network element sends a message #8 to the first terminal. Correspondingly, the first terminal receives the message #8 from the AMF network element.

A specific implementation principle of S1421 is similar to that of S1118. For understanding, refer to the descriptions in S1118. Details are not described again. In this way, the NWDAF network element updates, by analyzing the data, the threshold used for false base station detection, so that a threshold subsequently used for false base station detection can be closer to an optimal value of the threshold, and false base station detection can be more accurate. In addition, that the NWDAF network element updates the threshold is merely an example, and is not limited. For example, the AMF network element/OAM system may update the pre-configured threshold based on at least one of the following: the number of times that the terminal fails to set up the connection to the cell 1, a number of terminals that fail to set up a connection to the cell 1, or the cell access related parameter of the cell 1.

It should be noted that S1416 to S1421 may alternatively be optional steps. To be specific, the NWDAF network element may update the threshold, or may update the threshold.

In addition, the procedure shown in S1401 to S1421 is merely an example of the scenario 4, and is not limited. For example, the RAN device may directly indicate, to the AMF network element/OAM system, that a relationship between the cell access related parameter and the threshold 3 to the threshold 5 is any relationship in the foregoing preset relationship 1. Alternatively, the RAN device may send the cell access related parameter to the AMF network element/OAM system, and the AMF network element/OAM system determines that a relationship between the cell access related parameter and the threshold 3 to the threshold 5 is any relationship in the foregoing preset relationship 1. For another example, when the relationship between the cell access related parameter and the threshold 3 to the threshold 5 is any relationship in the preset relationship 1, the AMF network element/OAM system may directly request the NWDAF network element to perform false base station detection. For still another example, when the first terminal reports that the number of times that the first terminal fails to set up the connection to the cell 1 is greater than the threshold 1, the AMF network element/OAM system may alternatively directly request the NWDAF network element to perform false base station detection.

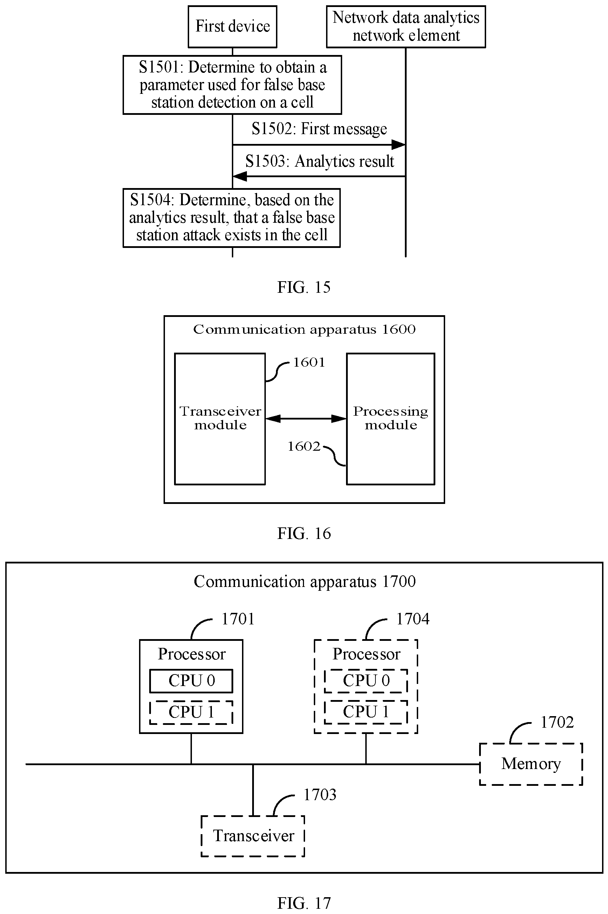

With reference to the scenario 3 and the scenario 4, the foregoing describes specific procedures of the communication method provided in embodiments of this application in various scenarios. With reference to FIG. 15, the following describes an overall procedure of the communication method according to embodiments of this application in the scenario 3 and the scenario 4.

For example, FIG. 15 is a seventh schematic flowchart of a communication method according to an embodiment of this application. The communication method may be applied to communication between a first device and a network data analytics network element. The first device may be the AMF network element/OAM system in the foregoing scenario 3 and scenario 4. The network data analytics network element may be the NWDAF network element in the foregoing scenario 3 and scenario 4.

As shown in FIG. 15, a procedure of the communication method is as follows:

S1501: The first device obtains a parameter used for false base station detection on a cell.

The parameter used for false base station detection on the cell may include at least one of the following: a number of times that a first terminal fails to set up a connection to the cell, a number of terminals that fail to set up a connection to the cell, a number of failures of handover to the cell, a number of terminals that have accessed the cell, or a number of terminals that newly access the cell, that is, including parameters on a terminal side and a network side, to improve accuracy of false base station detection. Optionally, the parameter used for false base station detection on the cell further includes at least one of the following: a source cell in which a terminal is located when handover to the cell fails, an access time interval of the terminal in the cell, a measurement report of the terminal in the cell, an RLF report of the terminal in the cell, a number of false base station attack events in the cell, or an identifier of a neighboring cell of the cell, to further improve accuracy of false base station detection.

In a possible implementation, if the parameter used for false base station detection on the cell includes the number of times that the first terminal fails to set up the connection to the cell, the first device may receive a second message from the first terminal. The second message may indicate that the first terminal fails to set up the connection to the cell, so that the first device may determine, based on the second message, the number of times that the first terminal fails to set up the connection to the cell. In other words, if the first terminal triggers false base station detection, the first terminal may trigger false base station detection by reporting the number of times that the first terminal fails to set up the connection to the cell. For example, the first terminal may have a pre-configured second threshold. For example, the second threshold predefined in a protocol is pre-configured for the first terminal. Alternatively, the first terminal may receive the second threshold from the first device. In this way, the first terminal may send the second message to the first device based on a case in which the number of times that the first terminal fails to set up the connection to the cell is greater than the second threshold (for example, the threshold 1 in the scenario 3 and the scenario 4). In addition, for a specific principle of this implementation, refer to the related descriptions in S1305, S1307, and S1407 to S1409. Details are not described again.

If the parameter used for false base station detection on the cell includes the number of terminals that fail to set up the connection to the cell, the first device may determine, based on the second message, the number of terminals that fail to set up the connection to the cell. In other words, if the first terminal triggers false base station detection, the first device may further determine the number of terminals that fail to set up the connection to the cell, for subsequent false base station detection.

In another possible design solution, if the parameter used for false base station detection on the cell includes at least one of the following: the number of failures of handover to the cell, the number of terminals that have accessed the cell, or the number of terminals that newly access the cell, namely, a cell access related parameter of the cell, that the first device obtains a parameter used for false base station detection on a cell includes: The first device receives at least one of the following from an access network device: the number of failures of handover to the cell, the number of terminals that have accessed the cell, or the number of terminals that newly access the cell. In other words, if the access network device triggers false base station detection, the access network device may trigger false base station detection by reporting the at least one parameter For example, a third threshold (for example, the threshold 3 to the threshold 5 in the scenario 3 and the scenario 4) is configured for the access network device. For example, the access network device may have the pre-configured third threshold. For example, the third threshold predefined in a protocol is pre-configured for the access network device. Alternatively, the access network device may receive the third threshold from the first device. On this basis, a relationship (for example, the preset relationship 1 in the scenario 3 and the scenario 4) corresponding to a false base station attack is at least one of the following: the number of failures of handover to the cell is greater than the third threshold (for example, the threshold 3 in the scenario 3 and the scenario 4), the number of terminals that have accessed the cell is less than the third threshold (for example, the threshold 4 in the scenario 3 and the scenario 4), or the number of terminals that newly access the cell is less than the third threshold (for example, the threshold 5 in the scenario 3 and the scenario 4). If the cell access related parameter and the third threshold satisfy any one of relationships corresponding to the false base station attack, the access network device sends the cell access related parameter to the first device. In addition, for a specific principle of this implementation, refer to the related descriptions in S1404 and S1406. Details are not described again. It should be noted that the third threshold is a general reference of the plurality of thresholds in the scenario 3 and the scenario 4, and specific threshold types are different in different cases.

S1502: The first device sends a first message to the network data analytics network element based on the parameter used for false base station detection on the cell. Correspondingly, the network data analytics network element receives the first message from the first device.

The first message (for example, the information analytics request message, the event subscription response message, and the subscription response message in the scenario 3 and the scenario 4) is used to request the network data analytics network element to perform false base station detection on the cell. Optionally, the first message may include the parameter used for false base station detection on the cell, in other words, the first message is reused to send the parameter, to improve communication efficiency.

If the parameter used for false base station detection on the cell includes the number of terminals that fail to set up the connection to the cell, the first device may further send, when the number of terminals that fail to set up the connection to the cell is greater than the first threshold, the first message to the network data analytics network element. For a specific implementation principle, refer to the related descriptions in S1308. Details are not described again. In other words, only when a large number of terminals report that the terminals fail to set up connections to the cell, in other words, the false base station attack may exist, the first device requests the network data analytics network element to perform false base station detection. This can improve accuracy of false base station detection, and can further ensure that a resource used by the network data analytics network element for false base station detection can be effectively used, to avoid a waste of resources caused because the network data analytics network element still performs false base station detection when no false base station attack occurs.

The first device may have the pre-configured first threshold. For example, the first threshold predefined in a protocol is pre-configured for the first device; or the first device may receive the first threshold from the network data analytics network element or a mobility management network element (for example, the AMF network element in the scenario 1). For example, when the first device is a mobility management network element, the first device may receive the first threshold from the network data analytics network element. Optionally, the first device may send, to the network data analytics network element, a request message for subscribing to false base station detection threshold analytics, so that the network data analytics network element configures, for the first device in a targeted manner, the first threshold used for false base station detection, to ensure accuracy of false base station detection. Alternatively, when the first device is an operations and maintenance management system (for example, the OAM system in the scenario 1), the first device may receive the first threshold from the mobility management network element. For a specific implementation principle, refer to the related descriptions in S1304. Details are not described again.

In addition, for a specific implementation principle of S1502, also refer to the related descriptions in S1309 to S1311 and S1410 to S1412. Details are not described again.

S1503: The network data analytics network element sends an analytics result for false base station detection to the first device. Correspondingly, the first device receives the analytics result from the network data analytics network element.

The network data analytics network element may perform false base station detection on the cell based on the first message, to obtain the analytics result for false base station detection. For example, the network data analytics network element may obtain, based on the first message, the parameter used for false base station detection on the cell, to perform false base station detection on the cell based on the parameter, and obtain the analytics result for false base station detection.

S1504: The first device determines, based on the analytics result, that the false base station attack exists in the cell.

For a specific implementation principle of S1503 and S1504, refer to the related descriptions in S1312 to S1314 and S1413 and S1415. Details are not described again.

Optionally, with reference to the method shown in FIG. 15, in a first possible design solution, the first device may update the first threshold based on the parameter used for false base station detection on the cell, for example, the number of terminals that fail to set up the connection to the cell. For example, the first device may update the pre-configured first threshold based on the number of terminals that fail to set up the connection to the cell, in other words, the first device updates the first threshold. Alternatively, the first device may send, to the network data analytics network element, the number of terminals that fail to set up the connection to the cell, to receive an updated first threshold from the network data analytics network element. In addition, for a specific implementation principle of updating the first threshold by the first device, refer to the related descriptions in S1315 to S1320. Details are not described again.

Optionally, with reference to the method shown in FIG. 15, in a second possible design solution, the first terminal may update the second threshold based on the parameter used for false base station detection on the cell, for example, the number of times that the first terminal fails to set up the connection to the cell. For example, the first terminal may update the pre-configured second threshold based on the number of times that the first terminal fails to set up the connection to the cell, in other words, the first terminal updates the second threshold. Alternatively, the first terminal sends, to the first device, the number of times that the first terminal fails to set up the connection to the cell, to receive an updated second threshold from the first device. In addition, for a specific implementation principle of updating the second threshold by the first terminal, also refer to the related descriptions in S1315 to S1321 and S1416 to S1421. Details are not described again.

Optionally, with reference to the method shown in FIG. 15, in a third possible design solution, the access network device may update the third threshold based on the parameter used for false base station detection on the cell, for example, the cell access related parameter. For example, the access network device may update the pre-configured third threshold based on the cell access related parameter, in other words, the access network device updates the third threshold. Alternatively, the access network device sends the cell access related parameter to the network data analytics network element, to receive an updated third threshold from the network data analytics network element. In addition, for a specific implementation principle of updating the third threshold by the access network device, refer to the related descriptions in S1416 to S1421. Details are not described again.

Optionally, with reference to the method shown in FIG. 15, in a fourth possible design solution, the parameter used for false base station detection on the cell may further include a source cell in which a terminal is located when handover to the cell fails. In this way, when the false base station attack exists in the cell, the first device may further determine an orientation of a false base station based on a location of the source cell, to conveniently find a location of an attack source of the false base station attack. For a specific implementation principle, also refer to the related descriptions in S1314 and S1415. Details are not described again.

Optionally, with reference to the method shown in FIG. 15, in a fifth possible design solution, the first device indicates the access network device to enable false base station attack detection. Correspondingly, the access network device receives, from the first device, information indicating to enable false base station attack detection.

When the access network device does not enable false base station attack detection by default, the access network device needs to be indicated to enable false base station attack detection, to ensure that the access network device can record and report the parameter used for false base station detection on the cell, so as to implement false base station attack detection. Certainly, when the access network device enables false base station attack detection by default, the first device may alternatively not indicate the access network device to enable false base station attack detection, to reduce communication overheads.

In addition, for a specific implementation principle of the fifth possible design solution in the scenario 3 and the scenario 4, also refer to the related descriptions in S1305 and S1404. Details are not described again.

Optionally, with reference to the method shown in FIG. 15, in a sixth possible design solution, the first device indicates the first terminal to enable false base station attack detection. Correspondingly, the first terminal receives, from the first device, information indicating to enable false base station attack detection.

When the first terminal does not enable false base station attack detection by default, the first terminal needs to be indicated to enable false base station attack detection, to ensure that when failing to set up a connection to the cell, the first terminal can report this event, to implement false base station attack detection. Certainly, when the first terminal enables false base station attack detection by default, the first device may alternatively not indicate the first terminal to enable false base station attack detection, to reduce communication overheads.

In addition, for a specific implementation principle of the sixth possible design solution in the scenario 3 and the scenario 4, also refer to the related descriptions in S1306 and S1405. Details are not described again.

Optionally, with reference to the method shown in FIG. 15, in a seventh possible design solution, the first device may determine, based on a security level of an area in which the cell is located, that false base station attack detection needs to be performed on the cell.

The first device may determine whether the security grade of the area is high, for example, whether the security grade is greater than a security grade threshold. If the security grade is high, false base station detection is performed on the cell in the area. Otherwise, if the security grade is low, no false base station detection is performed on the cell in the area. In other words, the first device may perform false base station detection only on a cell with a high security grade, to improve device running efficiency and reduce overheads. Certainly, performing false base station attack detection based on the security level of the area is merely an example, and is not limited. For example, the first device may alternatively determine, based on a security level of the cell, that false base station attack detection needs to be performed on the cell.

In addition, for a specific implementation principle of the seventh possible design solution in the scenario 3 and the scenario 4, also refer to the related descriptions in S1301 to S1303 and S1401 to S1403. Details are not described again.

In conclusion, it can be learned from the related descriptions in the scenario 3 and the scenario 4 that, the first device requests the network data analytics network element to perform false base station detection on the cell, so that the first device can determine, based on the analytics result of the network data analytics network element, whether the false base station attack exists in the cell, to implement false base station detection.

The communication methods provided in embodiments of this application are described above in detail with reference to FIG. 9A to FIG. 15. Communication apparatuses configured to perform the communication method provided in embodiments of this application are described below in detail with reference to FIG. 16 and FIG. 17.

For example, FIG. 16 is a first diagram of a structure of a communication apparatus according to an embodiment of this application. As shown in FIG. 16, the communication apparatus 1600 includes a transceiver module 1601 and a processing module 1602. For ease of description, FIG. 16 shows only main components of the communication apparatus.

In a first embodiment, the communication apparatus 1600 may be used in the communication system shown in FIG. 8, and perform a function of the AMF network element/OAM system in the communication method shown in FIG. 9A and FIG. 9B; or may be used in the communication system shown in FIG. 8, and perform a function of the first device in the communication method shown in FIG. 10.

The transceiver module 1601 is configured to receive a first message from a first terminal; and the processing module 1602 is configured to determine, based on the first message, that a false base station attack exists in a cell, where the first message indicates that the first terminal fails to set up a connection to the cell.

In a possible design solution, the processing module 1602 is further configured to determine, based on the first message, a number of terminals that fail to set up a connection to the cell, to determine, when the number of terminals is greater than a first threshold, that the false base station attack exists in the cell.

Optionally, the processing module 1602 is further configured to have the pre-configured first threshold; or the transceiver module 1601 is further configured to receive the first threshold from a network data analytics network element or a mobility management network element.

Further, the transceiver module 1601 is further configured to: when receiving the first threshold from the network data analytics network element, send, to the network data analytics network element, a request message for subscribing to false base station detection threshold analytics.

Optionally, the processing module 1602 is further configured to update the first threshold based on the number of terminals.

Further, the processing module 1602 is further configured to update the pre-configured first threshold based on the number of terminals; or the processing module 1602 is further configured to control the transceiver module 1601 to send the number of terminals to the network data analytics network element, to receive an updated first threshold from the network data analytics network element.

Optionally, the processing module 1602 is further configured to: control, when the number of terminals is greater than the first threshold, the transceiver module 1601 to send a second message to an access network device, and receive a third message from the access network device, where the second message is used to request a cell access related parameter of the cell; and the third message includes the cell access related parameter, where the cell access related parameter includes at least one of the following: a number of failures of handover to the cell, a number of terminals that have accessed the cell, or a number of terminals that newly access the cell. In this way, the processing module 1602 is further configured to determine, based on the cell access related parameter and a second threshold, that the false base station attack exists in the cell.

Further, the processing module 1602 is further configured to: when a relationship between the cell access related parameter and the second threshold is any one of the following at least one relationship, determine that the false base station attack exists in the cell, where the at least one relationship includes: the quantity of failures of handover to the cell is greater than the second threshold, the quantity of terminals that have accessed the cell is less than the second threshold, or the quantity of terminals that newly access the cell is less than the second threshold.

Further, the processing module 1602 is further configured to have the pre-configured second threshold; or the transceiver module 1601 is further configured to receive the second threshold from a network data analytics network element or a mobility management network element.

Further, when the transceiver module 1601 receives the second threshold from the network analytics network element, the transceiver module 1601 is further configured to send, to the network data analytics network element, a request message for subscribing to false base station detection threshold analytics.

Further, the processing module 1602 is further configured to update the second threshold based on the cell access related parameter.

Further, the processing module 1602 is further configured to update the pre-configured second threshold based on the cell access related parameter; or the processing module 1602 is further configured to control the transceiver module 1601 to send the cell access related parameter to the network data analytics network element, to receive an updated second threshold from the network data analytics network element.

Further, the cell access related parameter may further include a source cell in which a terminal is located when handover to the cell fails, and the processing module 1602 is further configured to: when the false base station attack exists in the cell, determine an orientation of a false base station based on a location of the source cell.

Further, the transceiver module 1601 is further configured to indicate the access network device to enable false base station attack detection.

In a possible design solution, the transceiver module 1601 is further configured to indicate the first terminal to enable false base station attack detection.

Optionally, the processing module 1602 is further configured to determine, based on a security level of an area in which the cell is located, that false base station attack detection needs to be performed on the cell.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform the function of the AMF network element/OAM system in the communication method shown in FIG. 9A and FIG. 9B, or perform the function of the first device in the communication method shown in FIG. 10.

It should be noted that the communication apparatus 1600 may be a network device, for example, a first device such as an operations and maintenance management system or a mobility management network element, may be a chip (system) or another part or component that may be disposed in the network device, or may be an apparatus including the network device. This is not limited in this application.

For technical effects of the communication apparatus 1600, refer to the technical effects of the communication method shown in FIG. 9A and FIG. 9B or FIG. 10. Details are not described herein again.

In a second embodiment, the communication apparatus 1600 may be used in the communication system shown in FIG. 8, and perform a function of the first terminal in the communication method shown in FIG. 9A and FIG. 9B; or may be used in the communication system shown in FIG. 8, and perform a function of the first terminal in the communication method shown in FIG. 10.

The processing module 1602 is configured to determine that the communication apparatus 1600 fails to set up a connection to the cell; and the transceiver module 1601 is configured to send a first message to a first device, where the first message indicates that the communication apparatus 1600 fails to set up the connection to the cell.

In a possible design solution, the transceiver module 1601 is further configured to: when a number of times that the communication apparatus 1600 fails to set up the connection to the cell is greater than a third threshold, send the first message to the first device.

Optionally, the processing module 1602 is further configured to have the pre-configured third threshold; or the processing module 1602 is further configured to control the transceiver module 1601 to receive the third threshold from the first device.

Optionally, the processing module 1602 is further configured to update the third threshold based on the number of times that the communication apparatus 1600 fails to set up the connection to the cell.

Further, the processing module 1602 is further configured to update the pre-configured third threshold based on the number of times that the communication apparatus 1600 fails to set up the connection to the cell; or the processing module 1602 is further configured to control the transceiver module 1601 to send, to the first device, the number of times that the communication apparatus 1600 fails to set up the connection to the cell, to receive an updated third threshold from the first device.

In a possible design solution, the transceiver module 1601 is further configured to receive, from the first device, information indicating to enable false base station attack detection.

Optionally, the first message is further used to determine whether a false base station attack exists in the cell.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform the function of the first terminal in the communication method shown in FIG. 9A and FIG. 9B or FIG. 10.

It should be noted that the communication apparatus 1600 may be a terminal, for example, a first terminal, may be a chip (system) or another part or component that may be disposed in the terminal, or an apparatus including the terminal. This is not limited in this application.

For technical effects of the communication apparatus 1600, refer to the technical effects of the communication method shown in FIG. 9A and FIG. 9B or FIG. 10. Details are not described herein again.

In a third embodiment, the communication apparatus 1600 may be used in the communication system shown in FIG. 8, and perform a function of the AMF network element/OAM system in the communication method shown in FIG. 11A and FIG. 11B; or may be used in the communication system shown in FIG. 8, and perform a function of the first device in the communication method shown in FIG. 12.

The transceiver module 1601 is configured to receive a first message from a first access network device; and the processing module 1602 is configured to determine, based on the first message, that a false base station attack exists in a cell, where the first message indicates an access status of the cell.

In a possible design solution, the access status of the cell includes at least one of the following: a number of failures of handover to the cell is greater than a first threshold, a number of terminals that have accessed the cell is less than the first threshold, or a number of terminals that newly access the cell is less than the first threshold.

In another possible design solution, the first message includes an access-related parameter (it may be understood as that the cell access related parameter may indicate the access status of the cell). For example, the cell access related parameter is at least one of the following information: a number of failures of handover to the cell, a number of terminals that have accessed the cell, or a number of terminals that newly access the cell. Further, the processing module 1602 is further configured to: when a relationship between the cell access related parameter and the first threshold is any one of the following at least one relationship, determine that the false base station attack exists in the cell, where the at least one relationship includes: the number of failures of handover to the cell is greater than the first threshold, the number of terminals that have accessed the cell is less than the first threshold, or the number of terminals that newly access the cell is less than the first threshold.

Optionally, the processing module 1602 is further configured to have the pre-configured first threshold; or the processing module 1602 is further configured to control the transceiver module 1601 to receive the first threshold from a network data analytics network element or a mobility management network element.

Further, the transceiver module 1601 is further configured to: when receiving the first threshold from the network analytics network element, send, to the network data analytics network element, a request message for subscribing to false base station detection threshold analytics.

Optionally, the processing module 1602 is further configured to update the first threshold based on the access status of the cell.

Further, the processing module 1602 is further configured to update the pre-configured first threshold based on the access status of the cell; or when the access status of the cell is indicated by the cell access related parameter, the processing module 1602 is further configured to control the transceiver module 1601 to send the cell access related parameter to the network data analytics network element, to receive an updated first threshold from the network data analytics network element.

In still another possible design solution, the processing module 1602 is further configured to control, based on the first message, the transceiver module 1601 to send a second message to a first terminal, to receive a third message from the first terminal, where the second message is used to request the first terminal to set up a connection to the cell, and the third message indicates that the first terminal fails to set up the connection to the cell. In this way, the processing module 1602 is further configured to determine, based on the third message, that the false base station attack exists in the cell.

Optionally, the processing module 1602 is further configured to determine a second access network device serving a neighboring cell of the cell based on the first message. Correspondingly, the transceiver module 1601 is further configured to send the second message to the first terminal through the second access network device.

Optionally, the third message further indicates that a number of times that the first terminal fails to set up a connection to the cell is greater than a second threshold.

Optionally, the processing module 1602 is further configured to: determine, based on the third message, the number of terminals that fail to set up the connection to the cell, and determine, when the number of terminals that fail to set up the connection to the cell is greater than a third threshold, that the false base station attack exists in the cell.

Further, the processing module 1602 is further configured to have the pre-configured third threshold; or the processing module 1602 is further configured to control the transceiver module 1601 to receive the third threshold from the network data analytics network element or the mobility management network element.

Further, the transceiver module 1601 is further configured to: when receiving the third threshold from the network data analytics network element, send, to the network data analytics network element, a request message for subscribing to false base station detection threshold analytics.

Further, the processing module 1602 is further configured to update the third threshold based on the number of terminals that fail to set up the connection to the cell.

Further, the processing module 1602 is further configured to update the pre-configured third threshold based on the number of the terminals that fail to set up the connection to the cell; or the processing module 1602 is further configured to control the transceiver module 1601 to send, to the network data analytics network element, the number of terminals that fail to set up the connection to the cell, to receive an updated third threshold from the network data analytics network element.

Optionally, the transceiver module 1601 is further configured to indicate the first terminal to enable false base station attack detection.

In a possible design solution, the first message further includes a source cell in which a terminal is located when handover to the cell fails. The processing module 1602 is further configured to: when the false base station attack exists in the cell, determine an orientation of a false base station based on a location of the source cell.

In a possible design solution, the transceiver module 1601 is further configured to indicate the first access network device to enable false base station attack detection.

In a possible design solution, the processing module 1602 is further configured to determine, based on a security level of an area in which the cell is located, that false base station attack detection needs to be performed on the cell.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform the function of the AMF network element/OAM system in the communication method shown in FIG. 11A and FIG. 11B, or perform the function of the first device in the communication method shown in FIG. 12.

It should be noted that the communication apparatus 1600 may be a network device, for example, a first device such as an operations and maintenance management system or a mobility management network element, may be a chip (system) or another part or component that may be disposed in the network device, or may be an apparatus including the network device. This is not limited in this application.

For technical effects of the communication apparatus 1600, refer to the technical effects of the communication method shown in FIG. 11A and FIG. 11B or FIG. 12. Details are not described herein again.

In a fourth embodiment, the communication apparatus 1600 may be used in the communication system shown in FIG. 8, and perform a function of the RAN device in the communication method shown in FIG. 11A and FIG. 11B; or may be used in the communication system shown in FIG. 8, and perform a function of the first access network device in the communication method shown in FIG. 12.

The processing module 1602 is configured to determine an access status of a cell; and the transceiver module 1601 is configured to send a first message to a first device, where the first message indicates the access status of the cell.

In a possible design solution, the first message includes an access-related parameter (it may be understood as that the cell access related parameter may indicate the access status of the cell). For example, the cell access related parameter is at least one of the following information: a number of failures of handover to the cell, a number of terminals that have accessed the cell, or a number of terminals that newly access the cell.

In another possible design solution, the access status of the cell includes at least one of the following: the number of failures of handover to the cell is greater than a first threshold, the number of terminals that have accessed the cell is less than the first threshold, or the number of terminals that newly access the cell is less than the first threshold.

Optionally, the processing module 1602 is further configured to have the pre-configured first threshold; or the processing module 1602 is further configured to control the transceiver module 1601 to receive the first threshold from the first device.

Optionally, the processing module 1602 is further configured to update the first threshold based on the access status of the cell.

Further, the processing module 1602 is further configured to update the pre-configured first threshold based on the access status of the cell; or when the access status of the cell is indicated by the cell access related parameter, the processing module 1602 is further configured to control the transceiver module 1601 to send the cell access related parameter to a network data analytics network element, to receive an updated first threshold from the network data analytics network element.

In a possible design solution, the transceiver module 1601 is further configured to receive, from the first device, information indicating to enable false base station attack detection.

Optionally, the access status of the cell is further used to determine whether a false base station attack exists in the cell.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform the function of the RAN device in the communication method shown in FIG. 11A and FIG. 11B, or perform the function of the first access network device in the communication method shown in FIG. 12.

It should be noted that the communication apparatus 1600 may be a network device, for example, the first access network device, may be a chip (system) or another part or component that may be disposed in the network device, or may be an apparatus including the network device. This is not limited in this application.

For technical effects of the communication apparatus 1600, refer to the technical effects of the communication method shown in FIG. 11A and FIG. 11B or FIG. 12. Details are not described herein again.

In a fifth embodiment, the communication apparatus 1600 may be used in the communication system shown in FIG. 8, and perform a function of the AMF network element/OAM system in the communication method shown in FIG. 13A and FIG. 13B or FIG. 14A and FIG. 14B; or may be used in the communication system shown in FIG. 8, and perform a function of the first device in the communication method shown in FIG. 15.

The processing module 1602 is configured to: obtain a parameter for false base station detection on a cell, and send a first message to a network data analytics network element based on the parameter, where the first message is used to request the network data analytics network element to perform false base station detection on the cell. In this way, the transceiver module 1601 is configured to receive an analytics result for false base station detection from the network data analytics network element, and the processing module 1602 is further configured to determine, based on the analytics result, that a false base station attack exists in the cell.

In a possible design solution, the first message includes the parameter used for false base station detection on the cell.

In a possible design solution, the parameter used for false base station detection on the cell includes at least one of the following: a number of times that a first terminal fails to set up a connection to the cell, a number of terminals that fail to set up a connection to the cell, a number of failures of handover to the cell, a number of terminals that have accessed the cell, or a number of terminals that newly access the cell.

Optionally, if the parameter used for false base station detection on the cell includes the number of times that the first terminal fails to set up the connection to the cell, the processing module 1602 is further configured to control the transceiver module 1601 to receive a second message from the first terminal, where the second message indicates that the first terminal fails to set up the connection to the cell.

Optionally, if the parameter used for false base station detection on the cell includes the number of terminals that fail to set up the connection to the cell, the processing module 1602 is further configured to determine, based on the second message, the number of terminals that fail to set up the connection to the cell.

Further, the transceiver module 1601 is further configured to indicate the first terminal to enable false base station attack detection.

In a possible design solution, if the parameter used for false base station detection on the cell includes the number of terminals that fail to set up the connection to the cell, the processing module 1602 is further configured to control, when the number of terminals that fail to set up the connection to the cell is greater than a first threshold, the transceiver module 1601 to send the first message to the network data analytics network element.

In a possible design solution, if the parameter used for false base station detection on the cell includes at least one of the following: the number of failures of handover to the cell, the number of terminals that have accessed the cell, or the number of terminals that newly access the cell, the processing module 1602 is further configured to control the transceiver module 1601 to receive at least one of the following from an access network device: the number of failures of handover to the cell, the number of terminals that have accessed the cell, or the number of terminals that newly access the cell.

Optionally, the transceiver module 1601 is further configured to indicate the access network device to enable false base station attack detection.

In a possible design solution, the processing module 1602 is further configured to determine, based on a security level of an area in which the cell is located, that false base station attack detection needs to be performed on the cell.

In a possible design solution, if the parameter used for false base station detection on the cell further includes a source cell in which a terminal is located when handover to the cell fails, the processing module 1602 is further configured to: when the false base station attack exists in the cell, determine, for the first device, an orientation of a false base station based on a location of the source cell.

In a possible design solution, the parameter used for false base station detection on the cell further includes at least one of the following: the source cell in which the terminal is located when the handover to the cell fails, an access time interval of the terminal in the cell, a measurement report of the terminal in the cell, an RLF report of the terminal in the cell, a number of false base station attack events in the cell, or an identifier of a neighboring cell of the cell, to further improve accuracy of false base station detection.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform the function of the AMF network element/OAM system in the communication method shown in FIG. 13A and FIG. 13B or FIG. 14A and FIG. 14B, or perform the function of the first device in the communication method shown in FIG. 15.

It should be noted that the communication apparatus 1600 may be a network device, for example, a first device such as an operations and maintenance management system or a mobility management network element, may be a chip (system) or another part or component that may be disposed in the network device, or may be an apparatus including the network device. This is not limited in this application.

For technical effects of the communication apparatus 1600, refer to the technical effects of the communication method shown in FIG. 13A to FIG. 15. Details are not described herein again.

In a sixth embodiment, the communication apparatus 1600 may be used in the communication system shown in FIG. 8, and perform a function of the NWDAF network element in the communication method shown in FIG. 13A and FIG. 13B or FIG. 14A and FIG. 14B; or may be used in the communication system shown in FIG. 8, and perform a function of the network data analytics network element in the communication method shown in FIG. 15.

The transceiver module 1601 is configured to receive a first message from a first device, where the first message is used to request a network data analytics network element to perform false base station detection on a cell. In this way, the processing module 1602 is configured to control the transceiver module 1601 to send an analytics result for false base station detection to the first device.

In a possible design solution, the first message includes a parameter used for false base station detection on the cell.

In a possible design solution, the parameter used for false base station detection on the cell includes at least one of the following: a number of times that a first terminal fails to set up a connection to the cell, a number of terminals that fail to set up a connection to the cell, a number of failures of handover to the cell, a number of terminals that have accessed the cell, or a number of terminals that newly access the cell.

In a possible design solution, the parameter used for false base station detection on the cell further includes at least one of the following: a source cell in which a terminal is located when handover to the cell fails, an access time interval of the terminal in the cell, a measurement report of the terminal in the cell, an RLF report of the terminal in the cell, a number of false base station attack events in the cell, or an identifier of a neighboring cell of the cell.

In a possible design solution, the processing module 1602 is further configured to perform false base station detection on the cell based on the first message.

For example, FIG. 17 is a second diagram of a structure of a communication apparatus according to an embodiment of this application. The communication apparatus may be a terminal, for example, the foregoing first terminal, a network device, for example, the foregoing first device or network data analytics network element, or may be a chip (system) or another part or component that may be disposed in the terminal or the network device. As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each component of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing units, CPUs), may be an application-specific integrated circuit (application-specific integrated circuit, ASIC), or may be configured as one or more integrated circuits that implement embodiments of this application, for example, one or more microprocessors (digital signal processor, DSP), or one or more field programmable gate arrays (field programmable gate array, FPGA).

Optionally, the processor 1701 may perform various functions of the communication apparatus 1700, for example, perform the communication method shown in FIG. 9A to FIG. 15 by running or executing a software program stored in the memory 1702 and invoking data stored in the memory 1702.

During specific implementation, in an embodiment, the processor 1701 may include one or more CPUs, for example, a CPU 0 and a CPU 1 shown in FIG. 17.

During specific implementation, in an embodiment, the communication apparatus 1200 may alternatively include a plurality of processors, for example, the processor 1701 and a processor 1704 shown in FIG. 17. Each of the processors may be a single-core (single-CPU) processor or may be a multi-core (multi-CPU) processor. Herein, the processor may be one or more devices, circuits, and/or processing cores configured to process data (for example, computer program instructions).

The memory 1702 is configured to store a software program for executing the solutions of this application, and the processor 1701 controls the execution. For a specific implementation, refer to the foregoing method embodiment. Details are not described herein again.

Optionally, the memory 1702 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory 1702 may be integrated with the processor 1701, or may exist independently, and is coupled to the processor 1701 through an interface circuit (not shown in FIG. 17) of the communication apparatus 1700. This is not specifically limited in this embodiment of this application.

The transceiver 1703 is configured to communicate with another communication apparatus. For example, the communication apparatus 1700 is a terminal, and the transceiver 1703 may be configured to communicate with a network device or communicate with another terminal device. For another example, the communication apparatus 1700 is a network device, and the transceiver 1703 may be configured to communicate with a terminal or communicate with another network device.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701, or may exist independently, and is coupled to the processor 1701 through an interface circuit (not shown in FIG. 17) of the communication apparatus 1700. This is not specifically limited in this embodiment of this application.

It should be noted that the structure of the communication apparatus 1700 shown in FIG. 17 does not constitute a limitation on the communication apparatus. An actual communication apparatus may include more or fewer components than those shown in the figure, or some components may be combined, or a different component deployment may be used.

In addition, for technical effects of the communication apparatus 1700, refer to the technical effects of the communication method in the foregoing method embodiments. Details are not described herein again.

An embodiment of this application provides a communication system. The communication system includes the one or more network devices shown in FIG. 9A and FIG. 9B or FIG. 10, for example, the first device or the AMF network element/OAM system, and the one or more terminals shown in FIG. 9A and FIG. 9B or FIG. 10, for example, the first terminal. Alternatively, the communication system includes the one or more network devices shown in FIG. 11A and FIG. 11B or FIG. 12, for example, the first device or the AMF network element/OAM system, and the one or more network devices shown in FIG. 11A and FIG. 11B or FIG. 12, for example, the first access network device or the RAN device. Alternatively, the communication system includes the one or more network devices shown in FIG. 13A to FIG. 15, for example, the first device or the AMF network element/OAM system, and the one or more network devices shown in FIG. 13A to FIG. 15, for example, the network data analytics network element or the NWDAF network element.

It should be understood that the processor in embodiments of this application may be a central processing unit (central processing unit, CPU). Alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used for implementing the embodiments, all or some of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. A and B may be singular or plural. In addition, the character "/" in this specification usually represents an "or" relationship between the associated objects, or may represent an "and/or" relationship. A specific meaning depends on foregoing and following descriptions.

In this application, at least one means one or more, and a plurality of means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a first device, a first message from a first terminal, wherein the first message indicates that the first terminal fails to set up a connection to a cell; and
determining, by the first device based on the first message, that a false base station attack exists in the cell.

2. The method according to claim 1, wherein the determining, by the first device based on the first message, that a false base station attack exists in the cell comprises:
determining, by the first device based on the first message, a number of terminals that fail to set up a connection to the cell; and
determining, by the first device when the number of terminals is greater than a first threshold, that the false base station attack exists in the cell.

3. The method according to claim 2, wherein the method further comprises:
the first device has the pre-configured first threshold; or
receiving, by the first device, the first threshold from a network data analytics network element or a mobility management network element.

4. The method according to claim 3, wherein when the first device receives the first threshold from the network data analytics network element, the method further comprises:
sending, by the first device to the network data analytics network element, a request message for subscribing to false base station detection threshold analytics.

5. The method according to claim 2, wherein the method further comprises:
updating, by the first device, the first threshold based on the number of terminals.

6. The method according to claim 5, wherein the updating, by the first device, the first threshold based on the number of terminals comprises:
updating, by the first device, the pre-configured first threshold based on the number of terminals; or
sending, by the first device, the number of terminals to a network data analytics network element; and receiving an updated first threshold from the network data analytics network element.

7. The method according to claim 2, wherein the determining, by the first device when the number of terminals is greater than a first threshold, that the false base station attack exists in the cell comprises:
sending, by the first device, a second message to an access network device when the number of terminals is greater than the first threshold, wherein the second message is used to request a cell access related parameter of the cell, and the cell access related parameter comprises at least one of the following: a number of failures of handover to the cell, a number of terminals that have accessed the cell, or a number of terminals that newly access the cell;
receiving, by the first device, a third message from the access network device, wherein the third message comprises the cell access related parameter; and
determining, by the first device based on the cell access related parameter and a second threshold, that the false base station attack exists in the cell.

8. The method according to claim 7, wherein the determining, by the first device based on the cell access related parameter and a second threshold, that the false base station attack exists in the cell comprises: when a relationship between the cell access related parameter and the second threshold is any one of the following at least one relationship, determining that the false base station attack exists in the cell, wherein the at least one relationship comprises: the number of failures of handover to the cell is greater than the second threshold, the number of terminals that have accessed the cell is less than the second threshold, or the number of terminals that newly access the cell is less than the second threshold.

9. The method according to claim 7 or 8, wherein the method further comprises:
the first device has the pre-configured second threshold; or
receiving, by the first device, the second threshold from a network data analytics network element or a mobility management network element.

10. The method according to claim 9, wherein when the first device receives the second threshold from the network analytics network element, the method further comprises:
sending, by the first device to the network data analytics network element, a request message for subscribing to false base station detection threshold analytics.

11. The method according to claim 7 or 8, wherein the method further comprises:
updating, by the first device, the second threshold based on the cell access related parameter.

12. The method according to claim 11, wherein the updating, by the first device, the second threshold based on the cell access related parameter comprises:
updating, by the first device, the pre-configured second threshold based on the cell access related parameter; or
sending, by the first device, the cell access related parameter to a network data analytics network element, and receiving an updated second threshold from the network data analytics network element.

13. The method according to any one of claims 8 to 12, wherein the cell access related parameter further comprises a source cell in which a terminal is located when handover to the cell fails, and the method further comprises:
when the false base station attack exists in the cell, determining, by the first device, an orientation of a false base station based on a location of the source cell.

14. The method according to any one of claims 7 to 13, wherein the method further comprises:
indicating, by the first device, the access network device to enable false base station attack detection.

15. The method according to any one of claims 1 to 14, wherein the method further comprises:
indicating, by the first device, the first terminal to enable false base station attack detection.

16. The method according to claim 14 or 15, wherein the method further comprises:
determining, by the first device based on a security level of an area in which the cell is located, that false base station attack detection needs to be performed on the cell.

17. A communication method, wherein the method comprises:
determining, by a first terminal, that the first terminal fails to set up a connection to a cell; and
sending, by the first terminal, a first message to a first device, wherein the first message indicates that the first terminal fails to set up the connection to the cell.

18. The method according to claim 17, wherein the sending, by the first terminal, a first message to a first device comprises:
when a number of times that the first terminal fails to set up the connection to the cell is greater than a third threshold, sending, by the first terminal, the first message to the first device.

19. The method according to claim 18, wherein the method further comprises:
the first terminal has the pre-configured third threshold; or
receiving, by the first terminal, the third threshold from the first device.

20. The method according to claim 18, wherein the method comprises:
updating, by the first terminal, the third threshold based on the number of times that the first terminal fails to set up the connection to the cell.

21. The method according to claim 20, wherein the updating, by the first terminal, the third threshold based on the number of times that the first terminal fails to set up the connection to the cell comprises:
updating, by the first terminal, the pre-configured third threshold based on the number of times that the first terminal fails to set up the connection to the cell; or
sending, by the first terminal to the first device, the number of times that the first terminal fails to set up the connection to the cell; and receiving an updated third threshold from the first device.

22. The method according to any one of claims 17 to 21, wherein the method further comprises:
receiving, by the first terminal from the first device, information indicating to enable false base station attack detection.

23. The method according to claim 22, wherein the first message is further used to determine whether a false base station attack exists in the cell.

24. A communication apparatus, wherein the communication apparatus comprises a module configured to perform the communication method according to any one of claims 1 to 16.

25. A communication apparatus, wherein the communication apparatus comprises a module configured to perform the communication method according to any one of claims 17 to 23.

26. A communication apparatus, wherein the communication apparatus comprises a processor, and the processor is configured to perform the communication method according to any one of claims 1 to 23.

27. A communication apparatus, wherein the communication apparatus comprises a processor and a memory, and the memory is configured to store computer instructions; and when the processor executes the instructions, the communication apparatus is enabled to perform the communication method according to any one of claims 1 to 23.

28. A communication system, wherein the communication system comprises a first device that performs the method according to any one of claims 1 to 16, and a first terminal that performs the method according to any one of claims 17 to 23.

29. A computer-readable storage medium, wherein the computer-readable storage medium comprises a computer program or instructions; and when the computer program runs or the instructions are run on a computer, the computer is enabled to perform the communication method according to any one of claims 1 to 23.

30. A computer program product, wherein the computer program product comprises a computer program or instructions; and when the computer program runs or the instructions are run on a computer, the computer is enabled to perform the communication method according to any one of claims 1 to 23.

31. A communication method, wherein the method comprises:
when a first terminal fails to set up a connection to a cell, sending, by the first terminal, a first message to a first device, wherein the first message indicates that the first terminal fails to set up the connection to the cell;
receiving, by the first device, the first message from the first terminal; and
determining, by the first device based on the first message, that a false base station attack exists in the cell.

32. The method according to claim 31, wherein the method further comprises:
sending, by a network data analytics network element or a mobility management network element, a first threshold to the first device; and
receiving, by the first device, the first threshold; and
the determining, by the first device based on the first message, that a false base station attack exists in the cell comprises:
when a number of terminals is greater than the first threshold, determining, by the first device, that the false base station attack exists in the cell.

33. The method according to claim 32, wherein the method further comprises:
sending, by the first device to the network data analytics network element, a request message for subscribing to false base station detection threshold analytics; and
receiving, by the network data analytics network element, the request message.

34. The method according to claim 31, wherein the determining, by the first device based on the first message, that a false base station attack exists in the cell comprises:
sending, by the first device, a second message to an access network device, wherein the second message is used to request a cell access related parameter of the cell, and the cell access related parameter comprises at least one of the following: a number of failures of handover to the cell, a number of terminals that have accessed the cell, or a number of terminals that newly access the cell;
receiving, by the access network device, the second message, and sending a third message to the first device, wherein the third message comprises the cell access related parameter; and
determining, by the first device based on the cell access related parameter and a second threshold, that the false base station attack exists in the cell.

35. The method according to claim 34, wherein the method further comprises:
sending, by a network data analytics network element or a mobility management network element, the second threshold to the first device; and
receiving, by the first device, the second threshold.

36. The method according to claim 34 or 35, wherein the method further comprises:
indicating, by the first device, the access network device to enable false base station attack detection.

37. The method according to any one of claims 31 to 36, wherein the method further comprises:
indicating, by the first device, the first terminal to enable false base station attack detection.
